# EUROPÄISCHE PATENTANMELDUNG

(11) **EP 0 812 679 A2**
(43) Veröffentlichungstag der Anmeldung: **17.12.1997**
(21) Anmeldenummer: 97116550.1
(22) Anmeldetag: 06.05.1992
(51) Int. Cl.: B32B 27/06

(54) **Mehrlagiger Bauteil**

(30) Priorität: 06.05.1991 AT 943/91; 06.05.1991 AT 944/91; 31.07.1991 AT 15279/91; 31.07.1991 AT 15289/91; 31.07.1991 AT 15299/91
(62) Teilanmeldung aus: 92909997.6
(71) Anmelder: HAT ENTWICKLUNGSGESELLSCHAFT M.B.H., A-9020 Klagenfurt (AT)
(72) Erfinder: Painsith, Hermann, Dipl.-Ing., 9020 Klagenfurt (AT)
(74) Vertreter: Secklehner, Günter, Dr.

(57) **Zusammenfassung**

Die Erfindung beschreibt einen mehrlagigen Bauteil, insbesondere für Formteile, mit einer Trägerschicht (110) und einer Deckschicht (111), die miteinander verbunden sind. Die Trägerschicht (110) und die Deckschicht (111) sind durch Kunststoffolien gebildet und die Trägerschicht (110) ist als Schutzschicht ausgebildet. Die Trägerschicht (110) weist eine Beständigkeit gegenüber Temperatur- und/oder Scher- und/oder Druckbeanspruchung wie die Deckschicht (111) auf. Die Trägerschicht (110) ist mit der Deckschicht (111) oder einer zwischen der Deckschicht (111) und der Trägerschicht (110) angeordneten Zwischenschicht (115) vollflächig zu einem einteiligen Folienverbund verbunden.

## Beschreibung

Die Erfindung betrifft einen mehrlagigen Bauteil, insbesondere für Formteile, wie dieser im Oberbegriff des Anspruches 1 beschrieben ist.

Es sind bereits verschiedenste Sandwichbauteile bekannt - gemäß EP 0 199 708 A1 - bei der eine Lage oder Folie aus Leder oder lederähnlichem Werkstoff formschlüssig mit einer Lage aus Kunststoff verbunden wird. Dazu wird in den Formhohlraum, beispielsweise einer Spritzgießform, eine Folie bzw. eine Lage aus Leder oder lederähnlichem Werkstoff an wenigstens eine der Formwände anliegend eingelegt. Darauf wird der Kunststoff im fließfähigen Zustand in den Formhohlraum eingebracht, sodaß er während des Erstarrungsvorganges eine formschlüssige Verbindung mit der Folie bzw. der Lage aus Leder oder lederähnlichem Werkstoff eingeht. Derartige Sandwichbauteile bzw. nach einem derartigen Verfahren hergestellte Sandwichbauteile haben sich in der Praxis, vor allem auch bei der Anwendung als Uhrarmbänder sehr gut bewährt. Es hat sich jedoch gezeigt, daß bei den unterschiedlichen Anwendungsfällen zur Herstellung derartiger Sandwichbauteile nicht alle Anforderungen einwandfrei erfüllt werden konnten.

Es sind bereits die verschiedensten Handhabungsvorrichtungen zum Entnehmen und Ablegen von Einzelteilen im Bereich von Bearbeitungs- bzw. Montagemaschinen bekannt geworden. Derartige Handhabungsvorrichtungen werden vor allem dann, wenn deren Greifvorrichtung beliebige räumliche Bewegungen durchführen kann, auch als Roboter bezeichnet. Schwierigkeiten ergeben sich bei all diesen Handhabungs- bzw. Greifvorrichtungen dann, wenn es notwendig ist, elastisch bzw. plastisch verformbare oder biegeschlaffe Teile aufzunehmen. Die Schwierigkeiten werden um so größer, wenn es sich dabei noch um flächige Teile handelt, die äußerst genau, z.B. in einem Formwerkzeug positioniert werden müssen. Schwierig ist es hierbei vor allem, bei der Herstellung von Bauteilen bzw. Gegenständen in Großserie über längere Benutzungsdauer eine gleichbleibende hohe Exaktheit der Bauteile bzw. Gegenstände einzuhalten. Es wurde bereits versucht, durch komplexe Steuerungen bzw. eine Fülle von einzelnen Sensoren die Positioniergenauigkeit von elektrischen bzw. pneumatischen oder hydraulischen Antrieben so zu verbessern, daß ein möglichst exakt gleichbleibendes Positionierverhalten erreicht wird. Bedingt durch die oft nicht unerheblichen Wege, die mit einer Handhabungsvorrichtung zurückgelegt werden müssen, um einen Teil aus einem Entnahmebereich in ein Formwerkzeug bzw. ein Aufnahmenest eines Werkstückträgers abzulegen, konnten diese Vorrichtungen jedoch bisher nicht befriedigen.

Der vorliegenden Erfindung liegt die Aufgabe zugrunde, mehrlagige Bauteile in Sandwichbauweise zu schaffen, die den Belastungen beim Aufbringen eines Tragkörpers des Sandwichbauteils durch einen Anformvorgang, insbesondere beim Spritzgießen oder Extrudieren entspricht und die Manipulation der Einzelteile bei der Herstellung solcher Sandwichbauteile vereinfacht. Unabhängig davon soll der Bauteil in beliebiger Formgebung einfach herstellbar sein und eine hohe Festigkeit aufweisen, wobei dessen Formgebung im Zuge eines Herstellvorgangs des Tragkörpers erfolgen soll. Es soll aber auch eine ausreichende Festigkeit und technisch einfache Herstellung und eine variable, designmäßige Gestaltung bei gleichen Fertigungsverfahren ermöglicht werden.

Diese Aufgabe der Erfindung wird durch die Merkmale im Kennzeichenteil des Anspruches 1 gelöst. Der Vorteil liegt bei dieser überraschend einfach erscheinenden Lösung darin, daß durch den mehrschichtigen Aufbau der Decklage diese den während des Herstellvorganges auftretenden Belastungen und den während der Benutzung des Sandwichbauteils von außen her auf diesen einwirkenden Belastungen besser angepaßt werden kann. Dadurch ist es nunmehr möglich, Materialien, die früher durch einen derartigen Anform- bzw. Anspritzvorgang überhaupt nicht verbindbar waren, miteinander zu verbinden und trotzdem eine entsprechende Widerstandsfähigkeit der Decklage für Beanspruchungen von außen her auf den Sandwichbauteil zu erzielen. So kann nunmehr die dem Trägerkörper zugewandte Trägerschicht der Decklage zur Herstellung einer optimalen Verbindung zwischen dieser und dem Tragkörper eines Sandwichbauteils ausgelegt werden, während die Deckschicht den auf den Sandwichbauteil einwirkenden Umweltbedingungen, wie beispielsweise UV-Einstrahlung, Kratzfestigkeit und dgl., angepaßt und auch säure- bzw. laugenbeständig ausgeführt werden kann.

Darüber hinaus ist dadurch auch eine großflächige Herstellung der zur Herstellung von Sandwichbauteilen benötigten Decklage, bevorzugt im Endlosverfahren möglich Dadurch können Druckbilder bzw. in Folien angelieferte Träger und Deckschichten in bekannten kosten- und zeitsparenden Verfahren miteinander verbunden und in der Gesamtheit für die nachfolgende Verarbeitung vorbereitet werden und müssen erst vor dem Einlegen in ein Formwerkzeug, um sie mit einem Trägerkörper durch Anformen oder Anspritzen zu verbinden, in Einzelteile zerschnitten werden, wobei dann trotz der Mehrschichtigkeit der Decklage nur ein einziger Einzelteil zu handhaben ist und auch während des Verarbeitungsvorganges die Schutzfunktionen der Deckschicht für die Trägerschicht bzw. eine dazwischen angeordnete Zwischenschicht zum Tragen kommen. Eine hohe Widerstandsfestigkeit der Decklage wird weiters dadurch erreicht, da durch die technischen Möglichkeiten bei der Herstellung eines Folienverbundes großflächige, dauerhafte Verbindungen geschaffen werden können, die vor allem bei einem mehrschichtigen Aufbau der Decklage eine Delamination in der Decklage verhindern.

Eine vorteilhafte Ausbildung ist im Anspruch 2 gekennzeichnet, da dadurch die Trägerschicht die beim Aufbringen des flüssigen Kunststoffes für den Spritzgießvorgang auftretenden Belastungen noch besser auffängt und damit z.B. die designmäßige Gestaltung bzw. die Oberflächengestaltung der Deckschichte auf einfache Art und Weise durchgeführt werden kann.

Vorteilhaft ist auch eine Ausgestaltung nach Anspruch 3, da dadurch eine gleichmäßige Aufteilung von eventuell in den verschiedenen Schichten auftretenden unterschiedlichen Zug- bzw. Druckbelastungen in Abhängigkeit von den unterschiedlichen Elastizitäts- und Verformungseigenschaften der Schichten einfacher ausgeglichen werden können. Darüber hinaus kann trotz der nachfolgenden noch, notwendigen Manipulation der Decklage zur Herstellung des Sandwichbauteiles ein zuvor im großflächigen und damit kostengünstigen Verfahren hergestelltes Druckbild bzw. dementsprechend aufgebrachte Schutzschichten vor einer Zerstörung während der Weiterverarbeitung gesichert werden.

Eine andere Ausgestaltung beschreibt Anspruch 4. Durch diese Ausbildung wird mit Vorteil erreicht, daß auch beim Auftreten hoher Temperatur und kombinierten Zug- und Druckbelastungen ein Aufplatzen bzw. Zerreißen der Trägerfolie, wie dies insbesondere im Eintrittsbereich eines flüssigen Kunststoffes beim Hinterspritzen zum Herstellen eines Trägerkörpers für den Sandwichbauteil der Fall ist, vermieden wird und dadurch trotz der enormen Belastung eine Zwischenschicht bzw. ein Druckbild oder die für diese Art der Beanspruchungen wesentlich weniger stark belastbare Deckschicht geschützt ist.

Es ist aber auch eine Ausbildung nach Anspruch 5 möglich, da dadurch hochflexible Sandwichbauteile geschaffen werden können, deren Deckschicht extremen Verformungen folgt, ohne dabei zerstört zu werden. Somit ist ein derartiger Sandwichbauteil beispielsweise auch für die Herstellung von Uhrarmbändern bzw. Gürteln und dgl. bestens geeignet, bei welchen eine starke räumliche Verformung und Zug- bzw. Druckbeanspruchung im verformten Zustand auftreten.

Eine andere Weiterbildung beschreibt Anspruch 6. Vorteilhaft ist hierbei, daß die Zwischenfolie als Abschirmelement oder als Zugverstärkungselement bzw. zur Erhöhung des Widerstandes gegen Lochlaibung verwendet werden kann.

Vielfältige Vorteile ergeben sich aber auch bei einer Ausgestaltung nach Anspruch 7, da dadurch vor allem in designabhängigen Bereichen die Herstellung von Designmustern für Sandwichbauteile erheblich vereinfacht wird und für Massenartikel vor allem mit einfachen und damit kostengünstigen Druckverfahren für die designmäßige Ausgestaltung von Sandwichbauteilen bzw. griffsicheren Beschriftungen das Auslangen gefunden werden kann. Der Vorteil dabei liegt darin, daß trotz des minderwertigen Materials in der Zwischenschicht ein hoher Abnutzungsschutz geschaffen werden kann und somit eine lange Lebensdauer des Designs bzw. der Beschriftung trotzdem sichergestellt werden kann.

Vorteilhaft ist aber auch eine Weiterbildung nach Anspruch 8, da damit das Druckbild für Beschriftungen bzw. designmäßige Gestaltungen vor einer Zerstörung während der nachfolgenden Benutzung des Sandwichbauteils geschützt ist.

Weitere vorteilhafte Möglichkeiten ergeben sich durch eine Ausgestaltung nach Anspruch 9, da damit die Beobachtung von Materialeigenschaften im Sandwichbauteil bzw. das Aufbringen von unterschiedlichen Beschriftungen oder designmäßigen Gestaltungen stark vereinfacht wird, wobei durch die Ausgestaltung der Deckschicht und/ oder der Zwischenschicht zusätzliche Effekte, wie beispielsweise Vergrößerungen, Farbveränderungen oder Reflexveränderungen einfach herbeigeführt werden können.

Vielfältige weitere Möglichkeiten ergeben sich durch eine Ausführungsform nach Anspruch 10. Dadurch ist der Folienverbund unabhängig von teuren maschinellen Arbeitsverfahren herstellbar, und es können die erfindungsgemäßen Vorteile daher auch für Sandwichbauteile in geringer Stückzahl genutzt werden.

Die weitere Ausführungsform nach Anspruch 11 eröffnet die Möglichkeit, die Verformungseigenschaften einer Decklage an die unterschiedlichsten Bedürfnisse anzupassen und auch die verschiedensten Eigenschaften in einer Decklage in Kombination zu verwirklichen.

Vorteilhaft ist auch eine Ausbildung nach Anspruch 12, da dadurch ein einstückiger Bauteil in einfacher Form hergestellt werden kann, der eine vollflächige Verbindung zwischen der Decklage und dem Tragkörper mit hoher Sicherheit gewährleistet und somit die Gefahr von Delaminationen bei derartigen Sandwichbauteilen erheblich verringert werden kann.

Weitere Ausgestaltungsmöglichkeiten ergeben sich bei der Ausbildung nach Anspruch 13, wobei trotzdem der Vorteil erhalten bleibt, daß bei der Herstellung des Sandwichbauteiles mit nur einem Einlageteil trotz eines mehrschichtigen Aufbaus der Decklage als Folienverbund das Auslangen gefunden werden kann.

Es ist auch eine Ausbildung nach Anspruch 14 von Vorteil, da damit der gesamte Tragkörper oder zumindest die am stärksten beanspruchten Teile eines Sandwichbauteils gegenüber Beanspruchungen von außen her in der entsprechenden Form geschützt werden können. Durch die Anordnung von ein oder mehreren Folienverbunden und durch die Wahl der Deckschichten derselben kann auf die in den unterschiedlichen Bereichen der Sandwichbauteile auftretenden unterschiedlichen Beanspruchungen abgestellt werden.

Eine Weiterbildung nach Anspruch 15 ermöglicht den Aufbau einer Pufferzone zwischen beispielsweise hochkratzfesten gereckten oder thermisch behandelten Kunststofffolien und dem aus heißem, flüssig bzw. plastifiziert eingebrachten Kunststoff hergestellten Tragkörper.

Eine andere Ausgestaltung nach Anspruch 16 ermöglicht eine ungehinderte Durchsicht durch den Bauteil.

Bei der Ausführungsform nach Anspruch 17 kann auch der Lichteinfall in den zur Durchsicht nicht benötigten Bereichen zur Anzeige in anderen Bereichen oder zur besseren Ablesbarkeit von Daten oder Stellungen der Anzeigevorrichtung verwendet werden.

Vorteilhaft ist auch eine Weiterbildung nach Anspruch 18, da bei dieser Anordnung auch auf ein eigenes Zifferblatt verzichtet werden kann, wodurch die Herstellkosten für eine derartige Uhr noch zusätzlich abgesenkt werden können.

Durch die Ausbildung nach Anspruch 19 kann eine höhere Festigkeit des Bauteils erreicht werden.

Vorteilhaft ist bei der Ausgestaltung nach Anspruch 20, daß die Anzeigeelemente dadurch auch für sehschwache Benutzer einfach abgelesen werden können.

Von Vorteil ist auch eine Ausführung nach Anspruch 21, weil dadurch ein erhöhter Schutz vor Zerstörung bzw. Beschädigung des aufgebrachten Druckbildes wirksam erreicht wird.

Eine andere Ausführungsvariante ist im Anspruch 22 gekennzeichnet, wodurch die Druck- bzw. Designschicht während des Herstellvorganges des Tragkörpers aus verflüssigtem bzw. plastifiziertem Kunststoff nicht nachteilig beeinflußt wird.

Es ist aber auch eine Ausbildung nach Anspruch 23 möglich, da damit der Folienverbund für die Decklage unabhängig vom Produktionsvorgang des Bauteils vorgefertigt werden kann.

Nach einer Ausgestaltung nach Anspruch 24 ist von Vorteil, daß auch sehr stark beanspruchte Bauteile unter Ausnutzung der zuvor geschilderten Vorteile hergestellt werden können.

Nach einer anderen Weiterbildung gemäß Anspruch 25 wird eine innige Verbindung zwischen dem Grundkörper und den Decklagen erreicht, die auch eine kostengünstige und räumlich variable Herstellung des Grundkörpers ermöglicht.

Eine andere Ausbildung beschreibt Anspruch 26. Durch die Verwendung von Decklagen für den Bauteil in Verbindung mit der freizügigen räumlichen Gestaltung durch die Herstellung des Grundkörpers aus Kunststoff ist eine einfache Anpassung an unterschiedliche Einsatzbedingungen, wie beispielsweise hohe Verschleißfestigkeit, designmäßige Gestaltung oder entsprechende Oberflächeneigenschaften, erzielbar. Dazu kommt nun in überraschend einfacher Weise, daß durch entsprechende Auslegung des eine willkürliche Raumform ermöglichenden Grundkörpers aus Kunststoff in Verbindung mit diesen durch die Decklagen gegebenen Vorteilen auch noch eine zusätzliche Kennzeichnung und Unterscheidung der derart hergestellten Bauteile möglich ist. Darüber hinaus können auch mit derartigen Bauteilen höhere Festigkeitseigenschaften aufgrund der Sandwichbauweise gegenüber einstückigen oder aus Folien herausgestanzten bzw. durch mechanische Bearbeitungsvorgänge erzielte Eigenschaften erreicht werden.

Vorteilhaft ist auch eine Ausgestaltung nach Anspruch 27, da dadurch die Eigenschaften des Kunststoffes des Grundkörpers für die optischen Eigenschaften des Bauteils mit herangezogen werden können.

Bei der im Anspruch 28 gekennzeichneten Ausführungsform können die optischen Eigenschaften einfach an verschiedene, unterschiedliche Einsatzbedingungen und Zustände angepaßt werden, und es können vor allem durch eine beliebige Zusammenstellung bzw. Mischung von Signalen mit den unterschiedlichsten Wellenlängen auch hohen Ansprüchen gerecht werdende Identifikationsmerkmale erreicht werden.

Die Ausgestaltung nach Anspruch 29 ermöglicht den Einsatz von derartigen Bauteilen für die Bestimmung unterschiedlicher, physikalischer Eigenschaften ohne großen fertigungstechnischen Aufwand.

Vorteilhaft ist aber auch eine Ausbildung nach Anspruch 30, da dadurch die optischen Eigenschaften des Bauteils unabhängig von den eingesetzten Decklagen festgelegt werden können und die Oberfläche der Decklagen bzw. deren Aussehen rasch an unterschiedliche Einsatzbedingungen angepaßt werden kann. Dadurch wird auch ermöglicht, die Kosten für die Musterherstellung derartiger Bauteile gering zu halten.

Bei der Ausführungsvariante nach Anspruch 31 wird ein den unterschiedlichsten Anforderungen an die Festigkeit bzw. die Eigenschaften, wie beispielsweise Abschirmungseigenschaften, geeigneter Aufbau der Decklagen bzw. des Grundkörpers ermöglicht.

Es kann aber durch die Weiterbildung nach Anspruch 32 eine unterschiedliche Anpassung an die verschiedenen Einsatzzwecke des Grundkörpers einfach geschaffen werden, da durch die Verwendung der zugesetzten Leuchtstoffe bzw. Zuschlagstoffe die Nachleuchtzeit bzw. die Strahlungsintensität sowie die über diesen Effekt gespeicherte Energie wahlweise und einfach an die unterschiedlichsten Anwendungsfälle angepaßt werden kann. So kann beispielsweise als Suchmarkierung für verlorengegangene Gegenstände im Finsteren ein über längere Zeitdauer nachleuchtender Leuchtstoff bzw. Zuschlagstoff verwendet werden.

Vorteilhaft ist auch eine Lösung nach Anspruch 33, da dadurch die durch die Ausbildung des Grundkörpers als Sandwichbauteil erzielten Vorteile auch für Uhren verwendbar sind.

Eine andere Weiterbildung beschreibt Anspruch 34, wodurch die erhöhten Festigkeitseigenschaften aufgrund der Ausbildung des Grundkörpers als Sandwichbauteil auch für die Erhöhung der Ausreißfestigkeit der Kupplungsvorrichtungen zwischen dem Uhrgehäuse und einem Uhrarmband ausgenützt werden können.

Von Vorteil ist auch eine Ausbildung nach Anspruch 35, da dadurch die Decklage bereits ein Sandwichelement bildet, welches zur Festigkeitserhöhung des Grundkörpers herangezogen werden kann.

Eine andere Ausgestaltung ist im Anspruch 36 beschrieben, wodurch eine lange Benutzungsdauer auch bei starker Beanspruchung einfach erzielt werden kann.

Bei der Ausgestaltung nach Anspruch 37 wird eine günstige Anpassung der unterschiedlichen Dehnungs- und Schwindmaße zwischen dem Material des Grundkörpers und der Decklage erreicht.

Vorteilhaft ist auch eine Ausgestaltung nach Anspruch 38, da dadurch auch mit der Verwendung von minderwertigeren und damit kostengünstigeren Materialien für die Herstellung des Grundkörpers das Auslangen gefunden werden kann, da bedingt durch die beiden Decklagen und dem dadurch erzielten Sandwichaufbau eine erhebliche Festigkeitserhöhung erzielt wird.

Eine andere Weiterbildung beschreibt Anspruch 39, wodurch die Vorteile eines mehrteiligen Sandwichelementes auch mit dem Einlegen nur eines einzigen, zusätzlichen Teiles, nämlich einer einzigen Decklage, erzielt werden können.

Es ist aber auch eine Ausgestaltung nach Anspruch 40 möglich, da durch die Verwendung der Decklage bzw. von mehreren Decklagen auch bei Verwendung von zumindest teilweise offenzelligen Kunststoffschäumen die nachteiligen Einflüsse durch den Eintritt und die Aufnahme von Feuchtigkeit in den offenen Zellen verhindert werden können.

Eine erhebliche Erleichterung zur Herstellung des Grundkörpers und vor allem auch dessen Ausgestaltung in komplizierten, räumlichen Ausbildungen wird durch die Ausbildung nach Anspruch 41 erzielt.

Vorteilhaft ist auch eine Weiterbildung nach Anspruch 42, da dadurch der Grundkörper auch für hochbeanspruchte Uhrengehäuse verwendet werden kann.

Durch die Ausgestaltung nach Anspruch 43 wird eine Anpassung der einzelnen Oberflächen des Grundkörpers an unterschiedliche Beanspruchungen, nämlich hohe Kratzfestigkeit auf der von der Haut abgewendeten Seite und gute Hautverträglichkeit auf der der Haut zugewandten Seite, ermöglicht.

Vorzeitige Ablösungen der Decklage werden durch eine Ausgestaltung nach Anspruch 44 verhindert.

Eine hohe Grundfestigkeit des Grundkörpers wird durch die Weiterbildung nach Anspruch 45 ermöglicht.

Vorteilhaft ist auch eine Ausgestaltung nach Anspruch 46, da dadurch mit einem gleichen Grundkörper unterschiedlich stabile Uhrgehäuse einfach hergestellt werden können.

Bei einer Ausgestaltung nach Anspruch 47 wird vor allem der Einbau des Uhrwerkes und der sonstigen, technischen Teile einer Uhr vereinfacht.

Durch die Merkmale im Anspruch 48 wird das Herstellen von feuchtigkeits- bzw. wasserdichten Uhren erheblich vereinfacht.

Vorteilhaft ist auch eine Ausgestaltung nach Anspruch 49, da dadurch die Festigkeitseigenschaften des Grundkörpers beliebig verändert und überdies in einfacher Form Zusatznuten in das Uhrgehäuse eingebaut werden können.

Vorteilhaft ist auch eine Ausgestaltung nach Anspruch 50, da dadurch eine Uhr als zusätzlicher Datenträger eingesetzt werden kann.

Eine höhere Datensicherheit kann durch eine Weiterbildung nach Anspruch 51 erreicht werden, da ein versehentliches Verändern der gespeicherten Codeinformationen ausgeschaltet ist.

Die Ausgestaltung nach Anspruch 52 hat den Vorteil, daß ohne im Tragkörper bzw. Uhrgehäuse angeordnete Rechnerelemente eine Speicherung von variablen Daten jederzeit möglich ist. Damit ist ein Einsatz derartiger Speichervorrichtungen auch in Bereichen mit starken elektromagnetischen bzw. elektrischen Feldern möglich.

Eine einfache Feststellung des Speicherzustandes der Speicherschicht ist bei einer Ausbildung nach Anspruch 53 möglich.

Es ist aber auch eine Ausgestaltung nach Anspruch 54 möglich, bei der die Sende- und Empfangseinrichtung auf der gleichen Seite des Grundkörpers bzw. des Uhrgehäuses angeordnet sein können.

Von Vorteil ist bei der Ausgestaltung nach Anspruch 55, daß eine hohe Wiedergabequalität des Speicherzustandes erreichbar ist.

Vorteilhaft ist auch eine Ausbildung nach Anspruch 56, da dadurch auch an der Uhr selbst der Speicherzustand des Speicherelementes feststellbar ist.

Eine andere Weiterbildung beschreibt Anspruch 57, wodurch die Abfrage des Speicherzustandes und dessen Anzeige auch unabhängig von externen Auswerteeinheiten erfolgen kann.

Von Vorteil ist aber auch eine Ausgestaltung nach Anspruch 58, da dadurch eine fehlerfreie Weitergabe der Signale gegebenenfalls auch auf lichtoptischem Weg mittels Lichtleiter möglich ist.

Von Vorteil ist aber auch eine Ausgestaltung nach Anspruch 59, da dadurch auch eine Programmierung und Ablesung des Speicherzustandes ohne entsprechende Ein- bzw. Auslesevorrichtungen möglich ist.

Vorteilhaft ist bei der Lösung nach Anspruch 60, daß nunmehr mit dem Material des Tragkörpers auf die Formgebung und die gewünschten Elastizitätseigenschaften abgestellt werden kann, während die für die unterschiedlichsten Anwendungsfälle gewünschten Auflagen an Kratzfestigkeit, chemische Widerstandsfähigkeit, und sonstige Eigenschaften durch die Decklage erzielt werden können.

Schließlich ist eine andere Ausführung für einen Bauteil im Anspruch 61 beschrieben. Vorteilhaft ist bei dieser Ausgestaltung, daß als Gestaltungselement eine Folie verwendet wird und somit unabhängig von der designmäßigen Gestaltung der Herstellungsprozeß durch unterschiedliche Designs nicht verzögert wird. Dazu kommt in überraschender Weise, daß durch die Verwendung dieser Folie eine Verfestigung des Grundkörpers bedingt durch eine weitere Lage bzw. Schicht erreicht wird und außerdem ein eigener Bauteil, wie beispielsweise ein Zifferblatt oder dgl. ebenfalls eingespart werden kann.

Die Erfindung wird nachfolgend anhand der in den Zeichnungen dargestellten Ausführungsbeispiele beschrieben.

Es zeigen:
- Fig. 1: einen erfindungsgemäßen, als Uhrarmband ausgebildeten Sandwichbauteil in Draufsicht und vereinfachter schematischer Darstellung;
- Fig. 2: einen Bandteil des Uhrarmbandes nach Fig. 1 in Seitenansicht, geschnitten, gemäß den Linien II-II in Fig. 1;
- Fig. 3: eine Seitenansicht einer anderen Ausführungsform eines Sandwichbauteils mit auf gegenüberliegenden Oberflächen eines Tragkörpers angeordneten, erfindungsgemäß ausgebildeten Decklagen;
- Fig. 4: eine andere Ausführungsform eines Sandwichbauteils mit einer erfindungsgemäßen Decklage in Seitenansicht, geschnitten;
- Fig. 5: eine Ausführungsvariante eines Teils eines erfindungsgemäßen Sandwichbauteils in Seitenansicht, geschnitten;
- Fig. 6: einen Teil eines anderen Sandwichbauteils in Seitenansicht, geschnitten mit einer anders aufgebauten Decklage;
- Fig. 7: einen als Formteil ausgebildeten Sandwichbauteil mit einer erfindungsgemäßen Decklage in Seitenansicht, geschnitten und stark vereinfachter Darstellung;
- Fig. 8: einen anderen als Sandwichbauteil hergestellten Formteil, der mit einer erfindungsgemäßen Decklage überzogen ist, in Seitenansicht, geschnitten;
- Fig. 9: eine andere Ausführungsvariante eines Aufbaues einer erfindungsgemäßen Decklage für einen ebenflächigen Sandwichbauteil in Seitenansicht, geschnitten,
- Fig. 10: einen anderen Aufbau eines erfindungsgemäßen Sandwichbauteils in Seitenansicht, geschnitten;
- Fig. 11: eine andere Ausbildung eines erfindungsgemäß aufgebauten Sandwichbauteils in Seitenansicht, geschnitten;
- Fig. 12: einen erfindungsgemäßen Bauteil, welcher als Sandwichelement ausgebildet ist und als Schutzdeckel für eine Uhr dient mit den daran angeordneten Halteelementen in Draufsicht und vereinfachter schematischer Darstellung;
- Fig. 13: der auf einem Gehäuse angeordnete Bauteil in Draufsicht und vereinfachter schematischer Darstellung in einem größeren Maßstab;
- Fig. 14: den auf dem Gehäuse angeordneten Bauteil, in Stirnansicht, geschnitten, gemäß den Linien XIV-XIV in Fig. 13;
- Fig. 15: den Aufbau des als Sandwichelement ausgebildeten Bauteils in vergrößertem Maßstab;
- Fig. 16: eine andere Ausführungsvariante des schichtmäßigen Aufbaus des Bauteils in vergrößertem Maßstab;
- Fig. 17: eine andere Weiterbildung des sandwichartigen Bauteils in vergrößertem Maßstab;
- Fig. 18: eine andere Ausführungsvariante des sandwichartigen Bauteils in vergrößertem Maßstab;
- Fig. 19: einen erfindungsgemäßen Bauteil, welcher für ein Uhrgehäuse als Sandwichelement mit daran angeordneten Halteelementen ausgebildet ist, in Draufsicht und vereinfachter schematischer Darstellung;
- Fig. 20: ein Uhrgehäuse in Draufsicht und vereinfachter schematischer Darstellung;
- Fig. 21: das Uhrgehäuse in Stirnansicht, geschnitten, gemäß den Linien XXI-XXI in Fig. 20;
- Fig. 22: eine andere Ausführungsvariante des Grundkörpers eines Uhrgehäuses in Draufsicht und vereinfachter schematischer Darstellung;
- Fig. 23: eine weitere Ausführungsvariante des Grundkörpers für ein Uhrgehäuse mit dem darin angeordneten Zeigerwerk sowie Datumsanzeigefeld in Draufsicht und schematisch vereinfachter Darstellung;
- Fig. 24: eine weitere Ausführungsvariante eines Grundkörpers für ein Uhrgehäuse in Stirnansicht geschnitten;
- Fig. 25: eine andere Weiterbildung eines Grundkörpers für ein Uhrgehäuse mit fix daran angeordneten Halteelementen;
- Fig. 26: den Aufbau der Decklagen des Sandwichelementes in vergrößertem Maßstab;
- Fig. 27: eine andere Ausführung der Decklage des Sandwichelementes in vergrößertem Maßstab;
- Fig. 28: einen erfindungsgemäßen Bauteil mit einer darin angeordneten Zwischenschicht sowie dazugehöriger Sende- und Empfangseinrichtung in Draufsicht und schematisch vereinfachter Darstellung;
- Fig. 29: einen Teilbereich des Grundkörpers mit der darin angeordneten Zwischenschicht sowie den Sende- und Empfangseinrichtungen in Draufsicht und vergrößertem Maßstab;
- Fig. 30: einen Teil der Zwischenschicht in Stirnansicht, geschnitten, gemäß den Linien XXX-XXX in Fig. 29;
- Fig. 31: den erfindungsgemäßen Bauteil mit der darin angeordneten Zwischenschicht sowie den Sende- und Empfangseinrichtungen in Seitenansicht und schematisch vereinfachter Darstellung;
- Fig. 32: eine andere Ausbildung eines erfindungsgemäßen Bauteils mit der darin waagrecht angeordneten Zwischenschicht sowie der dazugehörigen Leseeinheit, bestehend aus Sende- und Empfangseinrichtung;
- Fig. 33: ein Blockschaltbild für eine Steueranlage unter Verwendung eines erfindungsgemäßen Bauteils;
- Fig. 34: eine Gesamtansicht einer Anlage zur Herstellung von Formteilen unter Verwendung einer erfindungsgemäßen Handhabungsvorrichtung in Seitenansicht und stark vereinfachter schematischer Darstellung;
- Fig. 35: ein Aufnahme- und Entnahmenest, sowie das Halteelement einer erfindungsgemäßen Handhabungsvorrichtung in Draufsicht geschnitten, gemäß den Linien XXXV-XXXV in Fig. 34 und stark vereinfachter schematischer Darstellung;
- Fig. 36: die Lagervorrichtung zwischen Greifvorrichtung und Halteelement in Stirnansicht geschnitten, gemäß den Linien XXXVI-XXXVI in Fig. 35;
- Fig. 37: einen Teil der Handhabungsvorrichtung im Bereich der Lagervorrichtung zwischen der Greifvorrichtung und dem Halteelement in Draufsicht geschnitten, gemäß den Linien XXXVII-XXXVII in Fig. 36;
- Fig. 38: eine andere Ausführungsvariante einer Lagervorrichtung zwischen der Greifvorrichtung und dem Halteelement in Seitenansicht geschnitten und stark vereinfachter schematischer Darstellung;
- Fig. 39: eine andere Ausführungsform eines Entnahmenestes, in Seitenansicht geschnitten und stark vereinfachter schematischer Darstellung;
- Fig. 40: die Lagervorrichtung nach Fig. 36 in größerem Maßstab, geschnitten;
- Fig. 41: eine andere Ausführungsform einer Handhabungsvorrichtung mit einer Mehrfachanordnung von Lagervorrichtungen, geschnitten.

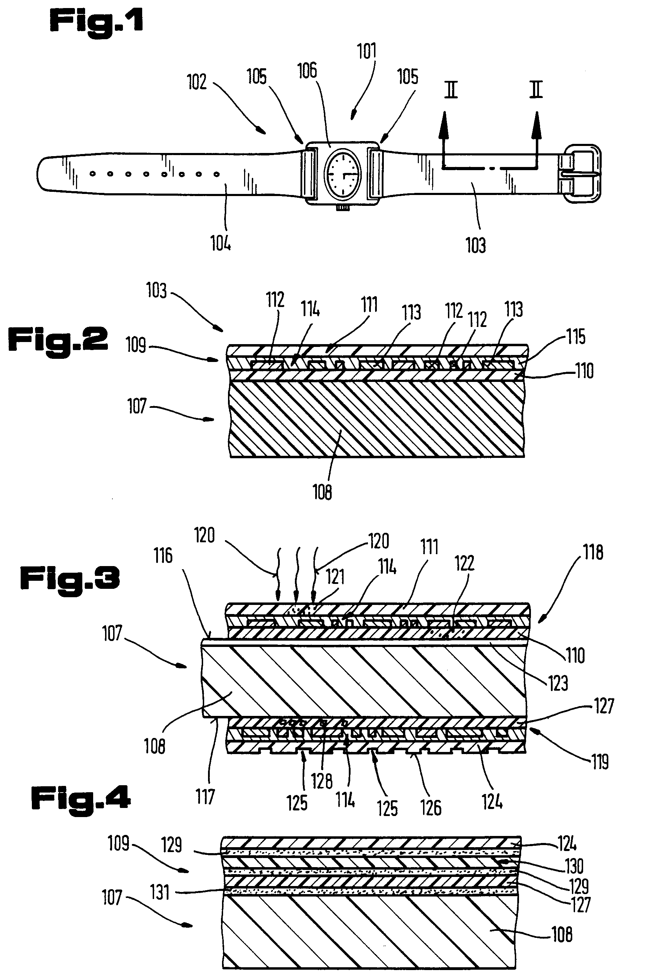

In Fig. 1 ist eine Uhr 101 mit einem Uhrarmband 102 bestehend aus einem Schnallenteil 103 und einem Lochteil 104, dargestellt. Sowohl der Schnallenteil 103 als auch der Lochteil 104 ist über jeweils eine Kupplungsvorrichtung 105 mit einem Gehäuse 106 der Uhr 101 verbunden.

In Fig. 2 ist ein Teil des Schnallenteils 103 in Seitenansicht, geschnitten dargestellt. Dieser Schnallenteil 103 ist als Sandwichbauteil 107 ausgebildet und besteht aus einem Tragkörper 108 und einer Decklage 109. Es sei bereits an dieser Stelle angemerkt, daß zum besseren Verständnis der Ausführungsbeispiele die Abmessungen, insbesondere Dicken, der einzelnen dargestellten Schichten bzw. Lagen und deren Verhältnisse beispielsweise zum Tragkörper 108 oder anderen Bauteilen größenmäßig stark verzerrt und übertrieben dargestellt sind und kein naturgetreues Abbild der am tatsächlichen Sandwichbauteil vorhandenen Proportionen wiedergeben.

Die erfindungsgemäße Decklage 109 besteht nunmehr aus einer Trägerschicht 110 und einer Deckschicht 111. Sowohl die Trägerschicht 110 als auch die Deckschicht 111 können hierbei durch eine Kunststoffolie gebildet sein. Die Trägerschicht 110 und die Deckschicht 111 können dabei auch völlig unterschiedliche Materialeigenschaften, beispielsweise einen unterschiedlichen Elastizitätskoeffizienten bzw. unterschiedliche Dehnungseigenschaften aufweisen, wie dies rein schematisch durch eine unterschiedliche Schraffur der Deckschicht 111 gegenüber der Trägerschicht 110 dargestellt wurde. Beim dargestellten Ausführungsbeispiel wäre der Dehnungskoeffizient der Deckschicht 111 höher als der der Trägerschicht 110, da diese bereits näher zum Tragkörper 108 angeordnet ist und damit bei einer räumlichen Verformung des Schnallenteils 103 nicht mehr so hohen Dehnungen ausgesetzt ist, wie beispielsweise die Deckschicht 111. Der Tragkörper 108 kann dabei eine noch geringere Elastizität aufweisen, als beispielsweise die Trägerschicht 110, wie dies durch eine noch engere Schraffur angedeutet ist

Zwischen der Trägerschicht 110 und der Deckschicht 111 ist in der Decklage 109 ein durch unterschiedliche Farbschichten 112, 113 gebildetes Druckbild 114 angeordnet. Die Zwischenräume zwischen den einzelnen Farbschichten 112, 113 und zwischen dem Druckbild 114 und der Deckschicht 111 sind mit einer Zwischenschicht 115 z.B. einer Kleberschicht oder einem Schutzlack ausgefüllt. Damit ist eine ebene Verbindungsfläche geschaffen, die ein problemloses und dauerhaftes Verbinden der Deckschicht 111 mit der Trägerschicht 110 bzw. dem Druckbild 114 ermöglicht.

Die Deckschicht 111 kann dabei durch ein den Einflüssen der Witterung, der UV-Strahlung oder den mechanischen Beanspruchungen einen hohen Widerstand entgegensetzendes Material, wie beispielsweise PVC, PMMA, PP, PE, PETP oder dgl. gebildet sein. Diese verschiedenen Materialien können zusätzlich mit verschiedenen Stabilisatoren oder dgl. versetzt sein, um beispielsweise den Durchtritt von UV oder sonstigen Strahlungen möglichst zu unterbinden.

Die Zwischenschicht 115 kann selbstverständlich das Druckbild 114 bzw. die Farbschicht 112, 113 ebenfalls aufnehmen, und beispielsweise aus einer Lage aus Textil oder einem Gitter bzw. Netz oder einer Matte, insbesondere aus Metall oder beliebigen anderen Fasern bzw. Fäden oder einem Gewirke bzw. Vlies, gebildet sein. Es ist aber auch möglich, die Zwischenschicht 115 beispielsweise durch eine bedruckte Lage aus Papier herzustellen. Sie kann aber ebenso durch beliebige Kunststoffe, Kunststoffolien oder Formkörper oder dgl. gebildet sein.

Ein derartiger Aufbau eines Sandwichbauteils 107 kann vor allem für flexible Sandwichbauteile, wie Bänder, Gürtel, Matten, verwendet werden.

In Fig. 3 ist eine andere Ausführungsvariante eines Sandwichbauteils 107 gezeigt, der auf seinen einander gegenüberliegenden Oberflächen 116, 117 mit je einer durch einen Folienverbund 118, 119 gebildeten Decklage versehen ist. Dieser beispielsweise stabförmige oder profilförmige Sandwichbauteil 107 kann somit zumindest an seinen beiden gegenüberliegenden Oberflächen 116, 117 aber gegebenenfalls auch allseitig durch die beiden Folienverbunde 118, 119 bzw. durch auf den Schmalseiten zusätzlich angeordnete oder dieselben Folienverbunde 118, 119 abgedeckt bzw. beschriftet sein. Dazu kann das Druckbild 114 des Folienverbundes 118 anders ausgebildet sein, als das Druckbild 114 des Folienverbundes 119. Zudem ist es aber auch noch möglich, die Deckschicht 111 des Folienverbundes 118 mit den Durchtritt von UV-Licht 120 - schematisch durch Pfeile angedeutet - verhindernden Zuschlagstoffen 121 zu versetzen. Um beispielsweise bei einem mit höherer Temperatur zu verarbeitenden bzw. aufzuspritzenden Kunststoff für den Tragkörper 108 eine Beschädigung des Druckbildes 114 bzw. der Trägerschicht 110 zu verhindern, kann diese mit anderen Zuschlagstoffen 122 versehen sein, um eine höhere Temperaturfestigkeit aufzuweisen. Sollte überdies eine Verbindung zwischen dem die Trägerschicht 110 bildenden Material und dem Tragkörper 108 schwer möglich sein, so ist es auch möglich, zwischen dem Tragkörper 108 und der Trägerschicht 110 eine Schicht 123, die durch einen speziellen Haftvermittler gebildet sein kann, anzuordnen.

Eine Deckschicht 124 des Folienverbundes 119 ist beispielsweise als Transparentfolie ausgebildet und weist eine hochglänzende, gegebenenfalls mit Prägungen 125 versehene Oberfläche 126 auf. Diese kann durch spezielle Zusatzbehandlungen hoch kratzfest ausgeführt sein. Eine Trägerschicht 127 des Folienverbundes 119 ist dagegen für die entsprechende Aufbringung des Druckbildes 114 vorbehandelt oder ausgebildet, sodaß eine gute Bedruckbarkeit für die unterschiedlichen Druckverfahren, beispielsweise entweder für Siebdruck und/oder Offsetdruck oder Tiefdruck gegeben ist. Zusätzlich bildet die Trägerschicht 127 eine Schutzfolie für das Druckbild 114, um aufgrund der Isolierwirkung und der Festigkeitseigenschaften eine Veränderung des Druckbildes 114 während des Aufbringens des Kunststoffes des Tragkörpers 108 zu verhindem. Darüber hinaus ist es beispielsweise auch möglich, in den Kunststoff der Trägerschicht 127 Zuschlagstoffe 128 einzubringen, die beispielsweise ein Diffundieren von Treibmitteln bzw. Gasen durch die Trägerschicht 127 vom Tragkörper 108 her unterbinden bzw. derartige Gase beim Durchtritt durch die Trägerschicht 127 binden.

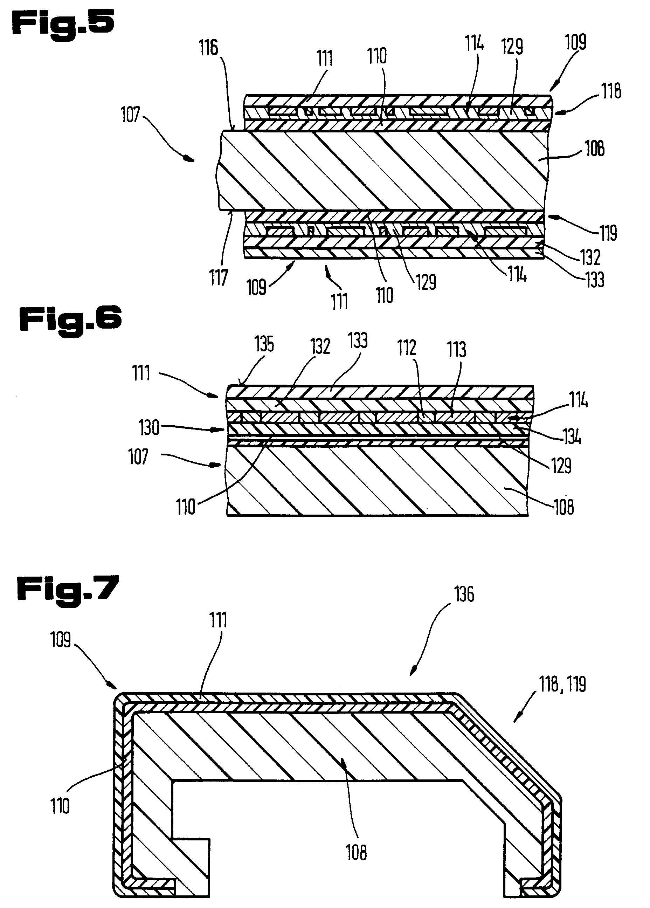

Bei einer anderen in Fig. 4 gezeigten Ausführungsvariante eines Sandwichbauteils 107 ist lediglich auf einer Seite des Tragkörpers 108 eine Decklage 109 aufgebracht, die einen Folienverbund bildet. In diesem Fall ist die Deckschicht 124 unter Zwischenschaltung einer Kleberschicht 129 mit einer Zwischenschicht 130 verbunden, die beispielsweise aus Textil, Metallgewebe, Glimmerschuppen, Fäden, Papier, Kohlefasern oder ähnlichen Geweben, Gewirken oder Vliesen aus unterschiedlichsten Natur- und Kunstfasern bestehen kann. Selbstverständlich kann diese Zwischenschicht 130 auch durch ein Gitter oder Netz aus den unterschiedlichsten Fasern aus Natur- oder Kunstmaterialien gebildet sein.

Diese Zwischenschicht 130 ist über eine weitere Kleberschicht 129 mit der Trägerschicht 127 verbunden, die die Zwischenschicht 130 vor übermäßigen Druck-, Temperatur- oder Scherbeanspruchungen während des Aufbringens des Tragkörpers 108 schützen soll. Um eine einwandfreie Verbindung zwischen dem Tragkörper 108 und dieser Trägerschicht 127 herzustellen, die beispielsweise um hohen Beanspruchungen während des Einbringens des flüssigen Kunststoffmaterials mit hoher Temperatur zu widerstehen, aus einem Polytetrafluorethylen gebildet sein kann, kann auf die Trägerschicht 127 eine Schicht 131, bestehend aus einem Haftvermittler, zur vollflächigen Verbindung der Trägerschicht 127 mit dem Tragkörper 108, aufgebracht sein.

In Fig. 5 ist eine andere Ausführungsvariante eines erfindungsgemäßen Sandwichbauteils 107 gezeigt, bei dem auf beiden Oberflächen 116, 117 Folienverbunde 118, 119 die Decklagen 109 bilden, aufgebracht sind. Um eine möglichst vielfältige Variation der verwendbaren Materialien für die Deckschicht 111 und die Trägerschicht 110 zu ermöglichen, ist es nunmehr auch möglich, das Druckbild 114 auf die Deckschicht 111 aufzubringen, und diese unter Zwischenschaltung der Kleberschicht 129 mit der Trägerschicht 110 zu verbinden. Dadurch ist es in vorteilhafter Weise nunmehr auch möglich, eine Trägerschicht 110 zu verwenden, die unabhängig von eventuellen Eigenschaften des Druckbildes 114 nur für den optimalen Schutz des Druckbildes 114 bzw. der Deckschicht 111 ausgelegt werden kann. Dadurch ist es auch möglich, durch entsprechend hohe Elastizitätseigenschaften, die gegebenenfalls zu einer Veränderung des Druckbildes 114 führen würden, einen möglichst hohen Schutz des Druckbildes 114 auf der Deckschicht 111 zu ermöglichen, da durch das Verfließen des Materials der Trägerschicht 110 die auftretenden Belastungen zwischen dem Tragkörper 108 und der Deckschicht 111 aufgefangen werden können.

Überdies ist bei diesem Ausführungsbeispiel noch gezeigt, daß der auf die Oberflächen 116, 117 aufgebrachte Folienverbund 118 nicht identisch bzw. spiegelbildlich aufgebaut sein muß, sondern auch asymmetrisch ausgebildet sein kann. So besteht beim vorliegenden Ausführungsbeispiel die dem Folienverbund 119 zugeordnete Deckschicht 111 aus einer Lage 132 und einer Lage 133. Die Lage 132 ist beispielsweise durch eine UV-Sperrfolie gebildet, während die Lage 133 durch eine hochfeste und somit kratzfeste Folie gebildet ist. Damit kann den gewünschten Oberflächen und Schutzeigenschaften der Deckschicht 111 durch entsprechenden mehrlagigen Aufbau ebenso Rechnung getragen werden.

Eine weitere Ausführungsform eines erfindungsgemäßen Sandwichbauteiles 107 zeigt Fig. 6. Bei dieser ist das Druckbild 114 aus mehreren Farbschichten 112, 113 auf eine faserförmige Trägerschicht 134, beispielsweise ein Papier, welches eine Zwischenschicht 130 bildet, aufgebracht. Über die Kleberschicht 129 ist die Trägerschicht 110 mit dieser Zwischenschicht 130 verbunden. Auf der vom Tragkörper 108 abgewendeten Seite ist dem Druckbild 114 bzw. der Zwischenschicht 115 bzw. 130 wieder eine als UV-Sperrfolie ausgebildete Lage 132 und eine ebenso als Transparentfolie mit hoher Kratzfestigkeit und hochglänzender Oberfläche 135 vorgeordnete Lage 133 vorgesehen, die mitsammen die Deckschicht 111 bilden.

In Fig. 7 ist ein als Formteil ausgebildeter Sandwichbauteil 136 gezeigt. Dieser ist auf seiner Sichtseite mit der Decklage 109, bestehend aus dem Folienverbund 118 oder 119, abgedeckt. Während der die Steifigkeit, Geometrie, das Gewicht und die Form und Funktion sicherstellende Tragkörper 108 den Konstruktionsteil bildet, übernimmt die Decklage 109 die optische Gestaltung bzw. Beschriftung und die Schutzfunktion für den gegebenenfalls aus einem minderwertigeren Material bestehenden Tragkörper 108. Diese Decklage 109 besteht aus der Deckschicht 111 und der Trägerschicht 110, wobei die Trägerschicht 110 wiederum die bei der Herstellung des Tragkörpers 108, also die beim Aufbringen des flüssigen Kunststoffes für den Spritzgießvorgang bzw. den Kunststoffschäumvorgang auftretenden Belastungen auffängt und damit die designmäßige Gestaltung bzw. die Oberflächengestaltung übernehmende Deckschicht 111 vor ihren den Materialeigenschaften nicht entsprechenden Überbeanspruchungen schützt.

Durch die Verwendung einer derartigen Decklage 109 können aber auch die Festigkeitseigenschaften eines Formteils durch die daraus sich ergebende Sandwichkonstruktion der Decklage 109 und die sich ergebende Sandwichkonstruktion, bestehend aus der Decklage 109 und dem Tragkörper 108, erhöht und somit die Festigkeitseigenschaften ohne die Verwendung von höherwertigeren und damit meist teureren Materialien erheblich verbessert werden. Dazu kommt, daß es auch möglich ist, höher beanspruchte Sandwichbauteile 107 zu schaffen, die ohne ein bei höherwertigeren Materialien meist damit verbundenes höheres Gewicht das Auslangen finden.

Vor allem dann, wenn die Deckschicht 111 bzw. die Decklage 109 räumlich sehr stark verformt wird, wie dies beispielsweise bei Sandwichbauteilen 136 mit komplizierter räumlicher Oberfläche der Fall ist, ist es von Vorteil, wenn die Materialien der Deckschicht 111 und/oder der Trägerschicht 110 bzw. der Zwischenschicht 115 oder 130 einen Elastizitätsmodul aufweisen, der bei Temperaturanstieg beispielsweise exponentiell bzw. zumindest progressiv zunimmt Dadurch ist es nämlich möglich, daß die einzelnen Schichten wie die Deckschicht 111, die Trägerschicht 110 bzw. Zwischenschichten 115, 130 bei der räumlichen Verformung zur Anpassung an die gewünschte Raumform vorerwärmt werden, um eine Delamination während der Verformung bzw. eine Beschädigung der Oberflächen der einzelnen Schichten zuverlässig zu verhindern.

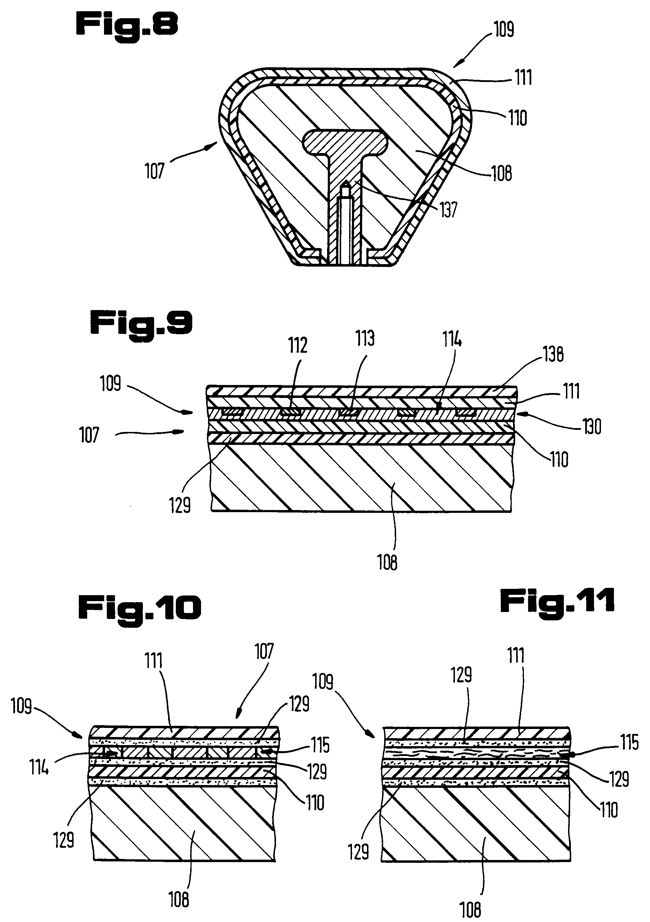

Eine andere Ausführungsvariante ist in Fig. 8 gezeigt. Bei dieser wird beispielsweise ein Gebrauchsgegenstand, wie der Handgriff eines Schaltknüppels, unter Verwendung der erfindungsgemäßen Decklage 109, hergestellt. Dazu ist im vorliegenden Ausführungsbeispiel die Deckschicht 111 beispielsweise aus Leder oder Kunstleder, also wie in der Zeichnung schematisch angedeutet, aus einem zumindest auf seiner Innenseite faserförmigen Material gebildet. Um nunmehr ohne Beschädigung und nachteilige Beeinflussung der Oberfläche dieser Lederschicht den Sandwichbauteil 107 durch Hinterspritzen bzw. Einschäumen des Tragkörpers 108 mit einem in diesen gegebenenfalls noch eingebetteten Verstärkungselement 137 bzw. einem Verankerungselement, nämlich einer Schraubenbüchse herzustellen, wird nunmehr auch in diesem Fall zwischen der Deckschicht 111 und dem Tragkörper 108 die Trägerschicht 110 angeordnet, deren Festigkeitseigenschaften, die während des Ausreagierens des Kunststoffschaumes des Tragkörpers 108 entstehenden Druck- und Temperaturbelastungen, sowie die Scherbeanspruchungen übernimmt und von der meist nicht sehr hoch beanspruchbaren Faserseite der Deckschicht 111 fernhält. Durch diesen scheinbaren Mehraufwand wird aber nun nicht nur ermöglicht, daß derartige Sandwichbauteile 107 hergestellt werden können, sondern es ist nunmehr auch möglich, das Zuschneiden der meist sehr elastischen und sich bei Schnitt- und Zugbeanspruchungen stark verformenden Lederschichten maschinell und großtechnisch durchzuführen, da durch das Herstellen des Folienverbundes 118, 119 für die Decklage 109 das Leder auf seiner Faserseite soweit verstärkt und stabilisiert wird, daß die nachfolgenden Arbeitsvorgänge mit höherer Präzision vorgenommen werden können. Dadurch wird bei der Anwendung der erfindungsgemäßen Lösung ein zusätzlicher Doppelvorteil erzielt, der für den Fachmann nicht voraussehbar war.

Schließlich zeigt die Fig. 9 eine Ausbildung eines Sandwichbauteils 107, bei dem auf die Decklage 109, insbesondere auf dessen Deckschicht 111 eine zusätzliche Schutzschicht, beispielsweise eine Lackschicht 138 aufgebracht ist, um gewisse gewünschte Zusatzeigenschaften zu ermöglichen. So kann diese zusätzliche Lackschicht 138 als UV-Sperrlack ausgebildet sein, so daß auch bereits die Deckschicht 111 nicht mehr von UV-Licht belastet wird. Als Zwischenschicht 130 kann wiederum das Druckbild 114 aus mehreren Farbschichten 112, 113 angeordnet sein, welches dann unter Umständen auch direkt mit der Trägerschicht 110 verbunden sein kann. Auf die Trägerschicht 110 kann über die Kleberschicht 129, oder wie bei den zuvor beschriebenen Ausführungsbeispielen, durch Aufschäumen bzw. Aufspritzen eines flüssigen Kunststoffmaterials der Tragkörper 108 hergestellt sein.

In Fig. 10 ist eine weitere Ausführungsform eines Sandwichbauteils 107 gezeigt, bei dem die Decklage 109 aus einer Deckschicht 111 und einer Trägerschicht 110 besteht. Die Trägerschicht 110 ist über eine Kleberschicht 129 bzw. über eine Haftvermittlungsschicht z.B. eine Schmelzklebefolie mit dem Tragkörper 108 verbunden. Dadurch wird auch die Möglichkeit geschaffen, für die Trägerschicht 110 und den Tragkörper 108 Materialien zu verwenden, die üblicherweise aufgrund ihrer chemischen Zusammensetzung oder ihrer Materialeigenschaften keine ausreichende direkte Haftungsverbindung eingehen würden. Die Verbindung zwischen der Trägerschicht 110 und dem Tragkörper 108 erfolgt beispielsweise dadurch, daß die Haftvermittlerschicht, wie beispielsweise eine Schmelzklebefolie, durch die Erwärmung beim Einbringen des flüssigen, erhitzten Kunststoffmaterials zur Herstellung des Tragkörpers 108 aufgeschmolzen wird und in einen plastischen Zustand übergeht, der ein vollflächiges Verkleben zwischen der Trägerschicht 110 und dem Tragkörpers 108 ermöglicht. Gleichermaßen können zwischen der Deckschicht 111 und der Trägerschicht 110 weitere Kleberschichten 129, die gegebenenfalls wiederum durch Haftvermittlerschichten, wie Schmelzklebefolien gebildet sein können, angeordnet sein, die zwischen sich eine Zwischenschicht 115, beispielsweise das Druckbild 114 einschließen. Die Verbindung der Deckschicht 111 und der Trägerschicht 110 zu einer Decklage 109 kann neben einer vollflächigen Verklebung beispielsweise durch Einwirkung von Druck und Temperatur bzw. durch Hochfrequenzschweißverfahren, Reibschweißverfahren oder ähnliche bekannte Verbindungsmethoden erfolgen.

In Fig. 11 ist eine Ausführungsvariante gezeigt, bei der zwischen der aus Kunststoffmaterial bestehenden Deckschicht 111 und der Trägerschicht 110 die Zwischenschicht 115 aus faserförmigem Material, beispielsweise Textil, Leder, Papier, Gewebe, Gewirke oder Vlies angeordnet ist.

Diese Zwischenschicht 115 kann wiederum über Kleberschichten 129, die eventuell auch als Haftvermittlerschichten z.B., Schmelzklebefolien ausgebildet sein können, untereinander verbunden sein, sodaß die Materialeigenschaften der Deckschicht 111 und der Trägerschicht 110 sowie der Zwischenschichten 115 zur Herstellung der Haftungsverbindung unbedeutend sind, und die so gebildete Decklage 109 kann je nach Ausgestaltung oder Materialwahl für die Trägerschicht 110 direkt oder gegebenenfalls über die Kleberschicht 129 mit dem Tragkörper 108 verbunden sein.

Als Deckschicht 111, Zwischenschicht 115 und 130 und Trägerschicht 110 können die verschiedensten Materialien, vor allem aber auch Kunststoffolien vorteilhaft aus den nachstehenden beispielshaften und nicht vollständig aufgezählten Materialien, wie PVC (hart, weich), PC, PETP, PS, PA, CA, PP, PE, PMMA, ABS und EAA bestehen. Für die Herstellung des Tragkörpers 108, vor allem durch einen Spritzguß, können grundsätzlich alle Kunststoffmaterialien, die dafür geeignet sind, verwendet werden, wobei jedoch beispielsweise Materialien wie PP, POM, ABS, SAN, PMNA, PPU, EEA, PUR bevorzugt aber aus PPU, PC oder PP bestehen, verwendbar sind.

Des weiteren ist es im Rahmen der Erfindung vorteilhaft, daß durch die Wahl des Materials der Deckschicht 111, der Zwischenschichten 115, 130 und der Trägerschicht 110 jene Schicht, auf die das Druckbild 114 aufgebracht werden soll, aus einem Material hergestellt werden kann, welches eine geringe Schrumpfung bei den im Zuge eines Druckvorganges üblicherweise auftretenden Trocknungstemperaturen aufweist, sodaß auch ein paßgenauer Mehrfarbendruck möglich ist.

Für die Deckschicht 111 ist es vor allem wichtig, daß diese den von außen kommenden Einflüssen, wie beispielsweise der UV-Einstrahlung, der Witterung und spezifischen, chemischen und mechanischen Eigenschaften, Hautschweiß und Abrieb einen ausreichenden Widerstand entgegensetzt. Darüber hinaus kann durch diese Deckschicht 111 auch erreicht werden, daß das darunterliegende Druckbild 114 sowie die Zwischenschichten 115, 130 oder der Tragkörper 108 von äußeren Einflüssen durch das Durchtreten von gewissen Lichtstrahlungen bzw. das Eindiffundieren von verschiedenen Flüssigkeiten bzw. Dämpfen geschützt werden kann. Die Oberfläche dieser Deckschicht 111 kann geprägt, textiert, poliert oder mattiert sein. Dem gegenüber schützt die Trägerschicht 110 das Druckbild 114 vor den nachteiligen Einflüssen, die beim Aufbringen des Kunststoffes zum Anformen auftreten, wie beispielsweise die Scherbeanspruchung beim raschen Einströmen des flüssigen Kunststoffmaterials unter hohem Druck, der dabei auftretenden Temperatur, sowie den dabei auftretenden Druckbelastungen.

Diese Trägerschicht 110 eröffnet nunmehr erstmals die Möglichkeit, daß bei der Auswahl der Druckfarben der Positionierung des Druckbildes und des Dekors keine Rücksicht auf die Werkzeugausführung, wie beispielsweise Art und Lage des Angusses, Einströmgeschwindigkeiten, Verarbeitungstemperaturen usw. genommen werden muß.

Dazu kommt, daß durch die Verwendung der Trägerschicht 110 auch Deckschichten 111 bzw. Zwischenschichten 115, 130 mit Vakuumgreifern verhandhabbar werden, die üblicherweise luftdurchlässig sind, sodaß auch derartige Deckschichtmaterialien, wie Textil, Papier, Metallgewebe usw., nunmehr einfach zu verarbeiten sind.

Die Kleberschichten 129 können selbstverständlich auch durch Haftvermittlungsschichten, wie z.B. Schmelzklebefolien, die bei den üblicherweise auftretenden Verarbeitungstemperaturen Klebeeigenschaften aufweisen, ausgebildet sein.

Selbstverständlich ist es auch möglich, durch den mehrlagigen Aufbau der Deckschicht 111, der Zwischenschicht 115 und 130 bzw. der Trägerschicht 110 spezielle optische Effekte bzw. Tiefenwirkungen bzw. unterschiedliche Schutzeigenschaften oder Kennungsmerkmale für erfindungsgemäß aufgebaute Sandwichbauteile 107 zu schaffen.

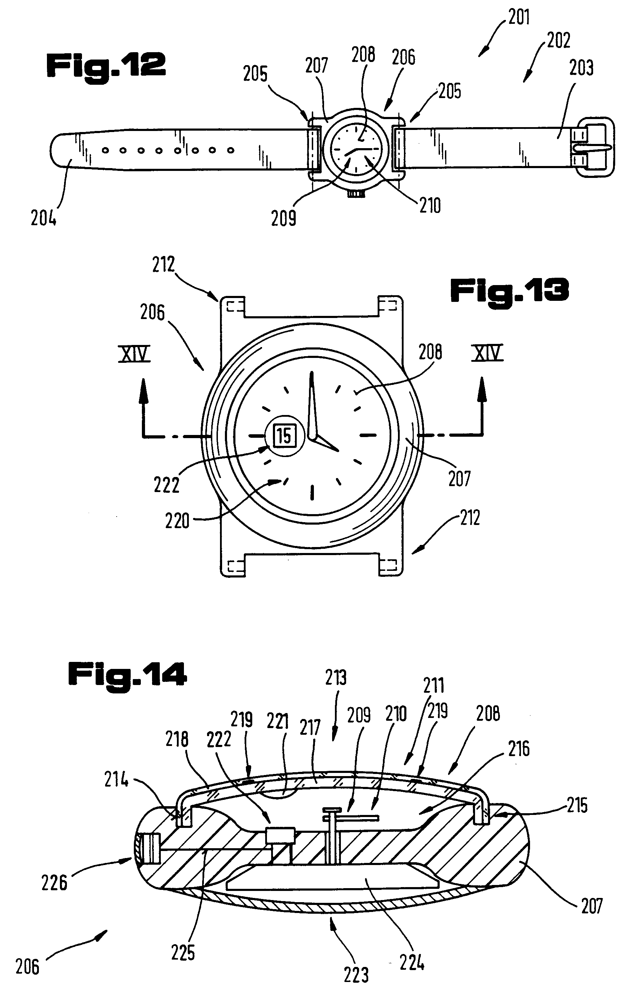

In Fig. 12 ist eine Uhr 201 mit einem Uhrarmband 202 bestehend aus einem Schnallenteil 203 und einem Lochteil 204 dargestellt. Sowohl der Schnallenteil 203 als auch der Lochteil 204 ist jeweils über eine Kupplungsvorrichtung 205 mit einem Uhrgehäuse 206 der Uhr 201 vorzugsweise gelenkig verbunden. Das Uhrgehäuse 206 ist im vorliegenden Ausführungsbeispiel durch einen Grundkörper 207 und einem darauf angeordneten, vorzugsweise transparenten Bauteil 208 gebildet, welcher im vorliegenden Ausführungsbeispiel als Schutzdeckel ausgebildet ist und der eine zwischen diesen angeordnete Anzeigevorrichtung 209, wie z.B. ein Zeigerwerk 210, vor Beschädigungen sowie Umwelteinflüssen schützt.

In den Fig. 13 und 14 ist das Uhrgehäuse 206 mit dem darauf angeordneten Bauteil 208, welcher als Sandwichelement 211 ausgebildet ist, gezeigt. Am Uhrgehäuse 206 sind Anschlußstücke 212 für die Kupplungsvorrichtung 205 des Schnallen- bzw. Lochteils 203, 204 angeformt. An einer Oberseite 213 des Uhrgehäuses 206 sind nutförmige Ausnehmungen 214 angeordnet, welche zur Aufnahme eines Halteansatzes 215 des Bauteils 208 dienen. Die Verbindung des Halteansatzes 215 mit dem Uhrgehäuse 206 in der Ausnehmung 214 muß derart dicht erfolgen, daß in einen Innenraum 216 zwischen dem Bauteil 208 und dem Uhrgehäuse 206 von außen her kein Schmutz, Wasser, Feuchtigkeit etc. eindringen kann. Diese Verbindung kann entweder über eine Klebe-, Schweiß-, Schnapp- oder eine Gewindeverbindung oder Ähnlichem erfolgen.

Der als Sandwichelement 211 ausgebildete Bauteil 208 besteht hier aus einem Tragkörper 217 sowie einer Decklage 218. Der genauere Schichtaufbau des Sandwichelements 211 wird in den nachfolgenden Figuren noch detaillierter beschrieben werden.

Wie hier in der Decklage 218 schematisch angedeutet, können Markierungen 219, welche z.B. eine Teilung 220 für das Zeigerwerk 210 darstellen, integriert sein. Wie weiters der Fig. 14 zu entnehmen ist, kann im Sandwichelement 211 eine Vergrößerungslinse 221 für ein im Grundkörper 207 integriertes Anzeigeelement 222, welches z.B. für die Datumsanzeige dienen kann, angeordnet sein.

An einer Unterseite 223 des Uhrgehäuses 206 ist eine Antriebsvorrichtung 224 für die Anzeigevorrichtung 209, wie z.B. das Zeigerwerk 210, angebracht. Das Anzeigeelement 222 sowie die Antriebsvorrichtung 224 können, wie schematisch angedeutet, über Leitungen 225 mit einer Energieversorgung 226, wie z.B. Batterien der verschiedensten Bauarten, in Verbindung stehen.

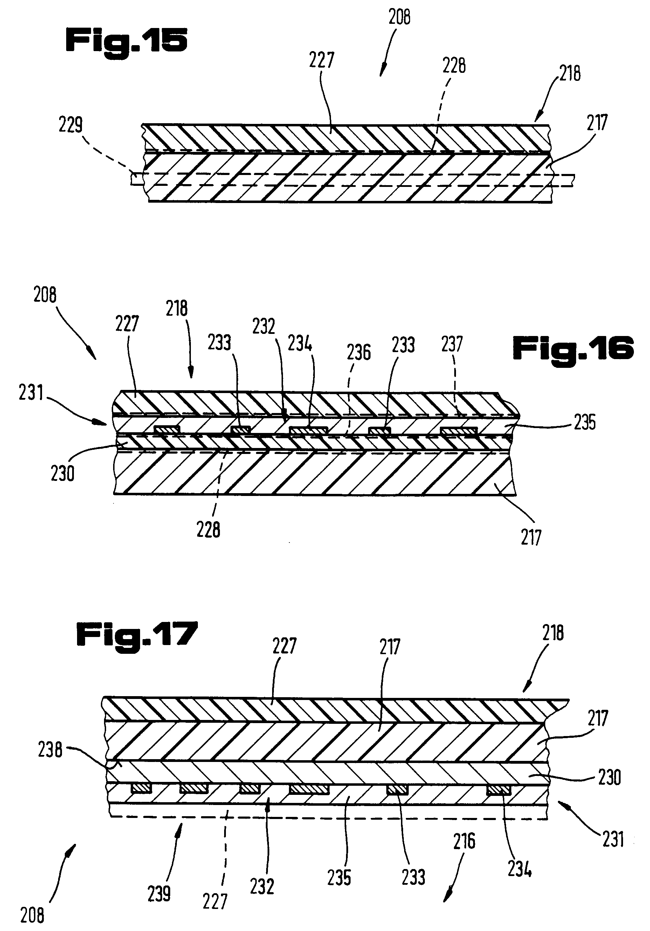

In Fig. 15 ist der Schichtaufbau des Bauteils 208 in vergrößertem Maßstab dargestellt. Bei diesem Ausführungsbeispiel wird der Bauteil 208 durch den weicheren und stabileren Tragkörper 217, welcher näher zum Grundkörper 207 angeordnet ist, sowie der Decklage 218, bestehend aus einer Deckfolie 227, gebildet, welche mittels einer Verbindungsschicht 228 miteinander verbunden sind. Die Art und Auswahl der Verbindungsschicht 228 hängt von den Werkstoffen des Tragkörpers 217, sowie der Deckfolie 227 ab. Bei gewissen Verbindungen kann es sogar möglich sein, die Verbindungsschicht 228 gänzlich wegzulassen, und die Verbindung des Tragkörpers 217 mit der Deckfolie 227 kann z.B. durch einen Preß- bzw. HF-Schweißvorgang erfolgen.

Wie weiters in dieser Figur durch strichlierte Linien schematisch angedeutet, ist es z.B. möglich, im Tragkörper 217 ein Verstärkungs- und/oder Masseelement 229 anzuordnen, welches die Festigkeitseigenschaften des Bauteils 208 wesentlich erhöht. Entscheidend für die Wahl des Verstärkungs- und/oder Masseelements 229 ist jedoch, daß eine ungehinderte Sicht zur Anzeigevorrichtung 209 der Uhr 201 gegeben sein muß.

In Fig. 16 ist die auf den Tragkörper 217 mehrschichtig ausgeführte Decklage 218 in vergrößertem Maßstab dargestellt. Die Verbindung zwischen dem Tragkörper 217 sowie der Decklage 218 ist wiederum durch die Verbindungsschicht 228 möglich.

Die Decklage 218 besteht bei dieser Ausführungsvariante aus der kratz- und verschleißfesten Deckfolie 227 sowie aus einer weicheren Tragfolie 230, welche mit dem Tragkörper 217 verbunden ist. Zwischen der Tragfolie 230 und der Deckfolie 227 ist eine Druck- bzw. Designschicht 231, die ein Druckbild 232, bestehend aus verschiedenen Farbschichten 233, 234 enthält, eingeschlossen. Die Zwischenräume zwischen den einzelnen Farbschichten 233, 234 bzw. zwischen dem Druckbild 232 und der Deckfolie 227 sind mit einer Ausgleichsschicht 235, z.B. einer Kleberschicht oder einem Schutzlack ausgefüllt. Damit ist eine ebene Verbindungsfläche geschaffen, die ein problemloses und dauerhaftes Verbinden der Deckfolie 227 mit der Tragfolie 230, bzw. dem Druckbild 232 ermöglicht.

Die Deckfolie 227 ist dabei durch ein den Einflüssen der Witterung der UV-Strahlung und im besonderen der mechanischen Beanspruchungen einen hohen Widerstand entgegensetzendes Material, wie beispielsweise PVC, PMAA, PP, PE, PETP oder dgl., gebildet.

Die Verbindung der Druck- bzw. Designschicht 231 bzw. der Ausgleichsschicht 235 mit der Deckfolie 227 und der Tragfolie 230 kann alternativ oder zusätzlich, wie schematisch mit strichlierten Linien angedeutet, über Kleberschichten 236, 237 erfolgen.

Eine andere Anordnung der Schichten des Bauteils 208 ist in Fig. 17 dargestellt. Am Tragkörper 217 des Bauteils 208 ist in Richtung Oberseite 213 der Uhr 201 die Decklage 218 mit der Deckfolie 227, welche hohe Abrieb- sowie Kratzfestigkeitswerte aufweist, angeordnet und mit dieser verbunden. An einer dem Innenraum 216 zugewandten Oberfläche 238 des Tragkörpers 217 ist eine Decklage 239 mit diesem verbunden. Die Decklage 239 ist hier durch die Tragfolie 230, welche mit dem Tragkörper 217 verbunden ist, sowie der Druck- bzw. Designschicht 231 mit dem darin enthaltenen Druckbild 232, bestehend aus den Farbschichten 233, 234 und der die Zwischenräume zwischen den Farbschichten 233, 234 ausfüllenden Ausgleichsschicht 235, gebildet.

Da an der Decklage 239 bei montiertem Bauteil 208 an der Uhr 201 von außen her keine Beschädigung auftreten kann, ist es möglich die Deckfolie 227, welche mit strichlierten Linien angedeutet ist, aus Einsparungsgründen wegzulassen. Ist der Schutz des Druckbildes 232 vor Zerstörung durch die Ausgleichsschicht 235 jedoch nicht ausreichend, so ist es möglich, die Deckfolie 227 auch auf der dem Innenraum 216 zugewandten Seite der Decklage 239 anzubringen.

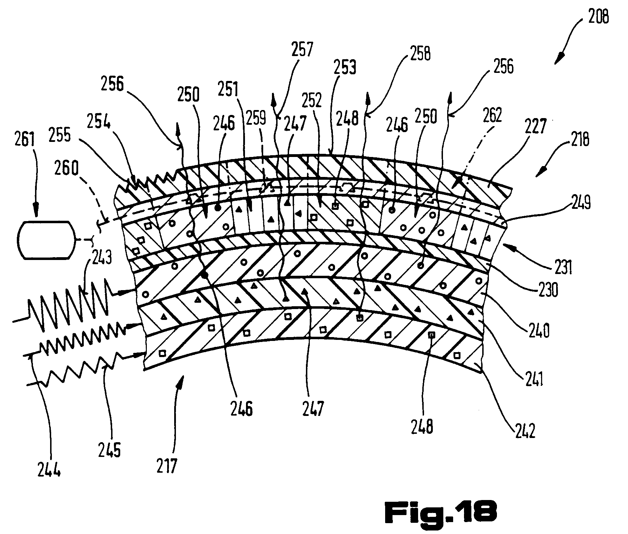

In Fig. 18 ist ein anderer erfindungsgemäß ausgebildeter Bauteil 208 gezeigt, bei dem eine Decklage 218 auf einem Tragkörper 217 angeordnet ist. Selbstverständlich können auf beiden Oberflächen des Tragkörpers 217 entsprechende gleichartig oder unterschiedlich ausgebildete Decklagen 218, 239 angeordnet sein. Im vorliegenden Ausführungsbeispiel besteht nun der Tragkörper 217 aus mehreren Lagen 240, 241 und 242, die beispielsweise alle durch gleichartigen oder unterschiedlichen Kunststoff mit unterschiedlichen Leitfähigkeiten für Strahlen 243, 244, 245 unterschiedlicher Frequenz bzw. Amplitude undurchlässig sind. So ist es nunmehr möglich, daß beispielsweise die Lage 240 mit einem durch Ringe schematisch angedeuteten Leuchtstoff 246 versetzt ist, während die Lage 241 durch einen durch Dreiecke symbolisch angedeuteten Leuchtstoff 247 und die Lage 242 durch einen durch Quadrate symbolisch angedeuteten Leuchtstoff 248 gebildet ist. Es ist aber auch möglich, daß für den Tragkörper 217 ein einheitlicher Kunststoff, der für alle Strahlen 243 bis 245 durchlässig ist, gebildet ist. Die Decklage 218 besteht nun ihrerseits aus einer durch eine Deckfolie 227 und durch eine Tragfolie 230 gebildeten Schicht und gegebenenfalls einer dazwischen noch angeordneten Zwischenschicht 249. Zwischen der Zwischenschicht 249, deren Anordnung jedoch nicht zwingend ist und der Tragfolie 230 ist eine Druck- bzw. Designschicht 231 vorgesehen, die aus mehreren Farbschichten 250, 251 und 252 zusammengesetzt sein kann. Diese einzelnen Farbschichten 250 bis 252 können nunmehr ebenfalls mit Leuchtstoffen 246 bis 248 versetzt sein, um sie jeweils einer eigenen Lage 240 bis 242 zuzuordnen, oder es ist auch möglich, nur diese Farbschichten 250 bis 252 mit den Leuchtstoffen 246 bis 248 zu versehen.

Wie in diesem Ausführungsbeispiel weiters gezeigt, ist es im Bereich einer Oberfläche 253 des Bauteils 208 möglich, entsprechende Vertiefungen 254 bzw. Erhöhungen 255, also eine Profilierung, Prägung eine Texturierung oder sonstige rauhe Oberflächengestaltung anzubringen. Unter anderem ist es beispielsweise auch möglich, die Oberfläche in Art einer Fresnellinse zu versehen, um gewisse optische Effekte oder Vergrößerungseffekte zu erzielen.

Die in den Tragkörper 217 eintretenden Strahlen 243 bis 245 weisen verschiedene Frequenzen und Amplituden auf, wobei jede Lage 240 bis 242 nur einer bestimmten Art von Strahlung den Durchtritt durch diese gestattet und die nicht entsprechenden Strahlungen abblockt. Mit dieser relativ einfach erscheinenden Maßnahme, die jedoch auch dadurch verwirklicht werden kann, daß verschiedene Sperrfolien mit unterschiedlichen Durchlässigkeitsbereichen, die mit entsprechenden Leuchtstoffen versetzt sind, nur in jenen Bereichen übereinander angeordnet sind, in denen die entsprechenden Leuchtstoffe vorgesehen sind, das Einwirken der Strahlen mit der vorbestimmten Frequenz bzw. Amplitude und gegebenenfalls auch Intensität feststellbar ist.

Treten nun vordefinierte Strahlen 243 bis 245 in die mit den Leuchtstoffen 246 bis 248 versetzten Lagen 240 bis 242 ein, werden dort die entsprechenden Leuchtstoffe 246 bis 248, welche als Energiewandler dienen, zur Abgabe von kaltem Licht 256 bis 258 angeregt, welches je nach dem verwendeten Leuchtstoff 246 bis 248 z.B. eine unterschiedliche Intensität bzw. Farbe aufweisen kann.

Bei der Verwendung des Bauteils 208 als Abdeckung bzw. Frontplatte für technische Geräte, wie z.B. Videorecorder, Plattenspieler, Verstärker, Radiogerät, Fernsehgerät, etc., oder auch als Verkleidung für diverse Armaturen kann bei entsprechender Auswahl der Leuchtstoffe 246 bis 248 für gewünschte Bereiche ein Nachleuchten erzielt werden, sodaß dadurch gewisse Bedienelemente auch im Dunkeln wieder leicht aufgefunden werden können. Weiters besteht die Möglichkeit, in der Zwischenschicht 249 druckempfindliche Taster 259 derart anzuordnen, daß sie z.B. mittels der unterschiedlichen Farbschichten 250 bis 252 je nach Verwendungszweck verschieden hinterlegt sind, bzw. ein Betriebszustand signalisiert wird und über Leitungen 260 mit einer Steuereinheit 261 zur Verarbeitung der eingegebenen Signale in Verbindung stehen.

Um einen ungehinderten Durchgang des abgestrahlten Lichts 256 bis 258 von den einzelnen Lagen 240 bis 242 bzw. Farbschichten 250 bis 252 zu erreichen, können Transparenzbereiche 262, welche mit strichpunktierten Linien angedeutet sind, in der Deckfolie 227 bzw. Zwischenschicht 249 angeordnet sein.

Diese Transparenzbereiche können z.B. durch die Beimengung von Zuschlagstoffen den Durchtritt der Strahlen 243 bis 245 nach außen hin erleichtern, bzw. den Eintritt von Licht bzw. Strahlung, wie z.B. UV-Licht, Infrarotlicht etc., verhindern.

Derartige Bauteile 208 können in entsprechend dünner Ausführung, vorzugsweise durch Spritzprägen hergestellt werden. Dabei können in den Formhohlraum entsprechende Folien eingelegt werden, und anschließend werden die Formhälften bis auf einen gewissen Betrag geschlossen. Daraufhin erfolgt ein Einbringen des Kunststoffmaterials ohne den üblichen Druck, worauf anschließend die beiden Formhälften vollständig unter hohem Druck geschlossen werden. Somit wird der eingebrachte Kunststoff im gesamten Formhohlraum gleichmäßig verteilt.

Die Anordnung der Decklage 218 bzw. 239 am Tragkörper 217 kann vollflächig ein- oder beidseitig oder auch nur partiell erfolgen. Dadurch können die unterschiedlichsten Farbabstrahlungen durch die Leuchtstoffe sowohl einseitig als auch beidseitig erfolgen. Die Deckfolie 227 der Decklage 218 ist vorzugsweise transparent ausgebildet und schützt die darunter angeordneten Schichten bzw. Folien vor Umwelteinflüssen und Zerstörung bzw. vor ungewolltem Eintritt von Strahlung mit bestimmter Wellenlänge, wie z.B. UV-Licht, Infrarotlicht oder dgl. Durch die Beimengung gewisser Zuschlagstoffe läßt sich der Strahlungsbereich, welcher ungehindert durch die Deckfolie 227 hindurchtreten kann, bevorzugt festlegen.

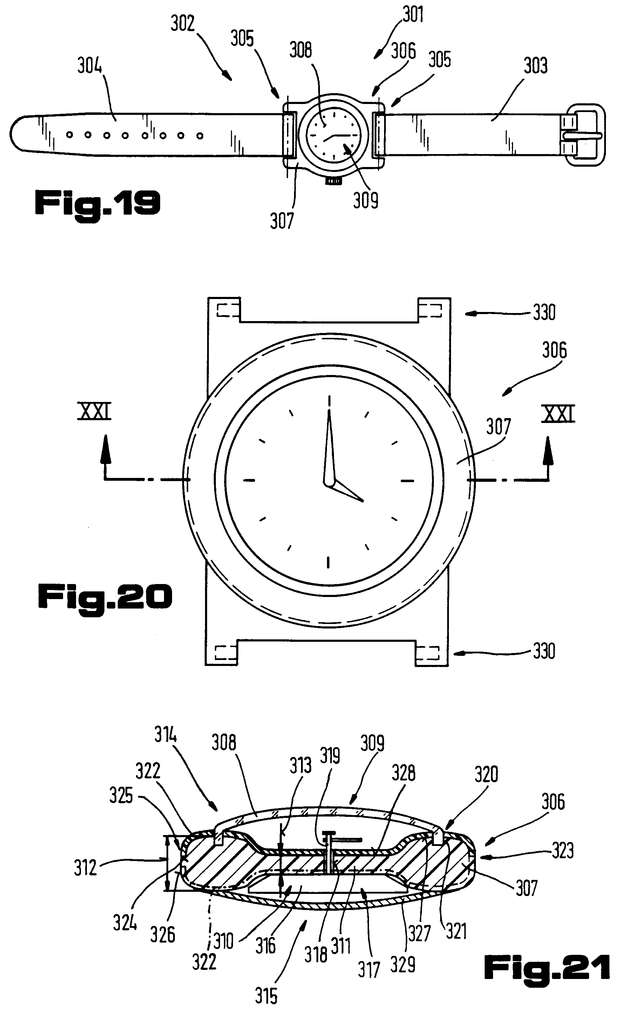

In Fig. 19 ist eine Uhr 301 mit einem Uhrarmband 302, bestehend aus einem Schnallenteil 303 und einem Lochteil 304, dargestellt. Sowohl der Schnallenteil 303 als auch der Lochteil 304 ist über jeweils eine Kupplungsvorrichtung 305 mit einem Bauteil 306 der Uhr 301 vorzugsweise gelenkig verbunden. Der Bauteil 306 ist im vorliegenden Ausführungsbeispiel durch einen Grundkörper 307 und einem darauf angeordneten, vorzugsweise transparenten Schutzdeckel 308 gebildet, der ein zwischen diesen angeordnetes Zeigerwerk 309 vor Beschädigungen sowie Umwelteinflüssen schützt.

In den Fig. 20 und 21 ist eine mögliche Ausführungsform für den Bauteil 306 dargestellt. Der Bauteil 306 ist hier vom kreisringförmigen Grundkörper 307 gebildet, der in seinem Mittelbereich 310 von einer mit diesem einstückig verbundenen Verbindungsplatte 311 mitsammen verbunden ist. Dabei weist der Grundkörper 307 in senkrechter Richtung zur Verbindungsplatte eine größere Dicke 312 auf als eine Stärke 313 der Verbindungsplatte 311 im Mittelbereich 310 des Grundkörpers 307. Durch die geringere Stärke 313 der Verbindungsplatte 311 wird auf einer Oberseite 314 des Bauteiles 306 Platz zur Aufnahme des Zeigerwerks 309 geschaffen.

An einer Unterseite 315 des Bauteiles 306 wird ebenfalls im Mittelbereich 310 ein Freiraum geschaffen, der zur Aufnahme eines Uhrwerks 316 dienen kann, welches als Antrieb 317 für das Zeigerwerk 309 Verwendung findet. Die Verbindungsplatte 311 ist im Zentrum des Mittelbereiches 310 von einer Öffnung 318 durchsetzt, welche von den Antriebswellen 319 für das Zeigerwerk 309 durchragt ist. Als Schutz vor Umwelteinflüssen sowie mechanischen Gewalteinwirkungen von außen ist das Zeigerwerk 309 an der Oberseite 314 des Bauteiles 306 vom transparenten Schutzdeckel 308 überspannend umgeben. Der transparente Schutzdeckel 308, wie ein Uhrglas, wird in einem umlaufenden Verbindungsbereich 320, welcher z.B. an der Oberseite 314 des Grundkörpers 307 durch eine Ausnehmung 321 gebildet ist, in einem Klebe- oder Schweißvorgang oder sonstigen Verbindungsvorgang, wie z.B. über eine dichtende Schraubverbindung, mit dem Grundkörper 307 zu einer Einheit zusammengefügt bzw. dichtend verbunden. Für die Verbindung zwischen dem Schutzdeckel 308 bzw. dem Uhrglas und dem Grundkörper 307 kannjede aus dem Stand der Technik bekannte Verbindungs- bzw. Befestigungsvorrichtung Verwendung finden.

An der Oberseite 314 des Bauteiles 306 ist weiters eine Decklage 322 angeordnet, welche sich vom Mittelbereich 310 bis in einen Randbereich 323 des Grundkörpers 307 erstreckt. Die Decklage 322 dient an der Oberseite 314 zur designmäßigen Gestaltung des Bauteiles 306 sowie z.B. weiters zur Darstellung der Stunden- und/oder Minutenteilung oder graphischen Symbolen für das Zeigerwerk 309. Unabhängig von der designmäßigen Gestaltung für den Bauteil 306 bildet die Decklage 322 an der Oberseite 314 des Grundkörpers 307 eine Lage eines Sandwichelementes und ermöglicht es dadurch, die Festigkeitseigenschaften des Grundkörpers 307 durch die Wahl der eingesetzten Decklage beliebig zu verändern. Dazu kommt, daß auch die Oberflächeneigenschaften des Grundkörpers 307 unabhängig von dessen Basismaterial verändert werden können, sodaß beispielsweise Folien aus PVC, PMMA, PP, PE, PETP oder dgl. verwendet werden können. Als Basismaterial für den Grundkörper 307 werden dagegen plastifizierbare Duroplaste oder gegebenenfalls auch entsprechend wiederstandsfähige Thermoplaste, in jedem Fall aber Kunststoffe verwendet, die durch Pressen, Gießen, Spritzgießen, Spritzprägen oder bei entsprechender Verfahrensausgestaltung durch Extrudieren hergestellt werden können. Werden derartige Grundkörper 307 beispielsweise durch Extrudieren gefertigt, so ist es vorteilhaft, die Formgebung durch entsprechende Ausgestaltung der Abziehvorrichtungen in Art eines Prägevorgangs im noch thermoplastischen Zustand des Kunststoffes unmittelbar nach der Extruderdüse vorzunehmen.

Um die Festigkeit des Grundkörpers 307 noch zusätzlich zu erhöhen, bzw. die Ausbildung der Oberfläche auf der Oberseite 314 bzw. der Unterseite 315 möglichst freizügig gestalten zu können und auch gegebenenfalls auch unterschiedlich ausbilden zu können, kann auch im Bereich der Unterseite 315, wie mit strichpunktierten Linien angedeutet, eine weitere Decklage 322 angeordnet sein. Die Decklagen 322 können ein- und mehrschichtig ausgebildet sein, wobei die verschiedenen Möglichkeiten des Schichtaufbaus der Decklagen 322 im nachfolgenden noch genauer beschrieben werden.

Eine Stirnkante 324 der Decklage 322 ist im Bereich der Ober- und/oder Unterseite 314, 315 im Randbereich 323 des Grundkörpers 307 eingebettet und bildet im Übergangsbereich 325 zwischen der Decklage 322 und dem Grundkörper 307 eine ebenflächige Außenkontur 326. Die Decklage 322 an der Unterseite 315 und/oder Oberseite 314 ist mit ihrer Unterseite 327 an einer Oberfläche 328 des Grundkörpers 307 anliegend mit diesem verbunden, z.B. verklebt oder HF-verschweißt. Besonders bevorzugt ist es jedoch, vor allem dann, wenn der Grundkörper durch eines der vorgenannten Verfahren, wie beispielsweise Spritzprägen, Spritzgießen oder Gießen hergestellt wird, die Decklage 322 oder die Decklagen 322 direkt an den Grundkörper 307 durch Anspritzen bzw. Angießen anzuformen. Dadurch kann z.B. der Grundkörper 307 aus einem billigen und einfärbigen Kunststoffmaterial hergestellt werden, der nur die nötigen Festigkeitseigenschaften aufzuweisen hat, wobei dann die Decklage 322 genau positioniert am Grundkörper 307 die verschiedensten Aufgaben wie z.B. die designmäßigen Gestaltungsmöglichkeiten, Festigkeitserhöhung, Sichtbarkeitsverbesserung, Kratzfestigkeit oder dgl. übernehmen kann.

Es ist aber auch ebenso möglich, wie dies in Fig. 21 mit strichlierten Linien dargestellt ist, die Decklage 322 durchgehend von der Oberseite 314 aus über den Randbereich 323 des Grundkörpers 307 hinweg bis zur Unterseite 315 reichen zu lassen. Dadurch kann ein einheitliches Aussehen des Bauteiles 306 erreicht werden.

Zum Schutz des Uhrwerkes 316 vor z.B. Umwelteinflüssen oder mechanischen Zerstörungen dient an der Unterseite 315 des Bauteiles 306 ein Gehäusedeckel 329. Dieser kann z.B. durch einen Klebe- oder Schweißvorgang oder einem sonstigen Verbindungsvorgang, wie z.B. über eine dichtende Schraub- oder Schnappverbindung, mit dem Grundkörper 307 verbunden sein.

Von Vorteil ist hier eine lösbare Verbindung, sodaß bei eventuellen Wartungsarbeiten oder einem Batteriewechsel ein rascher Zugriff zum Uhrwerk 316 gewährleistet ist.

Weiters ist in Fig. 20 eine mögliche Ausführungsform eines Anschlußstückes 330 für die Kupplungsvorrichtung 305 des Schnallen- bzw. Lochteils 303, 304 dargestellt. Dabei ist es z.B. auch möglich, die Decklage 322 nur über den in diesem Fall kreisringförmigen Grundkörper 307 anzuordnen und die Anschlußstücke 330 in der Farbe und Gestaltung des Kunststoffes für den Grundkörper 307 zu belassen. Es ist aber ebenfalls möglich, die Decklage 322 auch über die Anschlußstücke 330 hin zu erstrecken und somit ein einheitliches Aussehen für den Benutzer sicherzustellen.

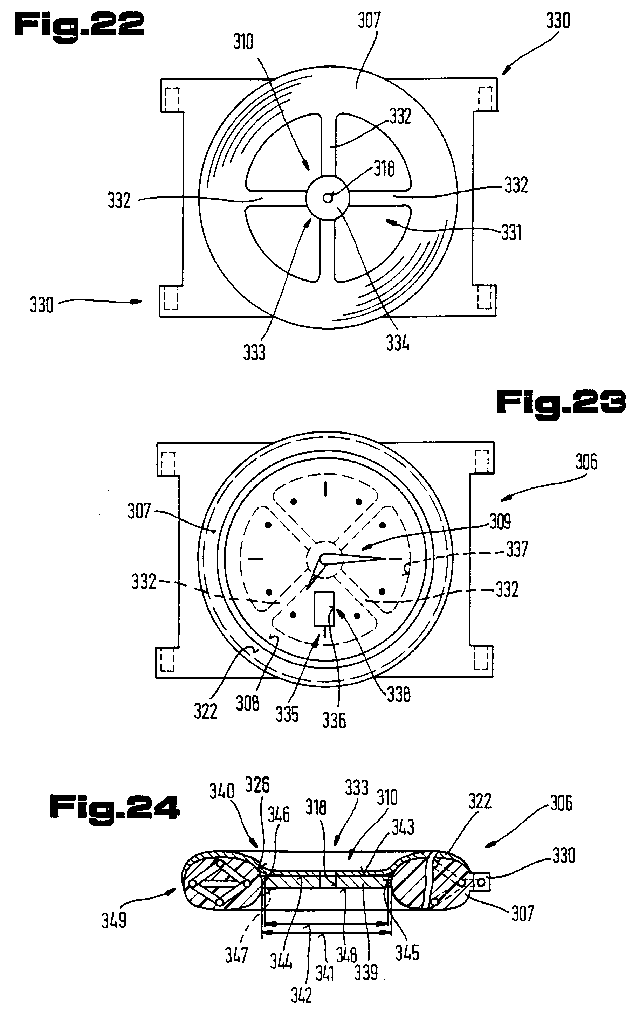

In den Fig. 22 und 23 sind weitere mögliche Ausführungsformen für den den Bauteil 306 bildenden Grundkörper 307 gezeigt. Der Grundkörper 307 ist wiederum durch einen rotationssymmetrischen, einen eine kreisringähnliche Form aufweisenden Kunststoffkörper gebildet. An der vom Mittelbereich 310 abgewendeten Seite des Grundkörpers 307 können wiederum Anschlußstücke für die Kupplungsvorrichtung des Schnallen- bzw. Lochteils 303, 304 angeordnet sein. Diese Anschlußstücke können die verschiedensten Formen aufweisen, die ebenfalls zu einer gesicherten Aufnahme der Kupplungsvorrichtung 305 führen. Es ist aber auch ebenso möglich, die Anschlußstücke in geeigneter Form im Grundkörper 307 zu integrieren, um dadurch eventuell auftretende Platzprobleme zu beseitigen.

Der Mittelbereich 310 des Grundkörpers 307 ist hier nicht durch eine durchgehende Verbindungsplatte, wie im vorhergehenden Ausführungsbeispiel beschrieben, gebildet, sondern weist eine gitterartige Verstrebung 331 auf, die von einzelnen Stegen 332, welche im Zentrum 333 des Mittelbereichs 310 mit einer gemeinsamen Tragplatte 334 verbunden sind, gebildet ist. In der Tragplatte 334 ist wiederum die Öffnung 318 zur Aufnahme der Antriebswellen 319 für das Zeigerwerk 309 vorgesehen. Für den Platzbedarf und die Anbringung des Zeigerwerks 309 bzw. Uhrwerks 316 sei hier erwähnt, daß alle aus dem Stand der Technik möglichen Ausführungsvarianten Anwendung finden können, da es auf einfache Weise möglich ist, je nach Anwendungsfall, den Mittelbereich 310 in seiner Form an die entsprechenden Erfordernisse anzupassen. So kann es vorteilhaft sein, die Verbindungsplatte 311 bzw. Verstrebung 331 z.B. näher in Richtung Oberseite 314 bzw. Unterseite 315 des Bauteiles 306 zu verlegen oder sogar einseitig ebenflächig auszubilden.

Die Ausführungsform der stegartigen Verstrebungen 331 im Mittelbereich 310 des Grundkörpers 307 kann vor allem dann Anwendung finden, wenn aus Stabilitätsgründen auf eine durchgehende Verbindungsplatte 311 verzichtet werden kann, oder wenn dies aus spritztechnischen oder herstellungsmäßigen Erfordernissen günstiger ist. Weiters wird dadurch auch eine Materialeinsparung erzielt.

Wie weiters besser aus Fig. 23 zu ersehen ist, weist der Bauteil 306 an seiner Oberseite 314 zusätzlich zum Zeigerwerk 309 ein Informationsfeld 335, z.B. eine Datumsanzeige auf. Dieses Informationsfeld 335 kann z.B. von einem Durchbruch 336, welcher in der Decklage 322 angeordnet ist, gebildet sein. Es ist aber auch ebenso möglich, das Informationsfeld 335 in Form einer transparenten Aussparung innerhalb der Decklage 322 und/oder Verbindungsplatte 311 bzw. Stegen 332 der Verstrebung 331 zu realisieren.

Bei dieser Ausführungsform ist auf die entsprechende Lage der gitterartigen Verstrebungen 331 zu achten, da ein zwischen den Stegen 332 gebildeter Zwischenraum 337 unterhalb der Decklage 322 ohne weitere Nachbearbeitung des Grundkörpers 307 für ein Anzeigeelement 338 des Informationsfeldes 335 zur Verfügung steht.

Die zwischen den Stegen 332 gebildeten Zwischenräume 337 werden dabei von der Decklage 322 überspannt. Dabei wird ein Sandwichaufbau erreicht, der bevorzugt eine ausreichende Festigkeit gegen Durchbiegen bzw. Durchwölben aufweist und gleichzeitig vom darüber angeordneten transparenten Schutzdeckel 308 gegen Umwelteinflüsse sowie Zerstörung von außen sicher geschützt ist.

In Fig. 24 ist eine weitere mögliche Ausführungsform für den Grundkörper 307 des Bauteils 306 dargestellt. Dabei weist der Grundkörper 307 in seinem Mittelbereich 310 keinen einstückigen Aufbau mit einer Zwischenplatte 339 auf, die in einer Aufnahmeöffnung 340 innerhalb des kreisringförmigen Grundkörpers 307 Platz findet. Ein Durchmesser 341 der Aufnahmeöffnung 340 kann z.B. auch geringfügig größer sein als ein Durchmesser 342 der Zwischenplatte 339. Wird eine derartige Ausführung gewählt, so kann verhindert werden, daß sich die Zwischenplatte 339 im Mittelbereich 310, z.B. bei auftretenden Temperaturschwankungen und damit verbundenen Maßänderungen durchwölbt und damit eine Beschädigung des Zeigerwerks 309, des Uhrwerks 316 bzw. der Antriebswellen 319 hervorrufen kann. Die Antriebswellen 319 durchsetzen wiederum die Öffnung 318, welche im Zentrum 333 des Mittelbereiches 310 angeordnet ist.

Für die Befestigung der Zwischenplatte 339 in der Aufnahmeöffnung 340 bestehen nunmehr mehrere Möglichkeiten. So ist es z.B. möglich, die Zwischenplatte 339 mit ihrer Oberfläche 343 an einer Unterseite 344 der Decklage 322 zu befestigen. Dies kann mittels eines Klebe- oder Schweiß- oder eines anderen Verbindungsvorgangs, wie z.B. Anformen bzw. Aufspritzen erfolgen. Die Decklage 322 übernimmt dann die gesamte Halterung der Zwischenplatte 339.

So ist es aber auch weiters möglich, die Zwischenplatte 339 mit ihrer Stirnseite 345 mittels einer elastischen Kleberschicht 346 an der Außenkontur 326 des Grundkörpers 307 zu befestigen. Dabei überbrückt die z.B. elastische Kleberschicht 346 die Durchmesserunterschiede zwischen dem Grundkörper 307 und Zwischenplatte 339 und führt so zu einer Art dämpfenden Lagerung.

Wie weiters mit strichlierten Linien dargestellt, kann eine vertikale Halterung der Zwischenplatte 339 im Grundkörper 307 derart erfolgen, daß an der Außenkontur 326 des Grundkörpers 307 Vorsprünge 347 angeordnet sind, die sich in Richtung des Zentrums 333 im Mittelbereich 310 erstrecken und als Auflage für eine Unterseite 348 der Zwischenplatte 339 dienen. Dabei ist jedoch darauf zu achten, daß wieder genug Freiraum zur Aufnahme des Zeigerwerks 309 und des Uhrwerks 316 besteht.

Wie weiters der Fig. 24 zu entnehmen ist, kann im Grundkörper 307 z.B. ein Verstärkungselement 349 im Inneren angeordnet sein. Dieses Verstärkungselement 349 kann z.B. aus gitterartigen Geflechten, Gewirken, Matten, Vliesen, Geweben, Einlagefaden aus den verschiedensten Werkstoffen und Materialien, wie z.B. Metall, Kunststoff, Textil, Kohle, Kevlar, Glas sowie Einlageringen bestehen. Diese Verstärkungselemente 349 erhöhen die Festigkeitseigenschaften des Grundkörpers 307, wodurch bei der Auswahl des Grundstoffes für den Grundkörper 307 ein kostengünstiger Werkstoff eingesetzt werden kann. Selbstverständlich können diese Verstärkungselemente 349 auch in der Zwischenplatte 339 unabhängig davon, ob diese einstückig mit dem Grundkörper 307 hergestellt ist oder nicht, angeordnet sein. Das Verstärkungselement 349 kann auch derart angeordnet bzw. ausgebildet sein, daß auch gleichzeitig das Anschlußstück 330 für die Kupplungsvorrichtung 305 mit verstärkt wird.

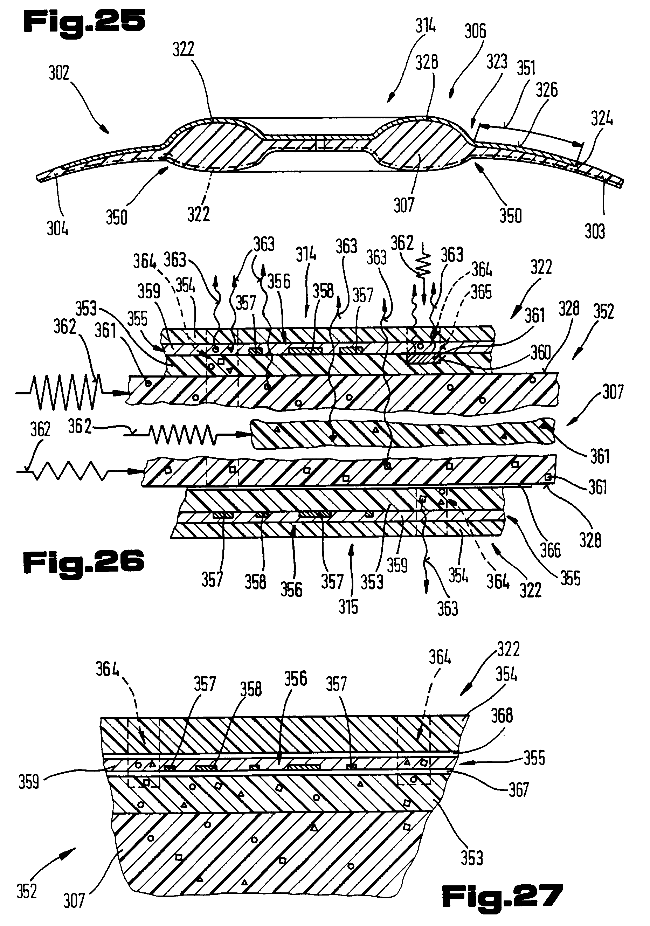

In Fig. 25 ist eine mögliche Weiterbildung des Grundkörpers 307 für den Bauteil 306 gezeigt. Bei dieser Ausführungsform sind sowohl der Schnallenteil 303 als auch der Lochteil 304 des Uhrarmbandes 302 einstückig an den Grundkörper 307 angeformt. Dabei wird im Anschlußbereich 350 des Schnallen- bzw. Lochteils 303, 304 am Grundkörper 307 die bevorzugt gelenkige Kupplungsvorrichtung 305 durch die dem Material innewohnende Elastizität gebildet. Um das Material des Grundkörpers 307 sowie den daran angeformten Schnallen- bzw. Lochteil 303, 304 im Anschlußbereich 350 durch die auftretenden Belastungen, wie z.B. Zug- bzw. Biegebeanspruchung nicht zu überlasten, reicht die Decklage 322 zumindest eine Länge 351 vom Randbereich 323 des Grundkörpers 307 in Richtung des Schnallen- bzw. des Lochteils 303, 304 und kann sich jedoch auch bis in den Endbereich des Schnallen- bzw. Lochteils 303, 304 erstrecken.

Bei entsprechender Materialwahl der Decklage 322 übernimmt diese im Bereich der Länge 351 sowie im Anschlußbereich 350 die entlang der Oberfläche 328 auftretenden Zugspannungen. Die Stirnkante 324 der Decklage 322 ist wiederum im Grundmaterial des Schnallen- bzw. Lochteils 303, 304 eingebettet, um die ebenflächige Außenkontur 326 auszubilden. Damit steht auf einfache und kostengünstige Weise ein einstückiger Bauteil zur Aufnahme des Zeiger- bzw. Uhrwerks 309, 316 sowie des Schutzdeckels 308 und Gehäusedeckels 329 zur Verfügung. Diese Ausführungsart kann vor allem im Freizeit- sowie Jugendbereich Anwendung finden, da dies eine stabile und kostengünstige Lösung darstellt.

Es ist aber andererseits auch möglich, im Übergangsbereich zwischen dem Grundkörper 307 und dem Schnallenteil 303 bzw. dem Lochteil 304 eine Materialschwächung, wie dies mit strichlierten Linien in Fig. 25 angedeutet ist, vorzusehen, um die Gelenkwirkung noch besser zu unterstützen. Durch diese im linken Teil der Zeichnung zwischen dem Lochteil 304 und dem Bauteil 306 hergestellte Einkerbung kann aufgrund der dem Kunststoff innewohnenden elastischen Verformungseigenschaften eine bessere und dauerhaftere Anpassung der Schnallen- bzw. Lochteile 303, 304 an den Arm eines Benutzers erreicht werden.

Andererseits ist es gerade bei einer derartigen Ausbildung auch möglich, neben der Decklage 322 auf der Oberseite 314 des Bauteils 306 auch auf der gegenüberliegenden Seite des Grundkörpers 307 und/oder des Schnallen- und Lochteils 303, 304 eine Decklage 322, wie mit strichpunktierten Linien eingezeichnet, anzuordnen. Dabei ist es auch möglich, aber nicht zwingend notwendig, diese weitere mit strichpunktierten Linien dargestellte Decklage mit einem hautfreundlichen Material auszustatten, sodaß der Tragekomfort verbessert wird. Die der sichtbaren Oberfläche zugeordnete Decklage 322 kann demgegenüber mit entsprechender Kratzfestigkeit und Abriebfestigkeit ausgestattet sein.

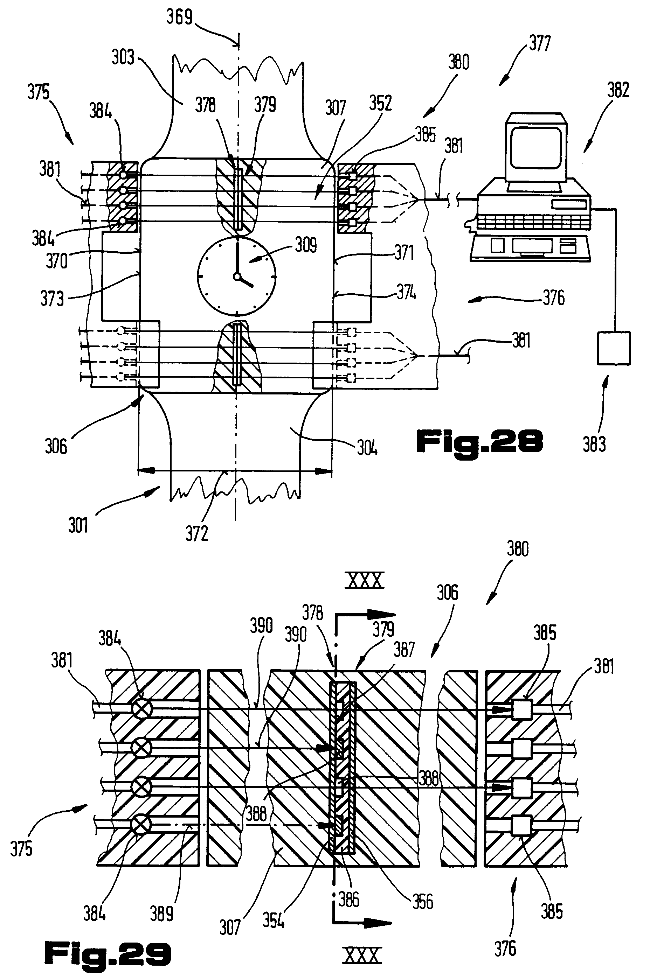

Die Fig. 26 zeigt einen Ausschnitt eines erfindungsgemäßen Sandwichbauteils 352, welcher im vorliegenden Ausführungsbeispiel durch einen mehrschichtigen Grundkörper 307, wie mit verschiedenen Schraffuren schematisch angedeutet, sowie Decklagen 322 gebildet ist. Die an der Oberseite 314 des Sandwichbauteils 352 angeordnete Decklage 322 besteht aus einer Tragfolie 353, welche mit dem Grundkörper 307 an der Oberfläche 328 verbunden ist. Weiters besteht die Decklage 322 aus einer Deckfolie 354, welche einen größeren Abstand zur Oberfläche 328 des Grundkörpers 307 aufweist. Zwischen der Tragfolie 353 und der Deckfolie 354 ist eine Druck- bzw. Designschicht 355, die ein Druckbild 356, z.B. bestehend aus verschiedenen Farbschichten 357, 358 enthält, eingeschlossen. Eventuell vorhandene Zwischenräume zwischen den einzelnen Farbschichten 357, 358 bzw. zwischen dem Druckbild 356 und der Deckfolie 354 können mit einer Ausgleichsschicht 359, z.B. einer Kleberschicht oder einem Schutzlack, ausgefüllt sein. Damit ist eine ebene Verbindungsfläche geschaffen, die ein problemloses und dauerhaftes Verbinden der Deckfolie 354 mit der Tragfolie 353 bzw. dem Druckbild 356 ermöglicht. Die Druck- bzw. Designschicht 355 kann aber auch durch eine eigene ein- oder mehrfärbige Folie gebildet sein.

Die Deckfolie 354 kann dabei durch ein den Einflüssen der Witterung, der UV-Strahlung oder den mechanischen Beanspruchungen einen hohen Widerstand entgegensetzendes Material, wie beispielsweise PVC, PMMA, PP, PE, PETP oder dgl., gebildet sein. Diese verschiedenen Materialien können zusätzlich mit verschiedenen Stabilisatoren oder dgl. versetzt sein, um beispielsweise den Durchtritt von UV- oder sonstigen Strahlungen möglichst zu unterbinden.

Die Ausgleichsschicht 359 kann selbstverständlich das Druckbild 356 bzw. die Farbschichten 357, 358 ebenfalls aufnehmen und beispielsweise aus einer Lage aus Textil oder einem Gitter bzw. Netz oder einer Matte, Fasern bzw. Fäden oder einem Gewirke bzw. Vlies, insbesondere aus Metall, oder beliebigen anderen Materialien gebildet sein. Es ist aber auch möglich, die Ausgleichsschicht 359 beispielsweise durch eine bedruckte Lage aus Papier herzustellen. Sie kann aber ebenso durch beliebige Kunststoffe, Kunststoffolien oder Formkörper, Textilien oder dgl. gebildet sein.

Wie weiters in der Decklage 322 an der Oberseite 314 dargestellt ist, kann die Tragfolie 353 Aussparungen 360 aufweisen, die mit einem sogenannten "Träger des kalten Lichtes", nämlich Leuchtstoffen 361 befüllt sind. Diese Leuchtstoffe 361 können aus den verschiedensten organischen und/oder anorganischen Verbindungen hergestellt sein, welche nach Anregung von eintretender Strahlung 362 "kaltes Licht", welches als abgegebene Strahlung 363 bezeichnet ist, abstrahlen. Diese abgegebene Strahlung 363 muß nicht im sichtbaren Bereich des Lichtes liegen, sondern kann sich aus Sicherheitsgründen auch im nicht sichtbaren Strahlungsbereich befinden. Um eine optimale Abgabe der Strahlung 363 zu erreichen, wird oberhalb der Aussparung 360 ein Transparenzbereich 364 in Form einer transparenten Durchtrittsöffnung 365 in den oberhalb der Tragfolie angeordneten Schichten bzw. Folien angeordnet, die zumindest für eine Strahlung 362 mit der vorbestimmten Amplitude und/oder Frequenz und/oder für die abgegebene Strahlung 363 durchlässig sind. Dadurch erfolgt die Aussendung des Lichtes unterhalb der schützenden Deckfolie 354, wodurch es auch möglich ist, derartige Transparenzbereiche 364 auch außerhalb des transparenten Schutzdeckels 308 in Form von verschiedenen Leuchtmustern anzubringen. Die Abgabe und Intensität des Lichts im Transparenzbereich 364 hängt von der Art des Leuchtstoffes 361, sowie von der Menge der zugeführten Energie, die in Form von Strahlungen 362 mit vordefinierbaren Wellenlängen, z.B. UV-Strahlung, Infrarotstrahlung, Wärmestrahlung bzw. Lichteinwirkung, den Leuchtstoff 361 zur Abgabe von Strahlung 363 anregen, ab.

Durch die Anordnung beispielsweise eines im Transparenzbereich 364 vorgesehenen durch kleine Ringe, Dreiecke und Quadrate schematisch angedeuteten Leuchtstoffs 361, ist es möglich, den Frequenzbereich der Strahlung 362, welche durch den Transparenzbereich 364 hindurchtreten kann und durch Wellenlinien schematisch angedeutet ist, exakt festzulegen, sodaß nur eine Strahlung 362 vorbestimmter Wellenlänge, die gegen die Aussparung 360 gerichtet ist, zum Abfragen eines Zustandes eines Speicherelementes bzw. zum Sichtbarmachen eines eingeschlossenen Teils, insbesondere eines Schmuckteils oder eines Reflexionsbereiches, Verwendung finden kann. Dadurch, daß ein Durchtritt von einer Strahlung 362 durch den Transparenzbereich 364 dann völlig unterbunden ist, wenn diese nicht die vorgewählte Wellenlänge aufweist, ist dieser Speicherzustand eines Speicherelementes bzw. der Schmuckgegenstand unter den üblichen Benutzungsbedingungen nicht sichtbar und kann beispielsweise als Wertkennzeichen oder Sicherheitsmarkierung verwendet werden.

Um diesen Effekt zu verstärken, ist es aber andererseits auch möglich, beispielsweise jede der Lagen des Grundkörpers 307 mit durch Strahlungen unterschiedlicher Frequenz bzw. Amplitude anregbaren Leuchtstoffen 361, die zur Unterscheidung als kleine Ringe, Dreiecke oder Quadrate dargestellt sind, zu versetzen. Durch diese Ausgestaltung oder Verwendung verschiedener Leuchtstoffe 361 bzw. Leuchtstoffen, die bei unterschiedlichen Frequenzen der einfallenden Strahlungen 362 zum Leuchten bzw. Fluoreszieren angeregt werden, können bestimmte Sicherheitsmerkmale in einen erfindungsgemäßen Bauteil 306 eingebaut werden bzw. ist der Bauteil für unterschiedliche Funktionen verwendbar. So ist es beispielsweise dann auch möglich, einen Transparenzbereich 364 sowohl in der Tragfolie 353 als auch in der Deckfolie 354 und, falls vorhanden, auch in der Druck- bzw. Designschicht 355 vorzusehen, die ebenfalls mit beispielsweise den der diesen nächstliegenden Schicht des Grundkörpers 307 entsprechenden Leuchtstoffen 361 versetzt sein kann. Durch eine derartige Ausgestaltung ist es nun beispielsweise möglich, diese Schicht des Grundkörpers 307 durch eine Strahlung 362 vorbestimmbarer Wellenlänge und Intensität zu bestrahlen, sodaß die Leuchtstoffe 361 zum Strahlen angeregt werden, wobei dann beispielsweise der Transparenzbereich 364 erleuchtet wird und so für einen geübten Betrachter sofort festzustellen ist, ob beispielsweise ein waagrecht einfallendes Kontrollicht an den entsprechenden senkrecht dazu angeordneten Kontrollzonen des Bauteils 306 sichtbar wird und somit eine Echtheits- bzw. Wertprüfung für den nichtinformierten Verwender nahezu unauffällig erfolgen kann. Gleicherweise ist es selbstverständlich dann auch möglich, in den einzelnen Schichten des Grundkörpers 307 entsprechende Transparenzbereiche 364 auszunehmen, sodaß auch von den darunterliegenden Schichten des mehrschichtigen Grundkörpers 307 an entsprechenden Stellen bei waagrecht einfallender Strahlung 362, diese abgegebene Strahlung 363 im Bereich der z.B. senkrecht dazu angeordneten Transparenzbereiche 364 erkannt werden kann.

Als Leuchtstoffe 361 können anorganische und/oder organische Materialien und/oder Zuschlagstoffe verwendet werden, die bei Strahlungen mit unterschiedlichen Wellenlängen oder Frequenzen zum Leuchten angeregt werden. Durch eine entsprechende Auswahl bzw. Zusammensetzung der Leuchtstoffe 361 ist die jeweilige Wellenlänge und Frequenz der Strahlung 362, die den Leuchtstoff 361 zum Leuchten anregt, einstell- bzw. vorwählbar. Als Leuchtstoffe bzw. Leuchtpigmentzusätze können sowohl fluoreszierende als auch phosphoreszierende Pigmente verwendet werden. Diese Leuchtstoffe sind eine Art Energiewandler, in dem sie die zugeführte Energie, die sie absorbieren, direkt in sichtbares Licht umwandeln. Man spricht daher auch von einem kalten Licht. Bei diesen Leuchtstoffen handelt es sich beispielsweise um Zinksulfide, Zinksilikate, Kalziumwolframat oder verschiedene Sulfide oder seltene Erden, wie z.B. Aluminate, Phosphate, Borate und Chloride. Je nach dem eingesetzten Leuchtstoff 361 bzw. dem Anteil der Leuchtstoffe, die der Tragfolie 353 bzw. Deckfolie 354 oder den einzelnen Schichten des Grundkörpers 307 zugesetzt werden, haben die Leuchtstoffe entweder keine oder eine mehr oder weniger starke Nachleuchtdauer.

Wie weiters der Fig. 26 zu entnehmen ist, kann die Decklage 322 auch im Bereich der Unterseite 315 des Grundkörpers 307 angeordnet sein. Der Aufbau der Decklage 322 an der Unterseite 315 kann z.B. im wesentlichen dem zuvor beschriebenen Aufbau der Decklage 322 an der Oberseite 314 entsprechen oder auch aus einer oder mehreren der Trag- bzw. Deckfolien 353, 354 bzw. Druck- bzw. Designschichten 355 bestehen. Zur Verbindung der Tragfolie 353 mit dem Grundkörper 307 ist hier an der Oberfläche 328 eine zusätzliche Kleberschicht 366 aufgebracht, die z.B. auf Druck oder Wärme ausreagiert und so eine innige Verbindung des Grundkörpers 307 mit der Tragfolie 353, unabhängig von den Adhäsisonseigenschaften bzw. den chemischen Reaktionen zwischen den Materialien der einzelnen Schichten der Decklage 322 bzw. der verwendeten Folien, herstellt.

Selbstverständlich ist es aber auch möglich, daß beide Decklagen 322 bei der Herstellung des Grundkörpers 307 an diesen angeformt werden. Dabei kann der Grundkörper 307 durch Spritzgießen, Spritzprägen oder durch Aufschäumen aus Kunststoffschaum geformt werden. Dadurch wird eine innige Verbindung der Decklagen 322 mit dem Grundkörper 307 und gleichzeitig eine vereinfachte Herstellung erreicht. Überraschend ist bei dieser Lösung aber vor allem auch, daß die Festigkeit des Grundkörpers 307 und gegebenenfalls der an diesen einstückig angeformten Schnallen- und Lochteile 303, 304 erhöht wird. Selbstverständlich ist es auch in diesem Fall möglich, die Decklagen 322 von ihrer Oberflächenbeschaffenheit bzw. in ihren physikalischen, mechanischen und chemischen Eigenschaften auf die verschiedenen Gegebenheiten abzustellen. So kann beispielsweise die der Haut zugewandte Decklage 322 so ausgebildet sein, daß sie den Beanspruchungen durch Körperschweiß und dgl. einen besonders hohen Widerstand entgegensetzt und andererseits die Entstehung von Allergien möglichst verhindert und einen guten Tragekomfort vermittelt. Die der Sichtseite zugewandte Decklage 322 kann dagegen mit entsprechend hoher, mechanischer Festigkeit, wie Abriebfestigkeit und Kratzfestigkeit versehen werden, die beispielsweise bei der Herstellung des Grundkörpers 307 durch Spritzguß oder ein entsprechendes Schäumverfahren aufgrund der technischen Möglichkeiten nicht realisierbar ist. So ist es möglich, durch Reck- und Streck- bzw. Härtevorgänge Kunststoffolien mit wesentlich höheren Kratzfestigkeiten auszurüsten, sodaß die der Abnutzung zugewandten Oberflächen durch die erfindungsgemäße Ausgestaltung eine hohe Widerstandsfestigkeit aufweisen können.

Die Fig. 27 zeigt eine weitere Ausführungsmöglichkeit der Decklage 322 für den Sandwichbauteil 352. Zwischen der durch die Tragfolie 353 und der durch die Deckfolie 354 gebildeten Schichte befindet sich wiederum die Druck- bzw. Designschicht 355, die aus dem Druckbild 356 mit den verschiedenen Farbschichten 357, 358, sowie der Ausgleichsschicht 359 besteht. Beidseitig der Druck- bzw. Designschicht 355 sind zusätzliche Kleberschichten 367, 368 zur Verbindung mit der Trag- bzw. Deckfolie 353, 354 angeordnet. Ebenso ist es auch möglich, wie bereits in Fig. 26 beschrieben, verschiedene Transparenzbereiche 364 in der Decklage 322 anzubringen, die bei entsprechender Anordnung von zuvor bereits im Detail beschriebenen Leuchtstoffen 361 den Durchtritt von Strahlungen 362 bzw. 363 zum und vom Grundkörper 307 durch alle Schichten der Decklage 322 hindurch ermöglicht. Selbstverständlich ist es aber auch möglich, daß diese Transparenzbereiche 364 nur bis in den Bereich der durch eine Tragfolie 353 gebildeten Schicht reichen, und bei entsprechendem Versetzen dieser Tragfolie 353 mit Leuchtstoffen 361 - symbolisch durch kleine Ringe, Dreiecke, Quadrate angedeutet - ist es möglich, durch die Tragfolie 353 eintretende Strahlung 362 durch den Transparenzbereich 364 an der Oberfläche des Bauteils 306 sichtbar zu machen. Dazu ist es beispielsweise auch möglich, daß nur die Tragfolie 353 und die Druck- bzw. Designschicht 355 mit entsprechenden Leuchtstoffen 361 versehen ist, während die Deckfolie 354 transparent ausgebildet ist und keine Leuchtstoffe aufweist, sodaß ein Eintritt von UV-Strahlung von außen her in den Bauteil 306 durch den Wegfall von Leuchtstoffen in der Deckfolie 354 unterbunden ist, während das Aufleuchten der Leuchtpigmente in der Tragfolie 353 bzw. der diese bildenden Schicht durch den transparenten Bereich der Deckfolie 354 festgestellt werden kann.

Die Fig. 28 zeigt den als Uhr 301 ausgebildeten Sandwichbauteil 352 mit seinem Bauteil 306, sowie den Schnallen- bzw. Lochteil 303, 304, die entlang einer Längsachse 369 angeordnet sind. Beidseits der Längsachse 369 befinden sich die den Bauteil 306 begrenzenden Außenflächen 370, 371, die in einem parallelen Abstand 372 zur Längsachse 369 voneinander distanziert angeordnet sind.

Die Außenflächen 370, 371 des Bauteiles 306 dienen als Anschlagflächen 373, 374 für eine diesen zugeordnete Sende- bzw. Empfangseinrichtung 375, 376. Diese Sende- und Empfangseinrichtung 375, 376 kann z.B. Bestandteil einer Kontrollanlage 377 sein, wie z.B. ein Zutrittskontrollsystem für Finnen oder ein Fahrscheinautomat. Um einen derartigen Kontrollvorgang durchführen zu können, ist im Grundkörper 307 des Bauteiles 306 eine Zwischenschicht 378 in Form einer Speichervorrichtung 379 angeordnet, die die nötigen Informationen für eine Leseeinheit 380, welche aus der Sendeeinrichtung 375 und der Empfangseinrichtung 376 besteht, enthält. Die Sende- und Empfangseinrichtung 375, 376 ist über Leitungen 381 mit einer zentralen Rechnereinheit 382 verbunden, in welcher die von der Leseeinheit 380 erfaßten Daten der Speichervorrichtung 379 ausgewertet werden, die anschließend entsprechende Signale an eine mit der Rechnereinheit 382 in Verbindung stehenden Steuereinheit 383 weitergibt, um entsprechend der Information z.B. den Zutritt zu einem Firmengebäude, einer Bank, einer Seilbahn oder Garage zu ermöglichen.

In der Sendeeinrichtung 375 sind einzelne Sendeeinheiten 384 angebracht, die in ihrer geometrischen Anordnung entsprechend den Erfordernissen der Speichervorrichtung 379 ausgerichtet sind. Zu den Sendeeinheiten 384 in der Sendeeinrichtung 375 sind in der Empfangseinrichtung 376 entsprechende Empfangseinheiten 385 angeordnet. An dieser Stelle sei bemerkt, daß in den Zeichnungen, der besseren Übersichtlichkeit wegen, die einzelnen Bauteile nur schematisch, maßstäblich verzerrt und vereinfacht dargestellt sind, um so eine bessere Übersichtlichkeit zu erhalten.

Bei der Anordnung der Zwischenschicht 378 im Grundkörper 307 des Bauteiles 306 muß darauf Bedacht genommen werden, daß ein ungehinderter Durchgang des Sendesignals von der Sendeeinrichtung 375 zur Empfangseinrichtung 376 gewährleistet ist. So ist es z.B. möglich, die Speichervorrichtung 379 entlang der Längsachse 369 beidseits des Zeigerwerks 309 zueinander distanziert im Grundkörper 307 anzubringen.

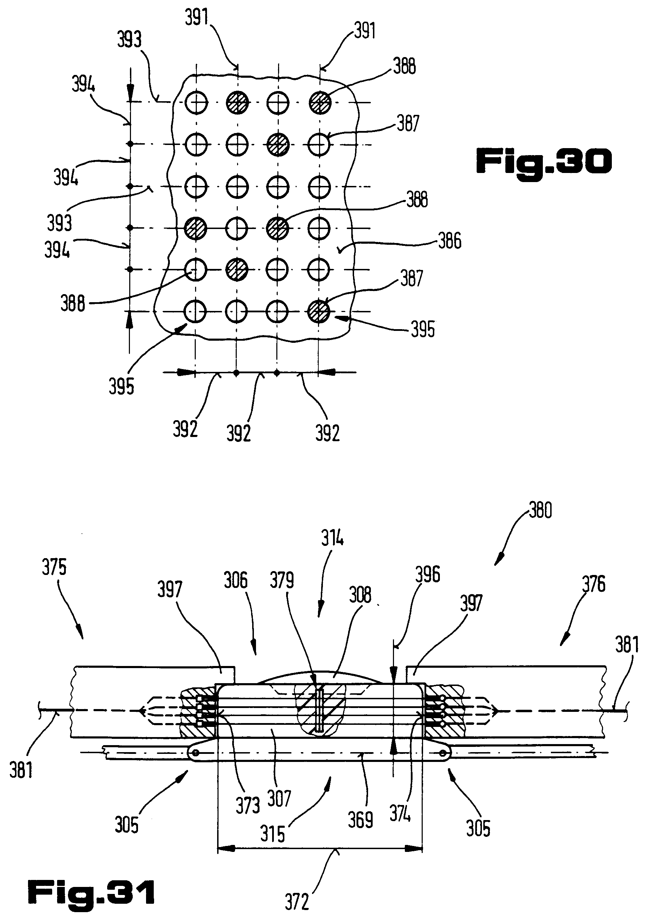

In den Fig. 29 und 30 ist ein Teilbereich der Leseeinheit 380 sowie der Speichervorrichtung 379 in vergrößertem Maßstab dargestellt, wobei für gleiche Teile gleiche Bezugszeichen verwendet werden. Die Zwischenschicht 378 der Speichervorrichtung 379 besteht im vorliegenden Ausführungsbeispiel aus einer Speicher- und/oder Programmierschicht 386, welche zwischen der Tragfolie 353 und der Deckfolie 354 angeordnet ist. In der Speicher- und/oder Programmierschicht 386 sind in einer entsprechenden Rasterteilung entsprechend der Leseeinheit 380 Aufnahmeöffnungen 387 angebracht, welche mit einem programmierbaren Material 388 befüllt sind, welches z.B. beim Auftreffen eines Programmierstrahles 389 - in Fig. 29 schematisch strichpunktiert dargestellt - für die von den Sendeeinheiten 384 ausgesandten Sendestrahlen 390 einen Durchgang in Richtung der Empfangseinheiten 385 ermöglicht oder nicht.

Im Rahmen der Erfindung sind die verschiedensten technischen Lösungen zur Programmierung der Speicher- und/oder Programmierschicht 386 möglich. So ist es beispielsweise möglich, die Aufnahmeöffnungen 387 der Speicher- und/oder Programmierschicht 386 über Lichtleiter mit den Randbereichen des Bauteiles 306 bzw. des Grundkörpers 307 zu verbinden, wiewohl es auch möglich ist, elektrische Leitungen mit entsprechenden Kontaktstellen in den Außenbereich des Bauteiles 306 zu führen. Es kann aber auch durch Ausbildung optischer Strahlengänge im Grundkörper selbst eine Übermittlung der verschiedenen Lichtsignale zum Programmieren bzw. Ablesen der Speicher- und/oder Programmierschicht 386 vorgesehen sein. Bevorzugt erfolgt die Programmierung dadurch, daß durch eine entsprechend hohe Speicher- und/oder Programmierschicht 386 die Aufnahmeöffnung bzw. das Material im Bereich der Aufnahmeöffnung seinen Trübungsfaktor ändert und von durchscheinend auf opak umschaltet Dieser ständig reversible Prozeß ermöglicht ein fortlaufendes Umändern der Programmierung in der Speicher- und/oder Programmierschicht 386.

Für dieses System können beispielsweise auch die bekannten Techniken für wiederbeschreibbare Optikal-Disks oder jegliche andere Art von optischen Speichern verwendet werden. So ist es beispielsweise auch möglich, die Abtastung der Aufnahmeöffnungen 387 in Form eines Scannervorganges mit einem einzigen Sender und einem einzigen Empfängern vorzunehmen, aber es können beispielsweise auch einem Sender eine Vielzahl von Empfänger zugeordnet sein oder umgekehrt. Wesentlich ist, daß der Schaltzustand 0 oder 1 durch die Empfangseinrichtung 376 exakt erkannt werden kann, um eine eindeutige Aussage über den Speicherzustand zu ermöglichen.

Das Programmieren der Speicher- und/oder Programmierschicht 386 kann entweder in der Sendeeinrichtung 375 oder in einer eigens dafür vorgesehenen Programmiereinrichtung erfolgen. Die rastermäßige Aufteilung der Aufnahmeöffnungen 387 in der Speicher- und/oder Programmierschicht 386 erfolgt in vertikalen Reihen 391, welche zueinander einen Abstand 392 aufweisen, sowie horizontalen Reihen 393, die in einem Abstand 394 voneinander distanziert sind. Durch die gleichmäßigen Abstände 392, 394 ergibt sich ein genau vordefiniertes Rasterbild. Wie zuvor bereits beschrieben, ist jede Aufnahmeöffnung 387 der Speicher- und/oder Programmierschicht 386 jeweils von einem eigenen Programmierstrahl 389 bzw. Sendestrahl 390 ansprechbar. Damit steht jede Aufnahmeöffnung 387 als Informationsträger 395 zur Verfügung.

Den Informationsträgern 395 in der Speichervorrichtung 379 ist in der Sendeeinrichtung 375 eine eigene Sendeeinheit 384, bevorzugt eine Sendereinheit für jeden Informationsträger 395, und in der Empfangseinrichtung 376 eine eigene Empfangseinheit 385, bevorzugt je eine für jeden Informationsträger 395, zugeordnet. Die Sendeeinheiten 384 der Sendeeinrichtung 375 können Sendestrahlen 390, wie z.B. Licht mit den verschiedensten Wellenlängen, wie Infrarot-Licht, UV-Licht oder sichtbares Licht oder Laserstrahlen aussenden. Bei der Auswahl des Sendestrahls 390 muß darauf Bedacht genommen werden, daß die einzelnen Informationsträger 395 nicht unabsichtlich umprogrammiert werden.

Die Fig. 31 zeigt die Leseeinheit 380 mit der Sende- und Emfpangseinrichtung 375, 376 sowie den Bauteil 306 in Seitenansicht und schematisch stark vereinfachter Darstellung, wobei wiederum für gleiche Teile gleiche Bezugszeichen verwendet werden. Der Grundkörper 307 des Bauteiles 306 weist zwischen Oberseite 314 und Unterseite 315 eine größere Dicke 396 auf, um genügend Platz zur Aufnahme der Speichervorrichtung 379 zu schaffen. Sowohl die Sende- als auch die Empfangseinrichtung 375, 376 weisen z.B. der Oberseite 314 des Bauteiles 306 zugewandte Anschläge 397 auf, die zur exakten Positionierung der Speichervorrichtung 379 im Bezug zur Leseeinheit 380 dienen. Um ein Verdrehen des Bauteiles 306 im Bezug auf die Leseeinheit 380 in Richtung der Längsachse 369 zu vermeiden, können Anschlagflächen 373, 374 im Abstand 372 voneinander distanziert angeordnet sein.

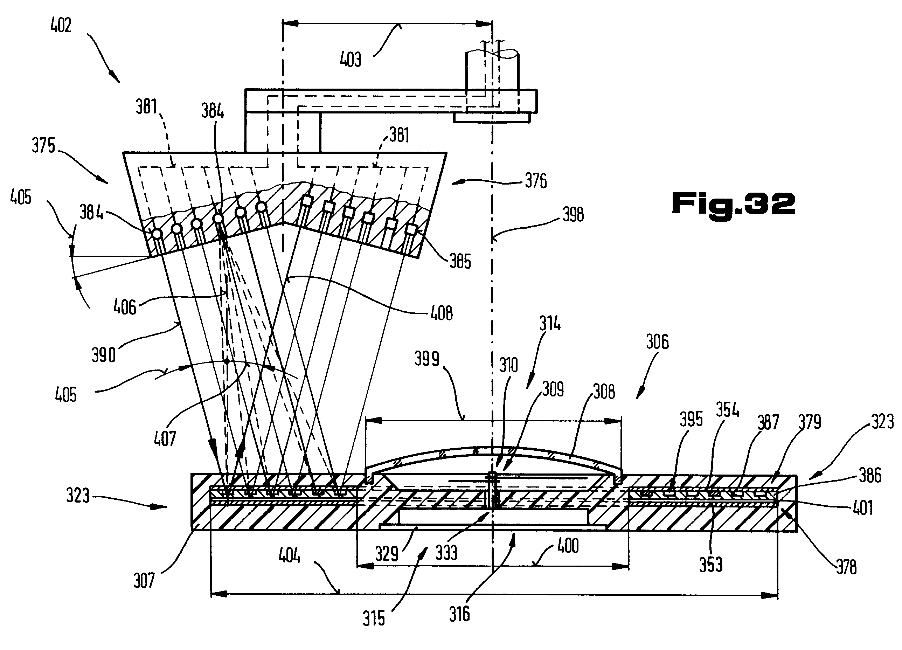

In der Fig. 32 ist eine weitere Anordnungsmöglichkeit für die Zwischenschicht 378 der Speichervorrichtung 379 im Grundkörper 307 des Bauteiles 306 dargestellt. Die Speichervorrichtung 379 ist dabei in etwa parallel zur Unterseite 315 im Grundkörper 307 angebracht und erstreckt sich vom Randbereich 323 in Richtung Mittelbereich 310. Bei dieser Ausführungsform ist die Speichervorrichtung 379 in Form eines Kreisringes symmetrisch zu einer Achse 398 ausgebildet, welche in senkrechter Richtung zur Unterseite 315 durch das Zentrum 333 des Grundkörpers 307 verläuft. Im Mittelbereich 310 des Bauteiles 306 ist schematisch der Schutzdeckel 308 für das Zeigerwerk 309 sowie der Gehäusedeckel 329 für das Uhrwerk 316 dargestellt. Dabei weist der Schutzdeckel 308 einen Durchmesser 399 auf, der bevorzugt kleiner ist, als ein Innendurchmesser 400 der kreisringförmigen Speichervorrichtung 379, um einen von der Oberseite 314 aus durchgeführten Lesevorgang nicht zu behindern.

Der Schichtaufbau der Speichervorrichtung 379 entspricht im wesentlichen dem, wie bereits in Fig. 29 beschrieben. Dabei besteht die Zwischenschicht 378 aus der der Oberseite 314 zugewandten Deckfolie 354, der darunter angeordneten Speicher- und/oder Programmierschicht 386 und der der Unterseite 315 näherliegenden Tragfolie 353. Zusätzlich zu den bereits beschriebenen Schichten ist zwischen der Tragfolie 353 und der Speicher- und/oder Programmierschicht 386 eine Reflexionsschicht 401 angeordnet. Die Reflexionsschicht 401 dient dazu, um bei einem von der Oberseite 314 her durchgeführten Lesevorgang den von der Sendeeinrichtung 375 ausgesendeten Sendestrahl 390 in Richtung der Empfangseinrichtung 376 zu reflektieren. Dadurch kann, ohne daß die Uhr 301 vom Arm des Benutzers abgenommen werden muß, der Lesevorgang durchgeführt werden. Eine Leseeinheit 402 besteht in diesem Ausführungsbeispiel aus der Sendeeinrichtung 375, sowie der Empfangseinrichtung 376, welche oberhalb der Speichervorrichtung 379 angeordnet und drehbar um die Achse 398 ausgeführt ist. Die Leseeinheit 402 bewegt sich dabei entlang einer Kreisbahn mit einem Mittenabstand 403 von der Achse 398, welcher im wesentlichen dem halben Mittel aus einem Außendurchmesser 404 und dem Innendurchmesser 400 der kreisringförmigen Speichervorrichtung 379 entspricht. Die Speicher- und/oder Programmierschicht 386 kann, wie bereits zuvor beschrieben mit entsprechenden Programmierstrahlen 389 vorprogrammiert werden, und somit stehen wieder die einzelnen Aufnahmeöffnungen 387 als Informationsträger 395 zur Verfügung. Diese sind nun wiederum z.B. für Licht durchlässig oder nicht, was wiederum zu einem entsprechenden Informationscode führt. Die Sendeeinrichtung 375 ist bei diesem Ausführungsbeispiel um einen Winkel 405 gegenüber der Fläche der Unterseite 315 verschwenkt, wodurch der ausgesendete Sendestrahl 390 ebenfalls um den Winkel 405 gegenüber einer parallel zur Achse 398 ausgerichteten Mittenachse 406 verschwenkt ist. Entsprechend dem Reflexionsgesetz, wobei Eintrittswinkel gleich Austrittswinkel ist, entspricht der Winkel 405 des eintretenden Sendestrahls 390 einem Austrittswinkel 407 des Reflexionsstrahls 408. Ist nun ein einzelner Informationsträger 395 für Licht durchlässig, so trifft der Sendestrahl 390 auf der Reflexionsschicht 401 auf und wird wie zuvor beschrieben, in dem dazugehörigen Reflexionsstrahl 408 zur Empfangseinrichtung 376 reflektiert. Bei einem für Licht nicht durchlässigen Informationsträger 395 wird der Sendestrahl 390 bereits oberhalb der Reflexionsschicht 401 abgefangen und kann nicht zur Empfangseinrichtung 376 reflektiert werden. Die Größe des Winkels 405 bzw. des Austrittswinkels 407 hängt stark von der Gestaltung und technischen Möglichkeit der Sende- bzw. Empfangseinrichtung 375, 376 ab. So kann es z.B. möglich sein, die Sende- und Empfangseinrichtung 375, 376 so nahe nebeneinander anzuordnen, sodaß sowohl der Winkel 405 als auch der Austrittswinkel 407 nahezu 0 sind.

Weiters besteht auch die Möglichkeit, in der Sendeeinrichtung 375 nur eine einzelne Sendeeinheit 384 für die Aussendung der Sendestrahlen 390 zu verwenden und diese, wie dies mit strichlierten Linien angedeutet ist, fächerförmig zu den einzelnen Informationsträger 395 der Speicher- und/oder Programmierschicht 386 auszusenden. Um nach dem Durchtritt durch die einzelnen Informationsträger 395 und der Reflexion an die Reflexionsschicht 401 wiederum in etwa parallele Reflexionsstrahlen 408 zu erhalten, ist es möglich, eventuell notwendige Korrekturlinsen anzuordnen.

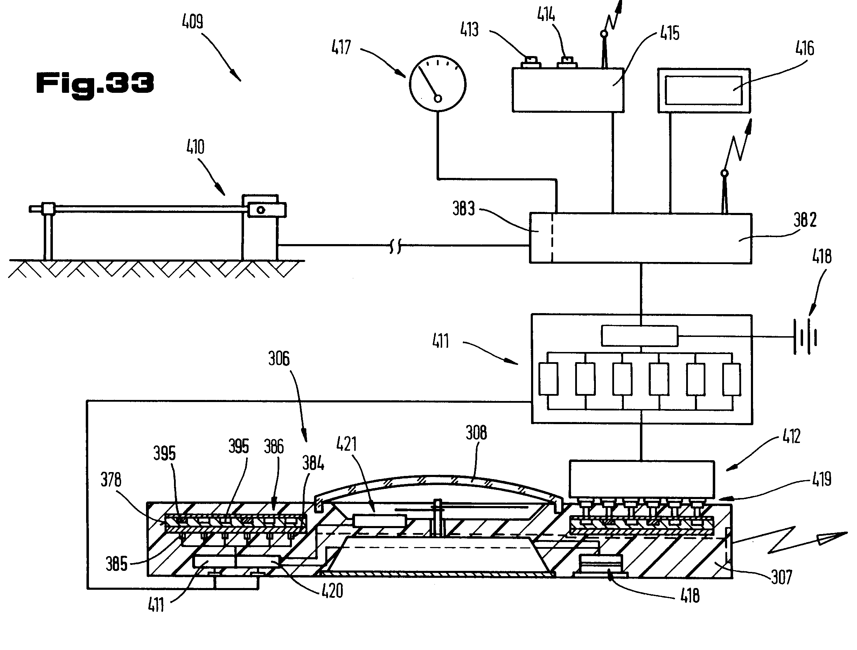

In Fig. 33 ist eine Steueranlage 409 zur Regelung des Zutrittes mittels einer Schrankenanlage 410 unter Verwendung eines erfindungsgemäßen Bauteiles 306, der in diesem Fall als Uhrgehäuse ausgebildet ist, jedoch gleichermaßen in Art eine Jetons oder in Art einer Karte oder ähnlichem ausgebildet sein kann, gezeigt.

Diese Steueranlage 409 umfaßt eine Rechnereinheit 382, an der über eine Auswerteeinheit 411 und eine Übertragungsvorrichtung 412 eine durch eine Zwischenschicht 378 gebildete Speicher- und/oder Programmierschicht 386 angeschlossen ist, die im Bauteil 306 angeordnet bzw. eingebettet ist.

In der Rechnereinheit 382 kann nunmehr ein über Einstellorgane 413, 414 einer Eingabevorrichtung 415 ein Sollkriterium definiert werden, mit welchem die Angaben in der Speicher- und/oder Programmierschicht 386 übereinstimmen müssen, um beispielsweise die Schrankenanlage 410 zu öffnen. Dies kann nun in der Art erfolgen, daß nur die Gültigkeit der gespeicherten Informationen im Bauteil 306, also beispielsweise ein Genehmigungscode, mit dem über die Einstellorgane 413, 414 vordefinierten Code überprüft wird und nur bei Übereinstimmung des Soll- und des in dem Bauteil 306 festgehaltenen Istwertes die Öffnung der Schrankenanlage 410 bewirkt wird.

Es ist selbstverständlich aber auch möglich, daß vor dem Öffnen der Schrankenanlage beispielsweise für kostenpflichtiges Parken oder dgl. ein entsprechender Betrag beim Einfahren oder beim Ausfahren durch Entwertung der entsprechenden Informationsträger 395 in der Speicher- und/oder Programmierschicht 386 abgebucht wird. Der jeweilige Zustand der Informationsträger 395, d.h. beispielsweise die noch verfügbare Punkte- bzw. Wertbonanzahl, kann auf einem Anzeigeelement 416 beispielsweise neben der Schrankenanlage oder in einem Kontrollzentrum angezeigt und/oder überprüft und/oder gespeichert werden. Gleiches gilt selbstverständlich für die Übereinstimmung zwischen einer im Bauteil 306 vorrätigen Codeinformation, wenn die Zugriffsberechtigung zusätzlich zu der Schrankenanlage 410 noch durch Überwachungspersonal zu überwachen ist.

Es ist aber auch möglich, Anzeigevorrichtungen 417 vorzusehen, mit welchen auch der Betriebszustand in der Steueranlage 409 überwacht werden kann. Die Auswertung der jeweiligen in der Speicher- und/oder Programmierschicht 386 vorrätig gehaltenen Werte bzw. deren Vergleich mit Sollwerten aus der Eingabevorrichtung 415 erfolgt in der Rechnereinheit 382, die außerhalb des Bauteiles 406 angeordnet ist und beispielsweise eine Steuereinheit 383 ansteuert, die dann das Öffnen der Schrankenanlage 410 veranlaßt. Des weiteren kann auch die Auswerteeinheit 411 einen entsprechenden Mikroprozessor oder Rechner enthalten, ebenso wie die Rechnereinheit 382.

Die gesamten vorgenannten Einheiten und Steuerelemente werden von einer Energiequelle 418 mit Energie versorgt. Über die Übertragungsvorrichtung 412 beispielsweise eine Steckeranordnung 419, können diese Informationen auf die Speicher- und/oder Programmierschicht 386 übertragen bzw. von dieser abgefragt werden. Diese Steckeranordnung 419 kann bei entsprechender Ausbildung der Übertragungsvorrichtung 412 auch zur Weiterleitung von Signalen auf lichtoptischen Weg, beispielsweise über Lichtleiter, ausgebildet sein, so daß eine direkte Beeinflussung des Schaltzustandes der Informationsträger 395 über die Übertragungsvorrichtung 412 erfolgen kann. Selbstverständlich ist es aber auch möglich, Stecker mit Kontakten zu verwenden und einen elektrischen Übertragungsweg mittels Leitungen oder drahtlos über Energiefelder zu verwenden. In diesem Zusammenhang kann es auch vorteilhaft sein, überhaupt die Rechnereinheit 382 oder eine weitere Rechnereinheit 420 im Bauteil 306 anzuordnen, um beispielsweise über diese die Sende- und Empfangseinheiten 384, 385 zur Programmierung und Abfrage der Speicher- und/oder Programmierschicht 386 direkt zu beeinflussen. Es ist auch möglich, in dem Bauteil 306 eine Auswerteeinheit 411 anzuordnen, die mit der außerhalb des Bauteiles 306 angeordneten Auswerteeinheit 411 kommuniziert, bzw. völlig unabhängig von dieser betrieben werden kann. Zum Betrieb der im Bauteil 306 vorgesehenen Rechner- und Auswerteeinheit 420 und 411 kann eine eigene Energiequelle 418 im Bauteil 306 beispielsweise eine Kleinbatterie oder dgl., vorgesehen sein.

Des weiteren ist es auch möglich, der Rechnereinheit 420 und der Auswerteeinheit 411 im Bauteil 306 ein eigenes Anzeigeelement 421 zuzuordnen, welches beispielsweise in dem durch den transparenten Schutzdeckel 308, nämlich das Uhrglas, im durchsichtbaren Bereich angeordnet werden kann.

Es sei an dieser Stelle noch darauf hingewiesen, daß für die Ausbildung der Speicher- und/oder Programmierschicht 386 und der damit zusammenwirkenden Einheiten und Elemente alle beliebigen, in den zuvor beschriebenen Ausführungsbeispielen genannten Ausführungsvarianten einsetzbar sind.

Selbstverständlich ist es auch möglich, die Speicher- und/oder Programmierschicht 386 im Bauteil 306 nicht als optische Speicher- und/oder Programmierschicht zu verwenden, sondern es kann diese Schicht ebenso als magnetische Schicht und durch Verwendung von mit magnetischen Feldern beeinflußbaren Folien gebildet sein. Die jeweilige Programmierung und Abfrage dieser Speicher- und/oder Programmierschicht 386 kann dann über entsprechende elektromagnetische Sende- und Empfangsköpfe erfolgen.

Der erfindungsgemäße Bauteil kann natürlich an Stelle des anhand der vorstehenden beschriebenen Ausführungsbeispiele des überwiegend zur Erklärung der Erfindung herangezogenen Uhrgehäuses auch durch jeden anderen beliebigen Bauteil 306 gebildet sein. So können vor allem die, in den Fig. 26 bis 33 gezeigten Ausführungsvarianten gleichermaßen im Bereich der Uhrarmbänder, die an ein derartiges Uhrgehäuse anschließen, unabhängig davon, ob sie direkt angeformt oder über Kupplungsvorrichtungen mit diesen verbunden sind, ebenso verwendet werden, wie beispielsweise im Bereich von Wertmarken, Wertkarten oder sonstigen Gebrauchsgegenständen, die durch einen erfindungsgemäßen Aufbau und eine erfindungsgemäße Ausgestaltung eine Mehrfachfunktion, beispielsweise eine Wertkartenfunktion oder ein Sicherheitsmerkmal oder eine Ausgestaltung als Zutrittskontrollelement erfahren können.

Selbstverständlich ist es auch möglich, daß der Gehäusedeckel 329 entsprechend der Ausbildung des Bauteiles 306 bzw. Grundkörpers 307, also zumindest mit einer Decklage 322 auf der Sichtseite versehen ist, welche beispielsweise mit einem mit dem Design des Grundkörpers 307 übereinstimmenden Druck- bzw. Designschicht 355 versehen sein kann.

Des weiteren ist es auch möglich, daß, wie beispielsweise in Fig. 27 zusätzlich gezeigt die Deckfolie 354 mit Vertiefungen 422 bzw. Erhöhungen 423, d.h. rauh oder glatt bzw. profiliert gegebenenfalls geprägt oder texturiert, ausgebildet sein kann. Die Form der Vertiefungen 422 bzw. der zwischen diesen verbleibenden Erhöhungen 423 kann durch beliebige Formen, beispielsweise V-förmig, stufenförmig oder dgl. ausgebildet sein. Des weiteren ist es auch möglich, diese Erhöhungen bzw. Vertiefungen 423 bzw. 422 treppenartig auszubilden, um einen räumlichen Charakter der Decklage 322 zu erhalten.

Eine derartige Ausbildung der Oberfläche der Decklage 322 kann aufjeder beliebigen Seite eines Bauteiles 306 erfolgen. Zudem ist es aber natürlich auch möglich, daß die entsprechenden Decklagen 322 bzw. die einander zugewandten Oberflächen der Tragfolie 353, der Deckfolie 354 bzw. des Grundkörpers 307 mit entsprechenden Aufrauhungen bzw. unebenen Oberflächen versehen sein kann.

Diese Aufrauhungen und unebenen Oberflächen können vor allem auch dazu verwendet werden, um eine größere Verbindungsoberfläche zwischen den aus gegebenenfalls auch aus unterschiedlichen Materialien bestehenden einzelnen Lagen bzw. Schichten des Grundkörpers 307 bzw. der Decklagen 322 herzustellen, bzw. ein den gewünschten Anwendungseigenschaften entsprechendes Aussehen an der Oberfläche zu ermöglichen.

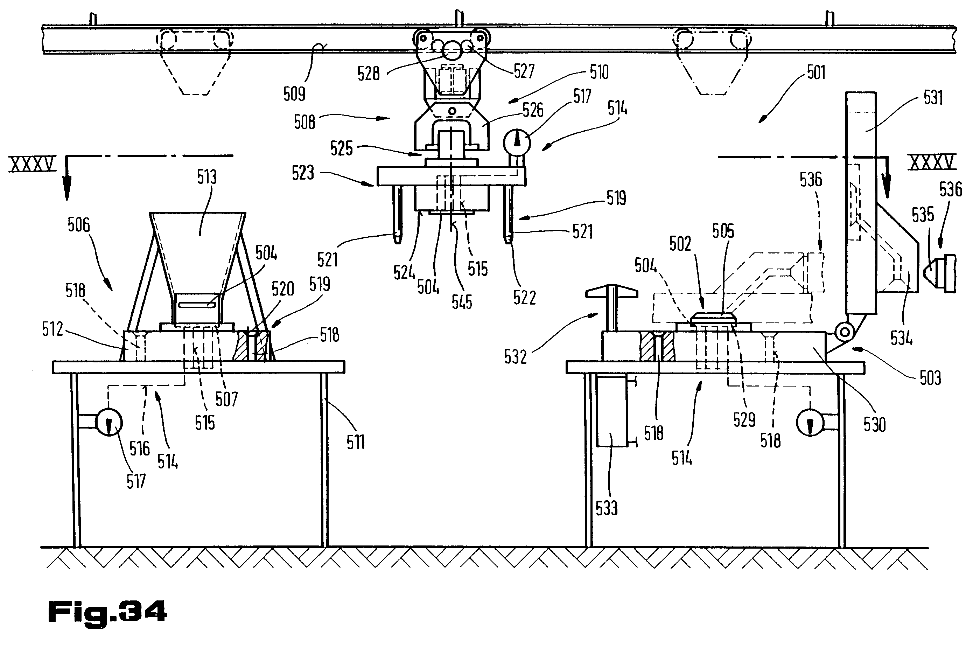

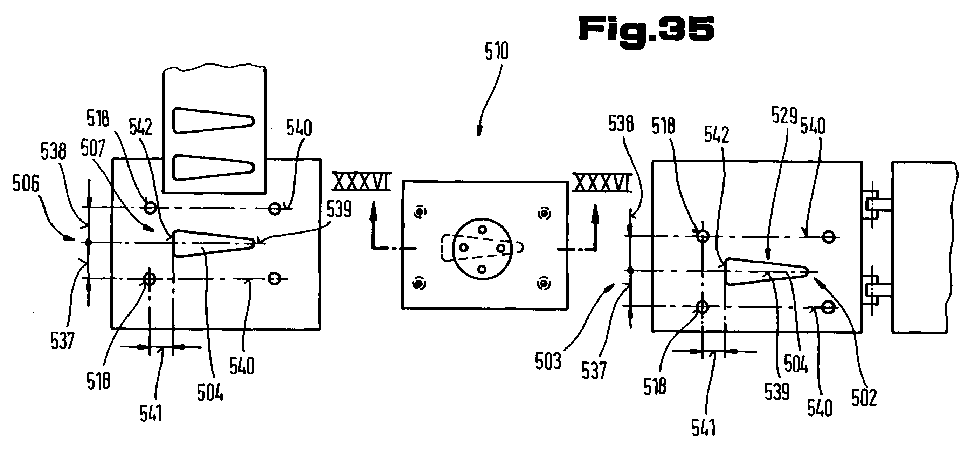

In Fig. 34 und 35 ist eine Anlage 501 zum Herstellen von Bauteilen 502, die aus einem in ein Formwerkzeug 503 eingelegten Einzelteil 504 und einem in diesen aufgespritzten Einzelteil 505 gebildet sind. Zwischen dem Formwerkzeug 503, in welchem ein fertiger Bauteil 502 zur Entnahme bereit liegt und einem in einem Entnahmebereich 506 angeordneten Entnahmenest 507 ist eine Handhabungsvorrichtung 508 angeordnet, die eine Führungsbahn 509 aufweist, welche sich vom Entnahmebereich 506 bis zum Formwerkzeug 503 erstreckt und entlang welcher eine Greifvorrichtung 510 verfahrbar angeordnet ist. Das Entnahmenest 507 im Entnahmebereich 506 weist eine auf einem Maschinentisch 511 angeordnete Führungsplatte 512 auf, auf der das Entnahmenest 507 für die aus einem Vorratsbehälter 513 zugeführten Einzelteile 504 angeordnet ist. Dem Entnahmenest 507 kann zum positionierten Festhalten der Einzelteile 504 eine Haltevorrichtung 514, die als Vakuumfixiervorrichtung ausgebildet sein kann, zugeordnet sein. Dazu sind in einem Entnahmenest 507 mehrere Luftabsaugöffnungen 515 angeordnet, die über eine Leitung 516 an einer Vakuumpumpe 517 angeschlossen sind. Des weiteren sind in der Führungsplatte 512 Führungsteile 518 einer Zentriervorrichtung 519 angeordnet. Diese Führungsteile 518 sind durch Zentrierbohrungen gebildet, die in ihrem, dem Entnahmenest 507 zugeordneten Öffnungsbereich mit einer konischen Ausbildung 520 versehen sein können. Diesen Führungsteilen 518 sind Führungsteile 521, insbesondere Führungsstifte, die bevorzugt in ihrem vorderen Endbereich mit einer konischen Ausbildung 522 versehen sein können, zugeordnet. Die Führungsteile 521 der Zentriervorrichtung 519 sind an einem Halteelement 523, welches eine Aufnahmefläche 524 für die Einzelteile 504 aufweist, vorgesehen. Dieses Halteelement 523 ist über eine Lagervorrichtung 525 in einem Gehäuse 526 der Greifvorrichtung 510 gelagert. Die Greifvorrichtung 510 ist über ein Fahrwerk 527 mittels eines Antriebes 528 aus einer in strichlierten Linien dargestellten Position im Entnahmebereich 506 in eine in strichpunktierten Linien dargestellte Position im Bereich eines Aufnahmenestes 529 des Formwerkzeuges 503 verfahrbar. Selbstverständlich kann der Antrieb 528 anstelle eines schematisch dargestellten elektrischen Antriebsmotors auch durch Pneumatik- oder Hydraulikzylinder oder beliebig andere Antriebe gebildet sein.

Der Aufnahmefläche 524 des Halteelementes 523 für den Einzelteil 504 ist ebenfalls eine Haltevorrichtung 514 zugeordnet, die wiederum durch Luftabsaugöffnungen 515 gebildet ist, die über Leitungen mit einer Vakuumpumpe 517 verbunden sind.

Zur Herstellung der Bauteile 502 dient das Formwerkzeug 503, welches eine Aufspannplatte 530, einen Formdeckel 531 und eine Verschlußvorrichtung 532 aufweist. Mit der Verschlußvorrichtung 532 wird während des Einbringens eines flüssigen Kunststoffmaterials, beispielsweise eines Polyvinylchlorides (PVC) oder jedes anderen beliebigen Kunststoffmaterials wie ABS, Polyäthylen oder auch von Kunststoffschäumen, wie beispielsweise Polyurethan, der Formdeckel 531 gegen die Aufspannplatte 530 gedrückt. Dazu weist die Verschlußvorrichtung 532 einen Schließantrieb 533 auf. Die Schließkraft des Schließantriebes 533 muß derart bemessen sein, daß die beim Einspritzen des Kunststoffes in den Formhohlraum auftretenden Druckbelastungen bzw. die beim Ausreagieren, insbesondere der Kunststoffschäume, entstehenden Druckkräfte nicht in der Lage sind, den Formdeckel 531 von der Aufspannplatte 530 abzuheben. Das Einbringen des Kunststoffes erfolgt nach dem Schließen des Formdeckels 531 über einen Kanalstutzen 534 in dem ein Austragkanal 535 einer Spritzgießmaschine 536, von der nur das den Austragkanal 535 tragende Ende schematisch angedeutet ist, angeschlossen wird. Der Austragkanal 535 ist relativ gegenüber dem Formwerkzeug 503 verstellbar, so daß das Öffnen des Formdeckels 531 und der Zugang der Handhabungsvorrichtung 508 bzw. des Halteelements 523 zum Aufnahmenest 529 nicht behindert wird.

Um nun sicherzustellen, daß der im Entnahmenest 507 aufgenommene Einzelteil 504 lagegerecht und positionsgenau im Aufnahmenest 529 positioniert wird, sind die in der Aufspannplatte 530 angeordneten Führungsteile 518 mit den in der Führungsplatte 512 angeordneten Führungsteilen 518 in Übereinstimmung.

Wie besser aus Fig. 35 zu ersehen ist, ist die Lage des Entnahmenestes 507 und des Aufnahmenestes 529 bezogen auf die zumindest drei, im vorliegenden Fall vier Führungsteile 518 gleich. Dies bedeutet, daß Seitenabstände 537, 538 zwischen einer Symmetrieachse 539 im Bereich des Entnahmenestes 507 und einer Geraden 540 die die Achsen der parallel zu der Symmetrieachse 539 angeordneten Führungsteile 518 verbindet, den Seitenabständen 537, 538 zwischen der Symmetrieachse 539 und den Geraden 540 im Bereich des Aufnahmenestes 529 identisch sind. Gleichermaßen ist auch ein Längsabstand 541 zwischen den Führungsteilen 518 und einer Stirnkante 542 im Bereich des Entnahmenestes 507 und des Aufnahmenestes 529 identisch.

Diese exakt gleiche Ausrichtung des Entnahmenestes 507 und des Aufnahmenestes 529 unter Bezugnahme auf die Führungsteile 518 der Zentriervorrichtung 519 bewirkt nunmehr, daß bei entsprechend exakter Vorpositionierung des Einzelteils 504 und bei Beibehaltung dessen Position während der Manipulation vom Entnahmenest 507 zum Aufnahmenest 529 dieses in der exakt gleichen Position wieder abgelegt wird, sodaß Manipulationen zur Lageanpassung des Einzelteils 504 im Aufnahmenest 529 zuverlässig vermieden sind.

Diese Lösung hat den Vorteil, daß in einem von der Spritzgießmaschine 536 distanzierten Bereich die notwendigen Vorrichtungen aufgebaut bzw. Bedienungspersonal beschäftigt werden kann, welches eine der Positioniergenauigkeit entsprechende Positionierung der Einzelteile 504 im Entnahmenest 507 vornehmen können.

Um nun ein beschädigungsfreies Aufsetzen des Halteelements 523 auf die Führungsplatte 512 bzw. das Entnahmenest 507 im Entnahmebereich 506 oder auf die Aufspannplatte 530 bzw. das Aufnahmenest 529 im Bereich des Formwerkzeuges 503 zu ermöglichen, bedarf es einer exakten Positionierung der Greifvorrichtung 510.

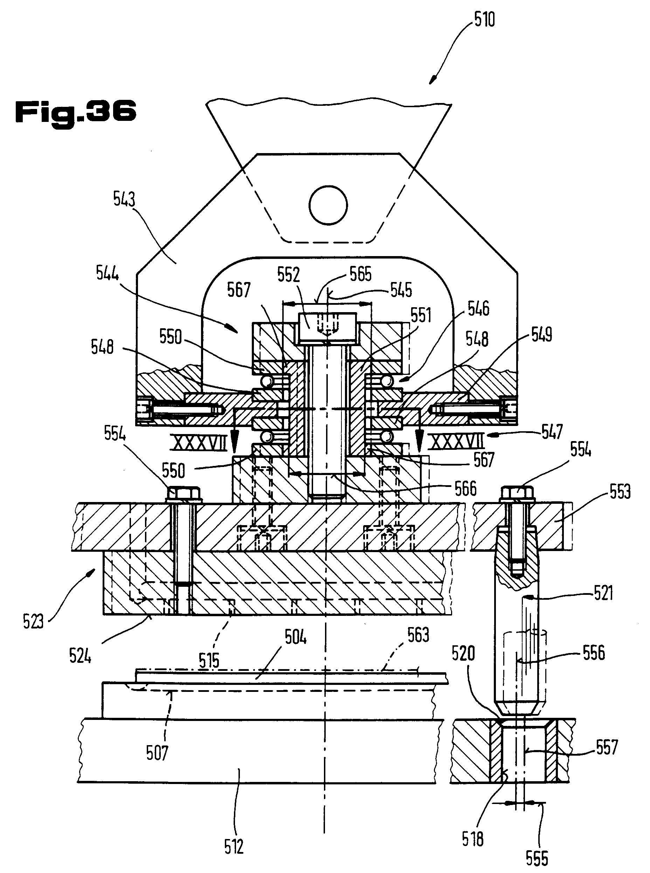

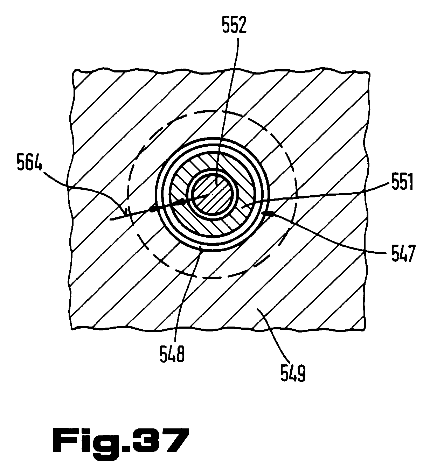

Wie in den Fig. 36 und 37 gezeigt, ist vor allem um die Toleranz des Antriebes 528 bzw. das Spiel in der Greifvorrichtung 510 auszugleichen, zwischen einem Gehäuse 543 der Greifvorrichtung 510 und dem Halteelement 523 eine Lagervorrichtung 544 vorgesehen, die in einer zur Aufnahmefläche 524 parallelen Ebene eine schwimmende Halterung des Halteelements 523 gegenüber dem Gehäuse 543 ermöglicht. Vor allem soll eine Verstellung des Halteelementes 523 in zu einer Achse 545 des Halteelements 523 radialer Richtung, die auch als Schwenkachse ausgebildet sein kann, erreicht werden.

Diese schwimmende Lagerung bzw. radiale Verstellbarkeit des Halteelements 523 in zur Achse 545 radialer Richtung wird im vorliegenden Ausführungsbeispiel dadurch erreicht, daß zwei in Richtung der Achse 545 voneinander distanzierte Kugellager 546, 547 angeordnet sind, deren einander zugewandte Innenringe 548 in einem Stützring 549 des Gehäuses 543 spielfrei gehaltert, bevorzugt eingepreßt sind. Die voneinander abgewendeten Außenringe 550 der Kugellager 546, 547 sind dagegen in einer Führungshülse 551 eingespannt, bevorzugt ebenfalls eingepreßt. Die Führungshülse 551 ist über eine Spannschraube 552 spielfrei am Halteelement 523 befestigt. Das Halteelement 523 weist seinerseits eine Zentrierplatte 553 auf, auf der über Schraubverbindungen 554 die Aufnahmefläche 524 befestigt ist, in der die Luftabsaugöffnungen 515 für die Haltevorrichtung 514 angeordnet sind. Der Aufnahmefläche 524 sind unter exakter Positionierung die Führungsteile 521 zugeordnet, die in der Zentrierplatte 553 ebenfalls über Schraubverbindungen 554 spielfrei gehaltert sind.

Soll nun das Halteelement 523 zur Aufnahme eines Einzelteils 504 auf ein Entnahmenest 507 auf der Führungsplatte 512 abgesenkt werden und ist dabei das Gehäuse 543 der Greifvorrichtung 510 nicht völlig exakt ausgerichtet, so kommt es beispielsweise zu einem schematisch gezeigten Versatz 555 zwischen einer Symmetrieachse 556 des Führungsteils 521, der mit der Zentrierplatte 553 bewegungsverbunden ist, und einer Symmetrieachse 557 des Führungsteiles 518 in der Führungsplatte 512. Um zu verhindern, daß über elektronische Steuerungen, Meßwertgeber und dgl. dieser Versatz 555 durch ein Verfahren der Greifvorrichtung 510 mit dem Antrieb 528 ausgeglichen werden muß, wird vielmehr durch das Eintauchen des Führungsteils 521 in den durch eine Zentrierbohrung gebildeten Führungsteil 518 das Halteelement 523 durch Ausnützung des Radialspiels in den Kugellagern 546, 547 soweit gegenüber dem Gehäuse 543 der Greifvorrichtung 510 verlagert, bis die Symmetrieachsen 556 und 557 fluchten und der durch einen Führungsstift gebildete Führungsteil 521 in dem durch eine Zentrierbohrung gebildeten Führungsteil 518 ohne Verkantung eingeführt werden kann. Wesentlich ist dabei, daß trotz dem Ausgleich des Versatzes 555 eine planparallele Lage der Aufnahmefläche 524 zur Führungsplatte 512 beibehalten bleibt und somit ein verkantungsfreies Auflegen der Aufnahmefläche 524 auf den Einzelteil 504 erreicht wird. Beim dargestellten Ausführungsbeispiel handelt es sich bei dem Einzelteil 504 um einen ebenflächigen Bauteil. Dies ist jedoch nicht zwingend, sondern es kann vielmehr wie nachfolgend anhand eines weiteren Ausführungsbeispiels gezeigt wird, der Einzelteil 504 bereits in einer räumlich verformten Lage von dem Halteelement 523 aufgenommen werden.

Diese Relativverstellung des Halteelementes 523 bis in den Bereich der Spannschraube 552 ist durch strichlierte Linien schematisch angedeutet.

Dieser Spielausgleich kann sowohl wie anhand der vorliegenden Darstellung beschrieben im Bereich des Entnahmenestes 507 im Entnahmebereich 506, aber selbstverständlich auch in gleicher Art im Bereich des Aufnahmenestes 529 des Formwerkzeuges 503 stattfinden, wodurch in jedem Fall sichergestellt ist, daß der aufgenommene Einzelteil 504 in jener exakten Position zu den Führungsteilen 521 in welcher er aufgenommen wurde unter Bezug auf die Führungsteile 518 im Formwerkzeug 503 bzw. Aufnahmenest 529 abgelegt wird.

Die Anzahl der zusammenwirkenden Führungsteile ist von der gewünschten Genauigkeit abhängig, jedoch werden bevorzugt zumindest zwei Führungsteile 518 bzw. 521 und gegebenenfalls auch drei oder mehr Paare von Führungsteilen 518 und 521 vorgesehen, um in der Ebene der Aufnahmefläche 524 eine eindeutige Ausrichtung des Einzelteils 504 zu ermöglichen.

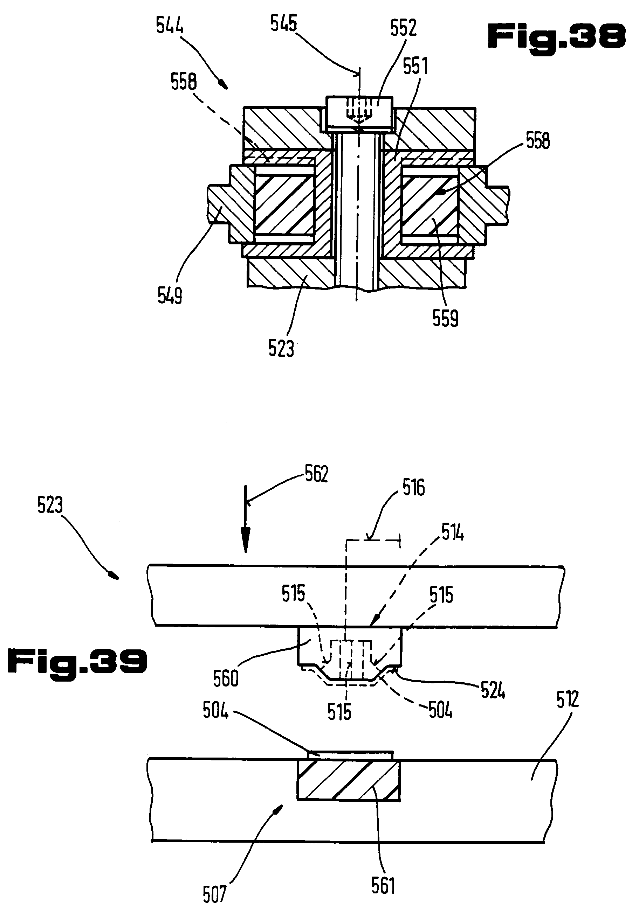

In Fig. 38 ist eine andere Ausführungsvariante einer Lagervorrichtung 544 zwischen dem Stützring 549 und dem Halteelement 523 gezeigt. Dazu ist in der Führungshülse 551, die über die Spannschraube 552 mit dem Halteelement 523 bewegungsverbunden ist, ein elastisch verformbares Element 558, insbesondere ein in radialer Richtung elastisch verformbarer Kunststoffring 559 angeordnet. Während in Längsrichtung der Achse 545 der Spannschraube 552 eine spielfreie Führung zwischen dem Stützring 549 und der Führungshülse 551 gegeben ist, ist in radialer Richtung zur Achse 545 durch die Verformung des Elementes 558 bzw. des Kunststoffringes 559 eine allseitige Relativbewegung des Halteelements 523 gegenüber dem Stützring 549 bzw. dem Gehäuse 543 möglich.

Selbstverständlich ist es auch möglich, anstelle des Kunststoffringes 559 auch mehrere einzelne elastisch verformbare Elemente 558 über den Umfang der Führungshülse 551 verteilt anzuordnen. Es können aber auch beliebig andere elastisch verformbare Führungselemente vorgesehen sein.

Der Kunststoffring 559 hat aber den Vorteil, daß nach dem Lösen der Führungsverbindung zwischen den Führungsteilen 518 und 521 das Halteelement 523 wieder in eine zentrische Lage gegenüber der Greifvorrichtung 510 bzw. dem Stützring 549 rückverstellt wird.

So sollte es, vor allem dann, wenn die Einzelteile 504 beim Aufnehmen aus dem Entnahmenest 507 bzw. bei dem Ablegen in das Aufnahmenest 529 räumlich verformt werden, auch möglich sein - wie in den strichlierten Linien angedeutet - in Richtung der Achse 545 ein weiteres elastisches Element zwischen dem Stützring 549 und der Führungshülse 551 anzuordnen, sodaß auch zumindest eine gewisse elastische Nachstellbarkeit des Halteelements 523 gegenüber dem Gehäuse 543 der Greifvorrichtung 510 erreicht wird.

In Fig. 39 ist anhand einer vereinfachten schematischen Darstellung gezeigt, daß der einzulegende Einzelteil 504 beispielsweise beim Aufnehmen aus dem Entnahmenest 507 oder bei der Ablage in das Aufnahmenest 529 räumlich verformt werden kann. Dazu ist es möglich, daß die Aufnahmefläche 524 als räumlich verformter Stempel 560 ausgebildet ist, in dessen Oberflächenbereich die Luftabsaugöffnungen 515 der Haltevorrichtung 514 münden, die mit der Leitung 516 verbunden sind. Das Entnahmenest 507 für den Einzelteil 504 ist dabei mit einer elastisch nachgiebigen Einlage 561 versehen, auf der der Einzelteil 504 aufliegt. Wird nun das Halteelement 523 in Richtung eines Pfeiles 562 bzw. der Führungsplatte 512 abgesenkt, so wird mit dem Stempel 560 der Einzelteil 504 gegen den Widerstand der elastisch verformbaren Einlage 561 verformt und in diese hineingedrückt und legt sich an die räumlich gekrümmte Aufnahmefläche 524 des Stempels 560 an, sodaß er die in der Zeichnung gezeigte, strichlierte Position einnimmt. In dieser Position wird der Einzelteil 504 mittels der Haltevorrichtung 514, die beispielsweise die notwendige Haltekraft über ein Vakuum aufbringen kann, gehalten und in dieser gewünschten Position beispielsweise im Aufnahmenest 529 abgelegt.

In gleicher Weise ist es selbstverständlich auch möglich, daß der Einzelteil 504 nur in seinem Mittelbereich erfaßt wird und die Randzonen zumindest in gewissen Bereichen derselben lose gehalten sind und der Einzelteil 504 beim Einsetzen in das Aufnahmenest 529 durch die Ausbildung des Stempels 560 im Zusammenwirken mit der Ausbildung des Aufnahmenestes 529 in die gewünschte Form verformt und in dieser gehalten wird.

Schließlich ist es im Rahmen der Erfindung auch ohne weiteres möglich, anstelle der Haltevorrichtung 514 den Einzelteil 504, wie in Fig. 36 mit strichpunktierten Linien angedeutet, mit einer Kleberschicht 563 zu versehen, die auch als Doppelklebeband ausgebildet sein kann, so daß beim Aufsetzen des Halteelements 523 auf den Einzelteil 504 durch die Haftkraft der Kleberschicht 563 der Einzelteil 504 an der Aufnahmefläche 524 fixiert wird. Die Haftkraft dieser Kleberschicht 563 ist in diesem Fall dann so zu bemessen, daß sie geringer ist, als die im Aufnahmenest 529 mit der dort vorgesehenen Haltevorrichtung 514 aufgebrachte Haltekraft, sodaß der Einzelteil 504 von der Aufnahmefläche 524 ohne Zerstörung der Oberfläche des Einzelteils 504 bzw. der Aufnahmefläche 524 von dieser abgenommen werden kann.

Gleichermaßen ist es aber auch möglich, eine derartige Kleberschicht 563 zum Positionieren der Einzelteile im Entnahmenest 507 bzw. im Aufnahmenest 529 vorzusehen.

Bei den Einzelteilen 504 kann es sich um die verschiedensten Materialien, wie beispielsweise unterschiedliche Folien aus Natur- oder Kunstmaterialien, wie beispielsweise Leder, Stoff, Kunststoffolien und -körper oder dgl. handeln. Selbstverständlich können die Einzelteile 504 bereits aus mehreren aneinandergefügten Lagen in Form von Sandwichelementen oder dgl. bestehen. Auch kann die Handhabungsvorrichtung bzw. das Positionierverfahren nicht nur zum Einlegen der Einzelteile 504 in Aufnahmenester 529 zum nachfolgenden Hinterspritzen oder Hinterschäumen mit Kunststoffmaterialien sondern auch zum Aufkleben von weiteren Schichten oder Einbringen von zusätzlichen Materialien im Zug von anderen Bearbeitungs- bzw. Montageverfahren verwendet werden.

Bevorzugt ist die Handhabungsvorrichtung und das Positionierverfahren in Verbindung mit der Herstellung von Uhrarmbändern gemäß der EP 0 199 708 A1 verwendbar.

Wie vorstehend, insbesondere an Hand der Fig. 34 bis 37 gezeigt, wird ein Radialspiel 564 - am besten aus Fig. 37 ersichtlich - zwischen der Führungshülse 551 und dem Stützring 549 dadurch geschaffen, daß die Innenringe 548, also die einander unmittelbar benachbarten Stützplatten der Kugellager 546, 547, die als kreisringförmige Scheibe ausgebildet sind, einen Innendurchmesser 565 aufweisen, der größer ist, als ein Außendurchmesser 566 der Führungshülse 551. Diese Führungshülse 551 ist in den beiden Endbereichen mit einem über den Außendurchmesser 566 vorspringenden Bund 567 versehen, der in etwa den gleichen Durchmesser aufweist, wie der Innendurchmesser 565 der Außenringe 550 bzw. Innenringe 548. Damit werden die Außenringe 550, also die voneinander abgewandten Stützplatten der beiden Kugellager 546 und 547 lagefixiert, insbesondere durch Aufpressen auf diesen umlaufenden Bund 567 gehalten, wogegen die Innenringe gegenüber dieser Führungshülse 551 aufgrund ihres Radialspiels 564 bedingt durch den größeren Innendurchmesser 565 gegenüber dem Außendurchmesser 566 der Führungshülse 551 freigestellt sind.

Bedingt durch dieses Radialspiel 564 kann sich die Führungshülse 551 mit dem darauf angeordneten Halteelement 523 in radialer Richtung gegenüber dem Gehäuse 543 der Greifvorrichtung 510 verlagern, wodurch ein Ausgleich von konstruktionsbedingten Spielen beim Aufsetzen des Halteelementes 523 auf die Führungsplatte 512 ausgeglichen werden kann.

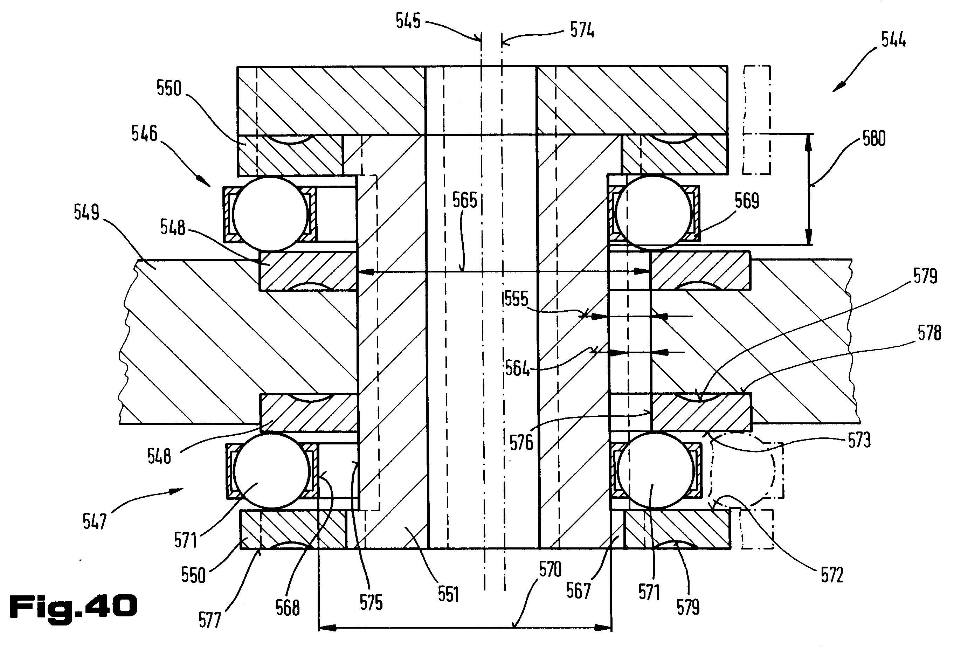

Wie nun besser in der vergrößerten Darstellung der Lagevorrichtung 544 in Fig. 40 gezeigt ist, weist auch eine Öffnung 568 im Käfig 569 der Kugellager 546 und 547 einen Innendurchmesser 570 auf, der im wesentlichen dem Innendurchmesser 565 der Außenringe 550 und Innenringe 548 entspricht. Um nun eine beliebige Verlagerung der im Käfig 569 gelagerten Kugeln 571 zu ermöglichen, weisen die Außenringe 550 und Innenringe 548 auf ihren den Kugeln 571 zugewandten Oberflächen 572 und 573 eine ebenflächige Ausbildung auf. Damit ist es möglich, daß die Führungshülse 551 gegenüber dem Stützring 549 um den maximalen Versatz 555 verstellt wird, der dem doppelten Ausmaß des Radialspiels 564 bei konzentrischer Lage der Führungshülse 551 gegenüber dem Stützring 549 entspricht. Dies bedeutet, daß in der zentralen Ruhestellung bei der eine Achse 545 der Führungshülse 551 mit einer Mittelachse 574 des Stützrings 549 deckungsgleich verläuft und sich somit die Führungshülse 551 in der in strichlierten Linien eingezeichneten Position befindet, in radialer Richtung über den gesamten Umfang zwischen einer Anschlagfläche 575 der Führungshülse 551 und einer umlaufenden Stirnseite 576 der Innenringe 548 das gleiche Radialspiel 564 vorliegt.

Wesentlich ist dabei, daß das Radialspiel 564 derart bemessen sein muß, daß bei extremer Seitenverstellung bzw. radialer Verschiebung der Führungshülse 551 gegenüber dem Stützring 549 die Kugeln 571 nicht über den Rand der Innen- bzw. Außenringe 548, 550 hinausbewegt werden.

Da sogenannte Axialrillenkugellager im Handel zu relativ günstigen Preisen als Massenprodukt verfügbar sind, können in vorteilhafter Weise für die erfindungsgemäße Ausbildung derartige axiale Rillenkugellager für die Kugellager 546, 547 dann verwendet werden, wenn eine üblicher Weise den Kugeln 571 zugewandte Lauffläche 577, 578 der Außen- bzw. Innenringe 550, 548 mit der darin angeordneten Rille 579 auf der von den Kugeln 571 abgewendeten Seite angeordnet wird und somit die normalerweise von den Kugeln 571 abgewendeten Oberflächen 572 und 573, die völig glatt und ohne rillenartige Vertiefung ausgebildet sind, den Kugeln 571 zugeordnet werden.

Damit ist eine Verschiebung der Kugeln 571 ohne Verhinderung des Rollwiderstandes in allen beliebigen Raumrichtungen auf diesen Oberflächen 572 und 573 möglich. Gleichzeitig wird dadurch eine kostengünstige und aufgrund der hohen Qualität derartiger Massenprodukte betriebssichere Ausführungsform erreicht.

Die der in der vorliegenden Figur gezeigten Extremstellung der Führungshülse 551 gegenüberliegende Extremstellung ist zusätzlich mit strichpunktierten Linien für die Funktion des Käfigs 569 bzw. der Außenringe 550 in der rechten Hälfte der Fig. 40 eingetragen.

Selbstverständlich ist es aber auch möglich, den Bund 567 mit einer Breite 580 auszustatten, sodaß beispielsweise auch der Käfig 569 der Kugellager 546, 547 bewegungsfest auf der Führungshülse 551 geführt bzw. aufgepreßt ist. Sollte ein Innendurchmesser 570 des Käfigs 569 größer sein, als der Außendurchmesser der Führungshülse, der den Innendurchmesser 565 der Außenringe 550 entspricht, so ist es auch möglich, daß der Bund 567 im Bereich des Käfigs 569 einen größeren Außendurchmesser aufweist, um diesen spielfrei auf der Führungshülse 551 zentriert zu halten.

Selbstverständlich ist es aber auch möglich, Standardlager zu verwenden, die als Innenringe 548 und Außenringe 550 völlig glatte, ebenflächige, gehärtete Scheiben bzw. Kreisringscheiben aufweisen.

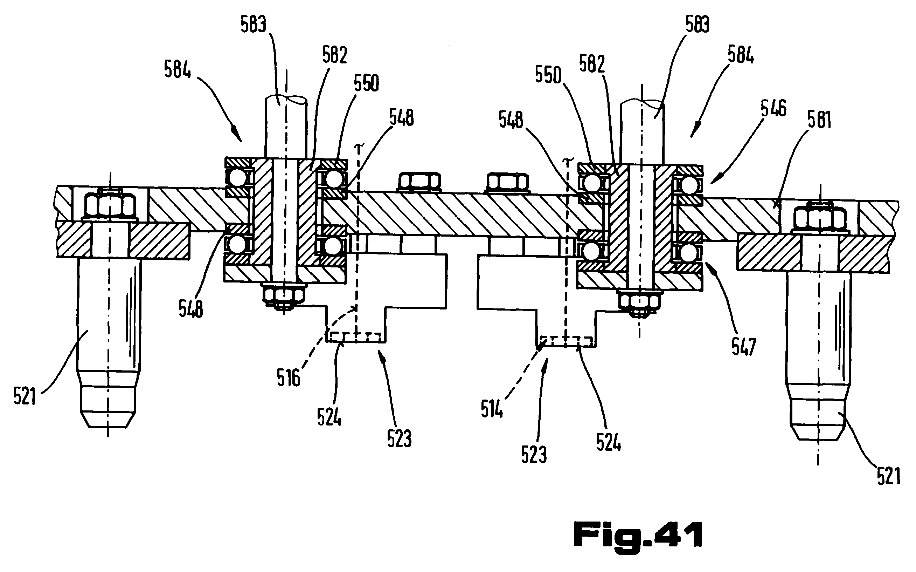

In Fig. 41 ist eine weitere Ausführungsvariante gezeigt, bei der zwei Halteelmente 523 auf einem gemeinsamen Tragrahmen 581 angeordnet sind, auf welchem auch die Führungsteile 521 befestigt sind. Der Tragrahmen 581 lagert seinerseits die Innenringe 548 der Kugellager 546, 547, wogegen die auf einer Führungshülse 582 aufgepreßten bzw. spielfrei aufgesetzten Außenringe 550 über Haltezapfen 583 mit dem Gehäuse 543 der Greifvorrichtung 510 verbunden sind. Die Außenringe 550 und Innenringe 548 sind auch in diesem Ausführungsbeispiel, wie bereits zuvor beschrieben, ebenflächig und glatt ausgebildet.

Diese Ausbildung ermöglicht, daß auch mehrere Halteelemente 523 bzw. ein Halteelement für einen großen Einzelbauteil 504 unter Ausnützung der erfindungsgemäßen Vorteile in einem Arbeitsgang zentriert werden können, wobei auch Kippmomente oder exzentrische Verzwängungen in jedem Fall sicher vermieden werden und die distanzierte Abstützung die Gefahr von Verzwängungen bei Verkantungen der Halteelemente 523 gegenüber der Verwendung bei nur einer Lagervorrichtung anstelle von zwei Lagervorrichtungen 584, wie im vorliegenden Ausführungsbeispiel gezeigt, verringert wird.

Damit können auch höhere Vertikalkräfte, die beim Ausrichten der Führungsteile 521 in die in der Führungsplatte 512 angeordneten Führungsteile 518 auftreten, ohne daß durch eventuell auftretende Verkantungen Beschädigungen der Lagervorrichtung 584 befürchtet werden müssen, aufgenommen werden.

Die Ausbildung der Haltevorrichtung 514 mit den Luftabsaugöffnungen 515 und die Verbindung über Leitungen 516 mit der Vakuumpumpe 517 kann, wie bereits zuvor beschrieben, erfolgen.

Weiters ist es im Rahmen der Erfindung auch möglich, für die einzelnen Schichten und Lagen die verschiedensten vorstehend beschriebenen Materialien wechselweise einzusetzen, um gewünschte optische bzw. festigkeitstechnische Effekte und auch beliebige Kombinationen aus den zuvor beschriebenen Merkmalen zu erzielen.

Selbstverständlich können die einzelnen vorstehend beschriebenen Ausführungsbeispiele und die in diesen Ausführungsbeispielen gezeigten Varianten und unterschiedlichen Ausführungen jeweils für sich eigenständige erfinderische Lösungen bilden und beliebig miteinander kombiniert werden.

Abschließend sei der Ordnung halber darauf hingewiesen, daß zum besseren Verständnis der Funktion viele Teile schematisch und unproportional vergrößert dargestellt sind.

## Patentansprüche

1. Mehrlagiger Bauteil, insbesondere für Formteile, mit einer Trägerschicht (110, 127) und einer Deckschicht (111, 124), die miteinander verbunden sind, dadurch gekennzeichnet, daß die Trägerschicht (110, 127) und die Deckschicht (111, 124) durch Kunststoffolien gebildet sind und die Trägerschicht (110, 127) als Schutzschicht ausgebildet ist und eine Beständigkeit gegenüber Temperatur- und/oder Scher- und/oder Druckbeanspruchung wie die Deckschicht (111, 124) aufweist und daß die Trägerschicht (110, 127) mit der Deckschicht (111, 124) oder einer zwischen der Deckschicht (111, 124) und der Trägerschicht (110, 127) angeordneten Zwischenschicht (115, 130) vollflächig zu einem einteiligen Folienverbund (118, 119) verbunden ist.

2. Bauteil nach Anspruch 1, dadurch gekennzeichnet, daß die Trägerschicht (110, 127) eine höhere Beständigkeit gegenüber Temperatur- und/oder Scher- und/oder Druckbeanspruchung aufweist als die Deckschicht (111, 124).

3. Bauteil nach Anspruch 1 oder 2, dadurch gekennzeichnet, daß die Zwischenschicht (115, 130) durch eine Zwischenfolie bzw. durch ein Druckbild (114) bzw. eine Farbschicht (112, 113) gebildet ist.

4. Bauteil nach einem oder mehreren der vorhergehenden Ansprüche dadurch gekennzeichnet, daß die Trägerschicht (110, 127) bei einer über der Raumtemperatur liegenden Temperatur eine hohe Zähigkeit, insbesondere einen höheren Dehnungskoeffizienten aufweist als die Deckschicht (111, 124) und/oder die Zwischenschicht (115, 130) bzw. -folie.

5. Bauteil nach einem oder mehreren der vorhergehenden Ansprüche, dadurch gekennzeichnet, daß der Dehnungskoeffizient der Deck-, Zwischen- und/oder Trägerschicht (111, 124; 115, 130; 110, 127) von der Deckschicht (111, 124) in Richtung eines Tragkörpers (108, 217) des Formteils abnimmt.

6. Bauteil nach einem oder mehreren der vorhergehenden Ansprüche, dadurch gekennzeichnet, daß die Zwischenschicht (115, 130) durch eine Lage aus Textil oder ein Gitter bzw. Netz, insbesondere aus Metall, gebildet ist.

7. Bauteil nach einem oder mehreren der vorhergehenden Ansprüche, dadurch gekennzeichnet, daß die Zwischenschicht (115, 130) durch eine Lage aus Papier gebildet ist.

8. Bauteil nach einem oder mehreren der vorhergehenden Ansprüche, dadurch gekennzeichnet, daß die Zwischenschicht (115, 130) zumindest auf einer Seite bedruckt ist.

9. Bauteil nach einem oder mehreren der vorhergehenden Ansprüche, dadurch gekennzeichnet, daß die Deckschicht (111, 124) und/oder die Zwischenschicht (115, 130) transparent ist.

10. Bauteil nach einem oder mehreren der vorhergehenden Ansprüche, dadurch gekennzeichnet, daß die Verbindung zwischen der Deckschicht (111, 124) und der Trägerschicht (110, 127) bzw. der Zwischenfolie oder -schicht (115, 130) über eine Kleberschicht (129) erfolgt.

11. Bauteil nach einem oder mehreren der vorhergehenden Ansprüche, dadurch gekennzeichnet, daß die Zwischenfolie bzw. -schicht (115, 130) aus mehreren Lagen gebildet ist.

12. Bauteil nach einem oder mehreren der vorhergehenden Ansprüche, dadurch gekennzeichnet, daß zur Bildung des Formteils die Trägerschicht (110, 127) über einen Anformvorgang mit dem Tragkörper (108, 217) verbunden ist bzw. dieser an die Trägerschicht (110, 127) angeformt, insbesondere angespritzt, ist.

13. Bauteil nach einem oder mehreren der vorhergehenden Ansprüche, dadurch gekennzeichnet, daß die Deckschicht (111, 124) und die Trägerschicht (110, 127) aus mehreren Lagen gebildet ist.

14. Bauteil nach einem oder mehreren der vorhergehenden Ansprüche, dadurch gekennzeichnet, daß die einander zugewandten Trägerschichten (110, 127) von zwei im Abstand voneinander angeordneten mehrlagigen Bauteilen über den Tragkörper (108, 217), insbesondere aus Kunststoff oder Keramik oder dgl., miteinander verbunden sind.

15. Bauteil einem oder mehreren der vorhergehenden Ansprüche, dadurch gekennzeichnet, daß eine Decklage (218, 239) durch zumindest zwei Schichten, insbesondere Kunststofffolien, gebildet ist, die über eine Verbindungsschicht (228) bzw. eine Schweißnaht miteinander verbunden sind.

16. Bauteil nach einem oder mehreren der vorhergehenden Ansprüche, dadurch gekennzeichnet, daß die Decklage (218, 239) und/oder der Tragkörper (108, 217) zumindest in Teilbereichen glasklar ausgebildet sind.

17. Bauteil nach einem oder mehreren der vorhergehenden Ansprüche, dadurch gekennzeichnet, daß die Decklage (218, 239) und/oder der Tragkörper (108, 217) zumindest in Teilbereichen durchscheinend ausgebildet ist.

18. Bauteil nach einem oder mehreren der vorhergehenden Ansprüche, dadurch gekennzeichnet, daß zwischen zwei Schichten der Decklage (218, 239) eine Druck- bzw. Designschicht (231) angeordnet ist.

19. Bauteil nach einem oder mehreren der vorhergehenden Ansprüche, dadurch gekennzeichnet, daß auf den einander gegenüberliegenden Flachseiten des Tragkörpers (108, 217) zumindest teilweise Decklagen (218, 239) angeordnet und/oder eingebettet sind.

20. Bauteil nach einem oder mehreren der vorhergehenden Ansprüche, dadurch gekennzeichnet, daß zumindest in einer Lage eine Vergrößerungslinse (221) für ein Anzeigeelement (222) angeordnet bzw. ausgebildet ist.

21. Bauteil nach einem oder mehreren der vorhergehenden Ansprüche, dadurch gekennzeichnet, daß die Decklage (218, 239) durch zumindest zwei Folien gebildet ist, zwischen welchen die Druck- bzw. Designschicht (231) angeordnet ist.

22. Bauteil nach einem oder mehreren der vorhergehenden Ansprüche, dadurch gekennzeichnet, daß die Folien der Decklage (218, 239) über Kleberschichten (236, 237), insbesondere dem Lack der Druck- bzw. Designschicht (231), miteinander verbunden sind.

23. Bauteil nach einem oder mehreren der vorhergehenden Ansprüche, dadurch gekennzeichnet, daß die Folien der Decklage (218, 239) über eine Schweißverbindung, insbesondere eine Hochfrequenzschweißung, miteinander verbunden sind.

24. Bauteil nach einem oder mehreren der vorhergehenden Ansprüche, dadurch gekennzeichnet, daß im Tragkörper (108, 217) Verstärkungs- und/oder Masseelemente (229) vorgesehen sind.

25. Bauteil nach einem oder mehreren der vorhergehenden Ansprüche, dadurch gekennzeichnet, daß der Tragkörper (108, 217) an eine oder mehrere Decklagen (218, 239), welcher aus Kunststoff besteht, durch Pressen. Gießen, Spritzprägen, Spritzgießen oder Extrudieren an einer oder mehrere der Decklagen (218, 239), gegebenenfalls unter Zwischenschaltung einer Kleber- bzw. Haftvermittlungsschicht, angeformt ist.

26. Bauteil nach einem oder mehreren der vorhergehenden Ansprüche, dadurch gekennzeichnet, daß der Tragkörper (108, 217) mit anorganischen oder organischen Leuchtstoffen (246, 247, 248) für die Anregung durch Strahlung (243, 244, 245) mit vorbestimmbarer Wellenlänge versehen ist und daß die Decklage (218, 239) zumindest in Teilbereichen für die Strahlung (243, 244, 245) vorbestimmbarer Wellenlänge undurchlässig oder mit einer für diese Strahlung undurchlässigen Beschichtung versehen ist.

27. Bauteil nach einem oder mehreren der vorhergehenden Ansprüche, dadurch gekennzeichnet, daß die Decklagen (218, 239) mit insbesondere deckungsgleichen Transparenzbereichen (262) versehen sind.

28. Bauteil nach einem oder mehreren der vorhergehenden Ansprüche, dadurch gekennzeichnet, daß die verschiedenen Decklagen (218, 239) bzw. unterschiedliche Teilbereiche einer Decklage (218, 239) für Strahlung mit unterschiedlicher, vorbestimmbarer Wellenlänge undurchlässig oder mit einer für derartige Strahlungen (243, 244, 245) undurchlässigen Beschichtung versehen sind.

29. Bauteil nach einem oder mehreren der vorhergehenden Ansprüche, dadurch gekennzeichnet, daß die Decklage (218, 239) aus mehreren Schichten besteht und die einzelnen Schichten für Strahlung (243, 244, 245) mit unterschiedlicher vorbestimmbarer Wellenlänge undurchlässig sind.

30. Bauteil nach einem oder mehreren der vorhergehenden Ansprüche, dadurch gekennzeichnet, daß die Schichten der Decklage (218, 239) aus zum Kunststoff unterschiedlichen artfremden Materialien, z.B. Textil, Papier, gebildet sind und daß vorzugsweise eine aus Kunststoff artfremdem Material bestehende Lage zwischen zwei Lagen aus Kunststoff, z.B. Kunststoffolien, eingebettet ist.

31. Bauteil nach einem oder mehreren der vorhergehenden Ansprüche, dadurch gekennzeichnet, daß die beiden die Lage aus zu Kunststoff artfremden Materialien zwischen sich aufnehmenden Kunststoffolien über eine Schweißnaht oder eine Verbindungsschicht, z.B. eine Kleberschicht (236, 237), miteinander verbunden sind.

32. Bauteil nach einem oder mehreren der vorhergehenden Ansprüche, dadurch gekennzeichnet, daß Lagen (40, 41, 42) des Tragkörpers (108, 217) mit unterschiedlichen Mengen von anorganischen und/oder organischen Leuchtstoffen (246, 247, 248) und/ oder Zuschlagstoffen für die Anregung durch Strahlung (243, 244, 245) mit jeweils unterschiedlicher Wellenlänge ausgebildet sind.

33. Bauteil nach einem oder mehreren der vorhergehenden Ansprüche, dadurch gekennzeichnet, daß ein Grundkörper (307) einen Bauteil (306) bildet, welcher eine durch ein Uhrwerk (316) gebildete Antriebsvorrichtung für eine durch ein Zeigerwerk (309) gebildete Anzeigevorrichtung lagert, die durch einen Schutzdeckel (308) abgedeckt ist und dem auf der vom Schutzdeckel (308) abgewendeten Seite des Bauteils (306) ein Gehäusedeckel (329) zugeordnet ist.

34. Bauteil nach einem oder mehreren der vorhergehenden Ansprüche, dadurch gekennzeichnet, daß der Grundkörper (307) des Bauteils (306) mit Kupplungsvorrichtungen (305) zum Anschluß von Bandteilen, wie z.B. Schnallen- bzw. Lochteile (303, 304) eines Uhrarmbandes (302) ausgebildet ist.

35. Bauteil nach einem oder mehreren der vorhergehenden Ansprüche, dadurch gekennzeichnet, daß die Folien der Decklage (322) über Kleberschichten (367, 368), insbesondere dem Lack der Druck- bzw. Designschicht (355), miteinander verbunden sind.

36. Bauteil nach einem oder mehreren der vorhergehenden Ansprüche, dadurch gekennzeichnet, daß eine vom Grundkörper (307) am weitesten entfernte Deckfolie (354) der Decklage (322) transparent ist und eine hohe Kratzfestigkeit und/oder Abriebfestigkeit aufweist.

37. Bauteil nach einem oder mehreren der vorhergehenden Ansprüche, dadurch gekennzeichnet, daß die dem Grundkörper (307) näherliegenden Folien einen höheren Elastizitätsmodul, aufweisen als die vom Grundkörper (307) weiter entfernten Folien.

38. Bauteil nach einem oder mehreren der vorhergehenden Ansprüche, dadurch gekennzeichnet, daß der Grundkörper (307) zwischen zwei durch Folien gebildete Decklagen (322) angeordnet ist.

39. Bauteil nach einem oder mehreren der vorhergehenden Ansprüche, dadurch gekennzeichnet, daß die Decklage (322) sackartig ausgebildet und der Grundkörper (307) innerhalb der Decklage (322) angeordnet ist.

40. Bauteil nach einem oder mehreren der vorhergehenden Ansprüche, dadurch gekennzeichnet, daß der Grundkörper (307) durch einen Kunststoffschaum gebildet ist.

41. Bauteil nach einem oder mehreren der vorhergehenden Ansprüche, dadurch gekennzeichnet, daß der Grundkörper (307) durch einen spritzfähigen Kunststoff gebildet ist.

42. Bauteil nach einem oder mehreren der vorhergehenden Ansprüche, dadurch gekennzeichnet, daß im Grundkörper (307) Verstärkungselemente (349) vorgesehen sind.

43. Bauteil nach einem oder mehreren der vorhergehenden Ansprüche, dadurch gekennzeichnet, daß die Deckfolie (354) der einander gegenüberliegenden Decklagen (322) des Grundkörpers (307) aus unterschiedlichen Materialien, insbesondere mit unterschiedlichen Oberflächeneigenschaften, gebildet ist.

44. Bauteil nach einem oder mehreren der vorhergehenden Ansprüche, dadurch gekennzeichnet, daß Stirnkanten (324) der Decklage (322) zumindest über einen Teil ihrer Länge in den Grundkörper (307) eingebettet sind.

45. Bauteil nach einem oder mehreren der vorhergehenden Ansprüche dadurch gekennzeichnet, daß der Grundkörper (307) kreisringförmig ausgebildet ist und im Inneren des kreisringförmigen Grundkörpers (307) radial verlaufende Verstrebungen (331) angeordnet sind.

46. Bauteil nach einem oder mehreren der vorhergehenden Ansprüche, dadurch gekennzeichnet, daß eine Aufnahmeöffnung (340) im kreisringförmigen Grundkörper (307) durch eine Zwischenplatte (339) verschlossen ist.

47. Bauteil nach einem oder mehreren der vorhergehenden Ansprüche, dadurch gekennzeichnet, daß der Grundkörper (307) scheibenförmig ausgebildet ist und einen umlaufenden, verstärkten Wulst aufweist.

48. Bauteil nach einem oder mehreren der vorhergehenden Ansprüche, dadurch gekennzeichnet, daß im verdickten Randwulst oder im umlaufenden, kreisringförmigen Grundkörper (307) eine umlaufende Ausnehmung (321) zur Aufnahme wenigstens eines teilweise transparenten Schutzdeckels (308) angeordnet ist.

49. Bauteil nach einem oder mehreren der vorhergehenden Ansprüche, dadurch gekennzeichnet, daß eine Zwischenschicht (378) im Grundkörper (307) eingebettet ist.

50. Bauteil nach einem oder mehreren der vorhergehenden Ansprüche, dadurch gekennzeichnet, daß die Decklage (322) und/oder eine parallel oder senkrecht zur Decklage (322) ausgerichtete Zwischenschicht (378) und/ oder eine Speicher- und/ oder Programmierschicht (386) als Speichervorrichtung (379) ausgebildet ist.

51. Bauteil nach einem oder mehreren der vorhergehenden Ansprüche, dadurch gekennzeichnet, daß die Decklage (322) und/oder Zwischenschicht (378) und/oder Speicher- und/oder Programmierschicht (386) einen Informationsträger (395) aufweist, welchem zumindest auf einer seiner Oberflächen eine in ihrer Durchlässigkeit durch Strahlungen bestimmter Wellenlängen veränderbare Speicher- und/oder Programmierschicht (386) vorgeordnet ist.

52. Bauteil nach einem oder mehreren der vorhergehenden Ansprüche, dadurch gekennzeichnet, daß die Speicher- und/oder Programmierschicht (386) bei Einstrahlung einer Strahlung einer vorbestimmter Wellenlänge opak und bei Einstrahlung einer Strahlung mit davon unterschiedlicher Wellenlänge transparent ist.

53. Bauteil nach einem oder mehreren der vorhergehenden Ansprüche, dadurch gekennzeichnet, daß die Speicher- und/oder Programmierschicht (386) der Speichervorrichtung (379) transparent ist.

54. Bauteil nach einem oder mehreren der vorhergehenden Ansprüche, dadurch gekennzeichnet, daß die Speicher- und/oder Programmierschicht (386) der Speichervorrichtung (379) reflektierend ist.

55. Bauteil nach einem oder mehreren der vorhergehenden Ansprüche, dadurch gekennzeichnet, daß auf der der transparenten Speicher- und/oder Programmierschicht (386) abgewendeten Seite eine Reflexionsschicht (401) nachgeordnet ist.

56. Bauteil nach einem oder mehreren der vorhergehenden Ansprüche, dadurch gekennzeichnet, daß der Speicher- und/oder Programmierschicht (386) eine elektronische Auswerteeinheit (411) im Grundkörper (307) bzw. im Bauteil (306) zugeordnet ist.

57. Bauteil nach einem oder mehreren der vorhergehenden Ansprüche, dadurch gekennzeichnet, daß der Auswerteeinheit (411) und/oder der Rechnereinheit (382, 420) eine Energiequelle (418) zugeordnet ist.

58. Bauteil nach einem oder mehreren der vorhergehenden Ansprüche, dadurch gekennzeichnet, daß die Auswerteeinheit (411) und/oder die Rechnereinheit (420) mit einer im Oberflächenbereich der Decklage (322) bzw. des Grundkörpers (337) angeordneten Übertragungsvorrichtung (412), insbesondere einer Steckeranordnung (419), verbunden ist.

59. Bauteil nach einem oder mehreren der vorhergehenden Ansprüche, dadurch gekennzeichnet, daß im Grundkörper (307) Steuerelemente, insbesondere zur Programmierung der Auswerte- bzw. Rechnereinheit (411, 420) angeordnet sind.

60. Bauteil nach einem oder mehreren der vorhergehenden Ansprüche, dadurch gekennzeichnet, daß der Bauteil (208) für eine Uhr vorgesehen ist und aus Kunststoff mit einem Tragkörper aus warm verformbarem Kunststoff mit einem Halteansatz zur Verbindung mit einem Gehäuse besteht.

61. Bauteil nach einem oder mehreren der vorhergehenden Ansprüche, dadurch gekennzeichnet, daß der Bauteil (306) aus Kunststoff besteht und einen Grundkörper (307) mit Aufnahmen für eine Anzeigevorrichtung und eine Antriebsvorrichtung und/oder Energiequelle (418) und gegebenenfalls einen Schutzdeckel (308) umfaßt.
